# EUROPEAN PATENT APPLICATION

(11) **EP 4 811 004 A1**
(43) Date of publication of application: **23.09.2026**
(21) Application number: 24821238.3
(22) Date of filing: 19.04.2024
(51) Int. Cl.: G01T 1/20

(54) **PULSE DIGITIZATION METHOD AND APPARATUS, CORRECTION METHOD AND APPARATUS, AND ELECTRONIC DEVICE AND STORAGE MEDIUM**

(30) Priority: 16.11.2023 CN 202311526806
(71) Applicant: Raycan Technology Co., Ltd. (Su Zhou), Suzhou, Jiangsu 215163 (CN)
(72) Inventor: XIE, Qingguo, Suzhou Jiangsu 215163 (CN); LV, Xudong, Suzhou Jiangsu 215163 (CN); HUA, Yuexuan, Suzhou Jiangsu 215163 (CN); XIAO, Peng, Suzhou Jiangsu 215163 (CN); LI, Shuo, Suzhou Jiangsu 215163 (CN); GONG, Zhengguang, Suzhou Jiangsu 215163 (CN); LING, Yiqing, Suzhou Jiangsu 215163 (CN); QIU, Ao, Suzhou Jiangsu 215163 (CN)
(74) Representative: Müller Verweyen
(86) International application number: PCT/CN2024/088851
(87) International publication number: WO 2025/102604

(57) **Abstract**

In the disclosure provided are a pulse digitization method, a calibration method and devices, an electronic device, and a storage medium. The pulse digitization method comprises: providing amplitude to energy mapping data of a plurality of reference pulses; setting a plurality of energy channel addresses or amplitude channel addresses having characteristic values; determining channel addresses corresponding to a plurality of measured pulses based on comparison results between the amplitude values of the plurality of measured pulses and the amplitude characteristic values of the plurality of channel addresses; and determining energy information of the plurality of measured pulses based on counts of the measured pulses within each channel address and the amplitude-energy mapping data or the energy characteristic values of the energy channel addresses. In the disclosure, the complex fitting calculations required in traditional petroleum exploration processes are avoided and it may directly obtain the energy information of the pulses quickly through a threshold comparison approach, which greatly shortens the dead time of the acquisition circuit, improves signal acquisition performance and efficiency, and is especially suitable for ultra-high temperature environments.

## Description

The application claims the priority of Chinese Patent Application No. 202311526806.X, filed on November 16, 2023, the entire content of which is incorporated herein by reference.

### Technical Field

The disclosure relates to the field of signal sampling, and in particular to pulse digitization method, calibration method and devices, an electronic apparatus, and a storage medium.

### Background

In many applications of high-energy radiation detection, high-energy rays, such as gamma rays, are converted into visible light by scintillation crystals, which visible light is further converted into scintillation pulse signals by photodetector devices.

Well logging technology is an important technique in the field of petroleum exploration. It integrates electronic and computer technologies to acquire various physical parameters of strata through electrical, acoustic, radiological, and other methods, and further extract oil and gas information through data analysis. Common well logging techniques include electrical logging, acoustic logging, nuclear logging, and nuclear magnetic logging. Nuclear logging is based on the atomic nuclear properties of materials and is used to study geological profiles of rocks, their pore fluids, and the nuclear physical properties of the wellbore medium to locate coal, oil, and other minerals. Nuclear logging employs high-energy radiation detection and uses techniques such as natural gamma, density, neutron, and formation element logging, along with associated instruments and devices.

Pulse neutron logging is a type of nuclear logging. Its principle is to detect the energy deposition of pulse neutrons in the strata, which releases gamma rays, thereby obtaining corresponding energy spectrum and time spectrum information. The primary method for high-energy radiation detection is to use scintillators coupled with a photodetector device, obtaining high-energy radiation information by converting the energy deposited in scintillators into visible light and then into electrical signals through photoelectric conversion device. Typically, photomultiplier tubes (PMTs), which can operate at high temperatures, are used to convert the visible light produced by scintillation crystals into corresponding scintillation pulses. After digitalization and subsequent signal processing, energy information (such as energy spectrum) and time information (such as time spectrum) of gamma rays may be obtained.

Traditional methods of scintillation pulse digitization include two types. One is direct digitization using high-speed ADC, which requires first shaping and widening the electrical pulse signal, then using high-speed ADC (such as 1GSps) for digital sampling. Typically, to obtain accurate energy information, engineering practice requires collecting multiple (e.g., 20) sampling points to digitize one pulse while working at high temperatures (e.g., 175°C). However, at such high temperatures, the sampling rate of ADC chips is typically low, and the cost is high, making it difficult to achieve high-speed digitization of scintillation pulses. As a result, the high-speed ADC direct digitization method faces limitations in petroleum logging applications. The other method is peak holding, which uses peak hold circuits to lock the amplitude of electrical pulse signals, then uses ADC to collect the amplitude to obtain pulse energy information. The peak holding method has a long dead time due to peak hold locking establishment and peak hold circuit recovery processes, typically reaching several hundred microseconds, which greatly limits the pulse throughput rate (number of pulses processed per unit time) of digitization. In petroleum well logging, the number of pulse events often increases explosively. For example, in common neutron petroleum logging, pulse counts may reach 100KCPS, producing one pulse every 10µs on average. The dead time of the peak holding method causes many pulse signals to be lost during digitization, leading to measurement result deviations.

In recent years, direct digitization of scintillation pulses and using software algorithms to replace traditional analog circuits for information extraction has shown great potential. Multi-Voltage Threshold (MVT) sampling method has been proposed as an improved digital processing method for scintillation pulses. Currently, there are also proposals to introduce MVT digitization methods into the petroleum exploration field.

Compared with traditional methods such as ADC-based time interval sampling, the MVT digitization sampling uses multiple fixed threshold voltages and digitally samples the time when scintillation pulses cross these threshold voltages, which is beneficial for obtaining multiple sampling points during the rapid rising edge phase. In practical implementation, after obtaining a series of time-voltage pair information, pulse fitting methods are then used to achieve accurate acquisition of particle energy deposition information. For example, the Levenberg-Marquardt method is commonly used as a pulse fitting optimization algorithm, which is a widely used nonlinear least squares iterative algorithm that utilizes gradients to find maximum (minimum) values and is a non-linear optimization method that lies between Newton's method and the gradient descent method, while possessing the advantages of both the gradient method and Newton's method.

However, due to limitations in chip processing power and the complexity of the fitting algorithm, the MVT fitting algorithm may not be performed in embedded chips such as FPGA, STM32, or DSP, which limits the practical implementation of the MVT fitting algorithm on-site, such as in exploration wells. Therefore, the raw sampling points obtained by the MVT method need to be transmitted to a more powerful computing device (referred to as the host computer) located away from the site through remote communication methods such as Ethernet, serial communication, or Wi-Fi, which device is responsible for calculating the energy using iterative algorithms. During petroleum logging, the generation of scintillation pulses exhibit periodic bursts, leading to a large volume of raw data, which may reach 10 Mbps to 1 Gbps. Furthermore, due to the specific conditions of petroleum exploration, such as well depths reaching over 10,000 meters and high environmental temperatures, communication methods are limited. For example, carrier-wave communication is often used, with a bandwidth of about 100 Kbps. The current method faces the contradiction of large raw data volumes and limited transmission bandwidth, leading to a decrease in counting rates. Furthermore, when performing fitting on the host computer, due to repeated iterations, fitting each pulse requires excessive CPU time, which is intolerable in petroleum detection applications.

Additionally, the current MVT method for obtaining energy information from scintillation pulses may have several drawbacks. For example, traditional MVT methods are suitable for acquiring pulses of known types, with the threshold settings based on the energy range of the known pulses. As a result, the MVT method requires a fixed number and values of thresholds for sampling. Thus, traditional MVT methods usually may only provide accurate energy information for pulses within a specific energy range.

Since MVT requires fitting to calculate accurate energy values, precise time information is needed for each data point. Therefore, a large number of Time-to-Digital Converters (TDCs) are typically used in the acquisition circuit to collect time information.

Furthermore, performing pulse fitting on hardware circuits such as FPGA or ASIC requires firstly reconstructing the pulse waveform, then integrating the fitted function to calculate the energy information, and finally plotting the energy spectrum. However, the complexity of the calculations consumes significant hardware resources and increases power consumption. For application scenarios requiring adaptation to high-temperature environments, such as well logging equipment, the excessive power consumption resulting from complex pulse fitting and integration processes may further affect the temperature tolerance of the hardware.

Therefore, a solution is desired that can achieve at least one of the following technical effects: quickly, accurately, and stably obtain energy information of pulse signals, suitable for implementation in hardware circuits such as FPGA or DSP, without consuming a large amount of computational resources or relying on powerful computing devices.

The background description is provided merely to aid in understanding of the background of the present disclosure, and does not constitute an admission of prior art.

### Summary

The technical problem to be solved by the embodiments of the disclosure is to provide a digitization solution for pulse signals, especially scintillation pulse signals, suitable for implementation in hardware circuits such as FPGAs and DSPs, which solution avoids the complex fitting calculations required by traditional methods to obtain energy information of pulses, especially scintillation pulses, and directly obtains energy information of pulses, especially scintillation pulses, by means of simple threshold comparison.

To solve the above problems, the disclosure discloses a pulse signal digitization method, device, equipment, electronic apparatus, and storage medium.

In addition, the disclosure also discloses a calibration method and device suitable for the pulse digitization.

In a first aspect, a pulse digitization method is provided, comprising:
providing amplitude to energy mapping data of a plurality of reference pulses;
setting a plurality of channel addresses which are energy channel addresses or amplitude channel addresses, each energy channel address having a respective energy characteristic value and a respective amplitude characteristic value determined according to the amplitude to energy mapping data, and each amplitude channel address having a respective amplitude characteristic value;
determining channel addresses corresponding to a plurality of measured pulses based on comparison results between the amplitude values of the plurality of measured pulses and the amplitude characteristic values of the plurality of channel addresses; and
determining energy information of the plurality of measured pulses based on counts of the measured pulses falling within each channel address and the amplitude to energy mapping data or energy characteristic values of the energy channel addresses.

In a second aspect, a calibration method for pulse digitization is provided, comprising:
acquiring amplitude to energy mapping data of a plurality of reference pulses;
acquiring a plurality of energy channel addresses to be calibrated, each energy channel address to be calibrated having a respective energy characteristic value and a respective amplitude characteristic value determined according to the amplitude to energy mapping data;
determining energy channel addresses to be calibrated corresponding to a plurality of first calibration pulses based on comparisons between amplitude values of the plurality of first calibration pulses and the amplitude characteristic values of the plurality of energy channel addresses to be calibrated;
generating an energy spectrum of the first calibration pulses based on counts of the first calibration pulses within each energy channel address to be calibrated and the energy characteristic values of the energy channel addresses to be calibrated, the energy spectrum of the first calibration pulses having a first characteristic peak value;
setting a plurality of first calibration energy channel addresses, the plurality of first calibration energy channel addresses being sized smaller than the plurality of energy channel addresses to be calibrated, each first calibration energy channel address having a respective energy characteristic value and a respective amplitude characteristic value determined according to the amplitude to energy mapping data;
determining calibration energy channel addresses corresponding to a plurality of second calibration pulses based on comparison results between amplitude values of the plurality of second calibration pulses and the amplitude characteristic values of the plurality of first calibration energy channel addresses;
generating an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and
calibrating the energy characteristic values or the amplitude characteristic values of the plurality of energy channel addresses to be calibrated based on a first difference between the first characteristic peak value and the first calibration characteristic peak value.

In a third aspect, a pulse digitization device is provided, comprising:
a mapping database comprising amplitude to energy mapping data of a plurality of reference pulses;
a channel address setting unit configured to set a plurality of channel addresses which are energy channel addresses or amplitude channel addresses, each energy channel address having a respective energy characteristic value and a respective amplitude characteristic value determined according to the amplitude to energy mapping data, and each amplitude channel address having a respective amplitude characteristic value;
a channel address determination unit configured to determine channel addresses corresponding to a plurality of measured pulses based on comparison results between amplitude values of the plurality of measured pulses and the amplitude characteristic values of the plurality of channel addresses; and
an energy information acquisition unit configured to determine energy information of the plurality of measured pulses based on counts of the measured pulses falling within each channel address and the amplitude to energy mapping data or energy characteristic values of the energy channel addresses.

In a fourth aspect, a calibration device for pulse digitization is provided, comprising:
a first acquisition unit configured to acquire amplitude to energy mapping data of a plurality of reference pulses;
a second acquisition unit configured to acquire a plurality of energy channel addresses to be calibrated, each energy channel address to be calibrated having a respective energy characteristic value and a respective amplitude characteristic value determined according to the amplitude to energy mapping data;
a first channel address determination unit configured to determine energy channel addresses to be calibrated corresponding to a plurality of first calibration pulses based on comparisons between amplitude values of the plurality of first calibration pulses and the amplitude characteristic values of the plurality of energy channel addresses to be calibrated;
a first energy spectrum generation unit configured to generate an energy spectrum of the first calibration pulses based on counts of the first calibration pulses within each energy channel address to be calibrated and the energy characteristic values of the energy channel addresses to be calibrated, the energy spectrum of the first calibration pulses having a first characteristic peak value;
a first calibration channel address setting unit configured to set a plurality of first calibration energy channel addresses, the plurality of first calibration energy channel addresses being sized smaller than the plurality of energy channel addresses, each first calibration energy channel address having a respective energy characteristic value and a respective amplitude characteristic value determined according to the amplitude to energy mapping data;
a second channel address determination unit configured to determine calibration energy channel addresses corresponding to a plurality of second calibration pulses based on comparisons between amplitude values of the plurality of second calibration pulses and the amplitude characteristic values of the plurality of first calibration energy channel addresses;
a second energy spectrum generation unit configured to generate an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and
a calibration unit configured to calibrate the energy characteristic values or the amplitude characteristic values of the plurality of energy channel addresses to be calibrated based on a first difference between the first characteristic peak value and the first calibration characteristic peak value.

In a fifth aspect, a pulse digitization apparatus is provided, comprising: the pulse digitization device according to any of the embodiments of the disclosure.

In a sixth aspect, an electronic apparatus is provided, comprising: a memory, a processor, and an executable program stored in the memory and executable by the processor, wherein the executable program, when executed by the processor, implements the steps of the method according to any of the embodiments of the disclosure.

In a seventh aspect, a storage medium is provided, wherein the storage medium stores an executable program, wherein the executable program, when executed by a processor, implements the steps of the method according to any of the embodiments of the disclosure.

In other aspects of the disclosure, methods of and devices for determining material composition based on scintillation pulses are also provided.

The optional features and additional effects of the embodiments are described in part below, while others can be understood by reading the specification.

### Brief Description of Drawings

To more clearly illustrate the technical solutions in the embodiments of the disclosure or in the prior art, a brief introduction will be given below to the drawings referred to in the description of the embodiments or the prior art. Apparently, the drawings described below are only provided with respect to some embodiments of the disclosure, and it is conceivable for those skilled in the art that other drawings can be obtained from these drawings without creative effort, wherein:
FIG.1 shows an exemplary flowchart of a pulse digitization method according to an embodiment of the disclosure;
FIG.2 shows an exemplary flowchart of a pulse digitization method according to an embodiment of the disclosure;
FIG.3 shows an exemplary flowchart of a pulse digitization method according to an embodiment of the disclosure;
FIG.4 shows a first module architecture diagram for implementing the pulse digitization method according to an embodiment of the disclosure;
FIG.5 shows an exemplary flowchart of a pulse digitization method according to an embodiment of the disclosure;
FIG.6 shows a second module architecture diagram for implementing the pulse digitization method according to an embodiment of the disclosure;
FIG.7 shows an exemplary flowchart of a pulse digitization method according to an embodiment of the disclosure;
FIG.8 shows a third module architecture diagram for implementing the pulse digitization method according to an embodiment of the disclosure;
FIG.9 shows a schematic diagram of determining an energy channel address corresponding to a pulse amplitude by means of multi-stage comparison using a bisection approach in the pulse digitization method according to an embodiment of the disclosure;
FIG.10 shows a fourth module architecture diagram for implementing the pulse digitization method according to an embodiment of the disclosure;
FIG.11 shows a schematic diagram of a pulse by means of a multi-stage comparison using a quadrisection approach to determine an amplitude in the pulse digitization method according to an embodiment of the disclosure, specifically showing the first-stage comparison;
FIG.12 shows a fifth module architecture diagram for implementing the pulse digitization method according to an embodiment of the disclosure;
FIG.13 shows a sixth module architecture diagram for implementing the pulse digitization method according to an embodiment of the disclosure;
FIG.14 shows a seventh module architecture diagram for implementing the pulse digitization method according to an embodiment of the disclosure;
FIG.15 shows an eighth module architecture diagram for implementing the pulse digitization method according to an embodiment of the disclosure;
FIG.16 shows a ninth module architecture diagram for implementing the pulse digitization method according to an embodiment of the disclosure;
FIG.17 shows a tenth module architecture diagram for implementing the pulse digitization method according to an embodiment of the disclosure;
FIG.18 shows an exemplary flowchart of a pulse digitization method according to an embodiment of the disclosure;
FIG.19 shows an exemplary flowchart of a pulse digitization method according to an embodiment of the disclosure;
FIG.20 shows an eleventh module architecture diagram for implementing the pulse digitization method according to an embodiment of the disclosure;
FIG.21 shows an exemplary flowchart of a pulse digitization method according to an embodiment of the disclosure;
FIG.22 shows an exemplary flowchart of a pulse digitization method according to an embodiment of the disclosure;
FIG.23 shows a twelfth module architecture diagram for implementing the pulse digitization method according to an embodiment of the disclosure;
FIG.24 shows an exemplary flowchart of a pulse digitization method according to an embodiment of the disclosure;
FIG.25 shows an exemplary flowchart of a pulse digitization method according to an embodiment of the disclosure;
FIG.26 shows a thirteenth module architecture diagram for implementing the pulse digitization method according to an embodiment of the disclosure;
FIG.27 shows a schematic diagram of the time over threshold (TOT) of the measured pulse and a transition signal used to determine the TOT;
FIG.28 shows a fourteenth module architecture diagram for implementing the pulse digitization method according to an embodiment of the disclosure;
FIG.29 shows an exemplary flowchart of a pulse digitization method according to an embodiment of the disclosure;
FIG.30 shows an exemplary flowchart of a pulse digitization method according to an embodiment of the disclosure;
FIG.31 shows an exemplary flowchart of a pulse digitization method according to an embodiment of the disclosure;
FIG.32 shows an exemplary flowchart of a calibration method for pulse digitization according to an embodiment of the disclosure;
FIG.33 shows an exemplary flowchart of a method of determining material composition based on scintillation pulses according to an embodiment of the disclosure;
FIG.34 shows an exemplary flowchart of a method of determining material composition based on scintillation pulses according to an embodiment of the disclosure;
FIG.35 shows a schematic module diagram of a pulse digitization device according to an embodiment of the disclosure;

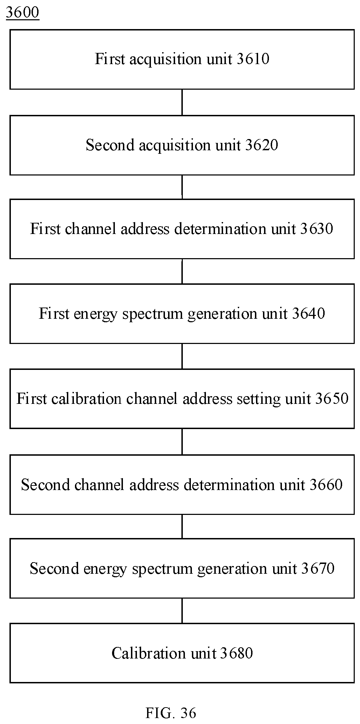

FIG.36 shows a schematic module diagram of a calibration device for pulse digitization according to an embodiment of the disclosure;
FIG.37 shows a schematic module diagram of a device for determining material composition based on scintillation pulses according to an embodiment of the disclosure; and
FIG.38 shows a schematic module diagram of a device for determining material composition based on scintillation pulses according to an embodiment of the disclosure.

### Detailed Description

To clarify the purpose, feature, and advantages of the disclosure, detailed descriptions are provided below in conjunction with specific embodiments and accompanying drawings. Specific details are described below to facilitate in-depth understanding of the disclosure. It should be noted that the disclosure may be implemented in various manners other than those described herein, such that those skilled in the art are able to make improvements without departing from the essence of the invention. Therefore, the disclosure is not limited by the specific embodiments disclosed below.

It should be noted that when an element is referred to as being "fixed to" a further element, it can be directly fixed to the further element or there may also be an intermediate element. When an element is considered to be "connected" to a further element, it can be directly connected to the further element or there may also be an intermediate element. The terms "vertical", "horizontal", "left", "right" and similar expressions used in the document are for illustrative purposes only. The described features, structures, or characteristics may be combined in any suitable way in one or more embodiments. In the following description, numerous specific details are provided to give a thorough understanding of embodiments of the disclosure. However, those skilled in the art will recognize that the technical solutions of the disclosure may be practiced without one or more of these specific details, or with other methods, components, materials, devices, or operations, etc. In such cases, well-known structures, methods, devices, implementations, materials, or operations will not be shown or described in detail.

The flowcharts shown in the drawings are only exemplary illustrations and do not necessarily include all content and operations/steps, nor do they need to be executed in the described order. For example, some operations/steps may be further split down, while some operations/steps may be combined or partially combined, such that the actual execution order may change according to actual circumstances.

The terms "first", "second", etc. in the specification and claims of the disclosure and the drawings are used to distinguish different objects rather than to describe a specific order. Furthermore, the terms "comprise" and "have" and any of their variations are intended to cover non-exclusive inclusion. For example, a process, method, system, product, or device that comprises a series of steps or units is not limited to the listed steps or units but may optionally comprise unlisted steps or units, or may optionally comprise other steps or units inherent to such a process, method, product, or device. The term "and/or" or "and/or" comprise any and all combinations of one or more of the listed items.

Unless otherwise defined, all technical and scientific terms used herein have the meanings as commonly understood by those skilled in the technical field to which the disclosure belongs. The terms used in the specification of the disclosure are only for the purpose of describing specific embodiments and are not intended to limit the disclosure.

The following describes some preferred embodiments of the disclosure with reference to the accompanying drawings. It should be noted that the following description is for illustrative purposes and is not intended to limit the scope of protection of the disclosure.

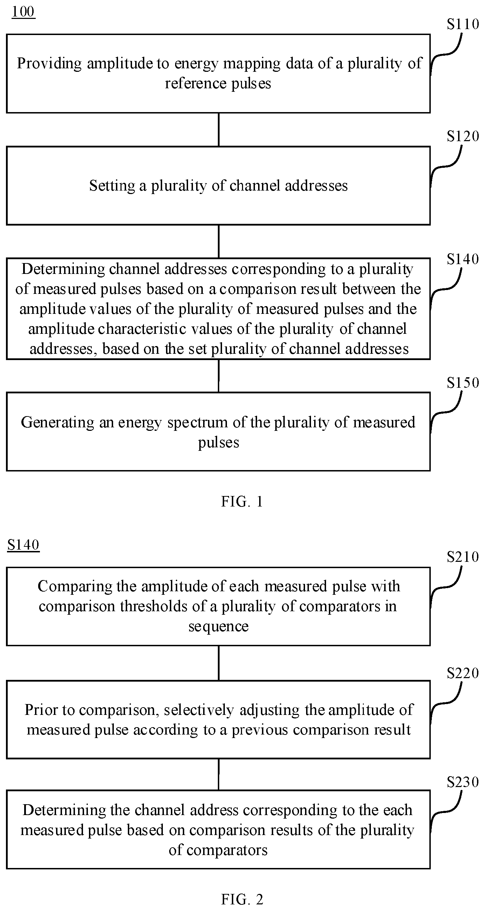

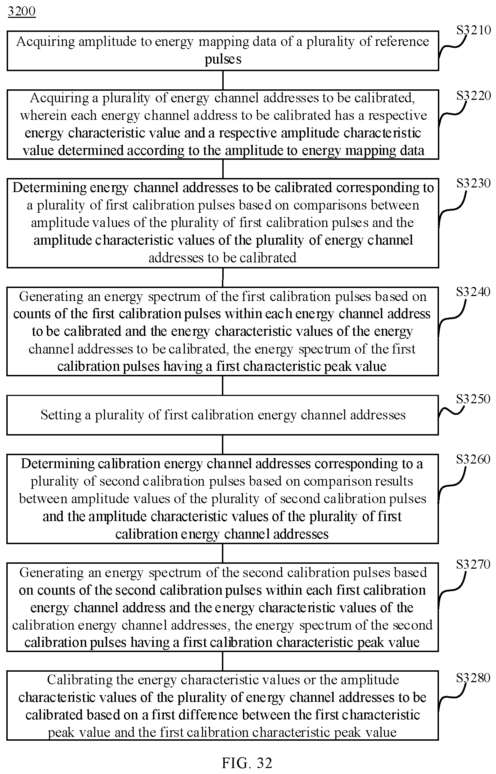

FIG.1 is an exemplary flowchart of a pulse digitization method according to some embodiments of the disclosure. In some embodiments, the pulse digitization method 100 may be executed by a pulse digitization device, e.g., by the pulse digitization device 3200 shown in FIG.32. In some embodiments, the pulse digitization method 100 may be implemented by software, hardware, firmware, or a combination thereof. In some preferred embodiments, the pulse digitization method 100 may be implemented by a hardware circuit, such as in hardware circuits based on FPGAs, DSPs, etc. In a preferred embodiment, the pulse digitization method 100 may be implemented by a device comprising an FPGA chip.

In the document, a pulse signal may be interpreted as any pulse signal that may be sampled. Its essence is a physical quantity that suddenly changes within a short time and then quickly returns to its initial value, and the physical quantity has some characteristics.

In the embodiments of the disclosure, pulse digitization may involve converting a pulse signal, for example, in analog or physical form, into numerical parameters characterizing the pulse signal, for subsequent reconstruction of the pulse signal image or other purposes related to processing, conversion, and transmission of the pulse signal. In a specific embodiment, pulse digitization may involve acquiring physical parameter information represented by the pulse signal, and more specifically, it involves acquiring energy information represented by the pulse signal. In some embodiments, accordingly, the pulse digitization method may specifically involve a pulse energy information determination method.

In the embodiments of the disclosure, pulse digitization may be used in many applications of high-energy radiation detection. As mentioned before, as explanation rather than limitation, high-energy rays, such as gamma rays, may be converted into visible light by a scintillator, which is further converted into scintillation pulse signals by a photoelectric conversion device. In the embodiments of the disclosure, the pulse signal may particularly comprise scintillation pulses. In the embodiments of the disclosure, accordingly, the pulse digitization method may be a scintillation pulse digitization method. Similarly, the pulse digitization device or apparatus in the embodiments of the disclosure may be a scintillation pulse digitization device or apparatus.

Various embodiments will be described herein, taking the scintillation pulse as an example, and in these embodiments, pulse and scintillation pulse may be used interchangeably. For example, in some embodiments, the scintillation pulse typically has a rising edge and a falling edge, and the rising edge and the falling edge may be represented by function models. For example, the scintillation pulses corresponding to gamma photons typically exhibit a relatively rapid rising edge and a relatively slow falling edge, such that the rising edge may be represented by a linear function, and the falling edge may be represented by an exponential function.

In some embodiments, the scintillation pulses may be acquired by a detector, such as a PET detector, a CT detector, a neutron detector, or a petroleum detector, which detectors typically comprise scintillators and a photoelectric conversion device coupled to each other, wherein the scintillators are used to convert the detected high-energy rays (such as gamma rays, neutron rays, etc.) into visible light signals, and the photoelectric conversion device (for example, a photomultiplier tube PMT, a silicon photomultiplier SiPM, etc.) is used to convert the visible light signals into electrical signals. The electrical signals are output in the form of a scintillation pulse signal through an electronic device connected to the photoelectric conversion device.

Accordingly, the pulse digitization method, device, and/or apparatus according to the embodiments of the disclosure may be used in many applications of high-energy radiation detection based on energy information of the scintillation pulse signals. For example, the pulse digitization method, device, and/or apparatus according to the embodiments of the disclosure may be used in well logging using high-energy radiation detection, such as nuclear logging, and more specifically pulsed neutron logging. The pulse digitization method, device, and/or equipment according to the embodiments of the disclosure herein may be used to obtain energy information, such as energy spectrum, of gamma rays released by pulsed neutron logging. In addition, the pulse digitization method, device, and/or apparatus according to the embodiments of the disclosure may also be used in many fields using high-energy radiation detection, including but not limited to medical imaging technology, high-energy physics, LiDAR, autonomous driving, precision analysis, optical communication, and the like fields. In a specific example, the pulse digitization method, device, and/or apparatus according to the embodiments of the disclosure may be used in one or a combination of apparatuses utilizing high-energy radiation conversion principles, such as a positron emission tomography (PET) apparatus, a CT apparatus, a MRI apparatus, a radiation detection apparatus, an oil detection apparatus, a weak light detection apparatus, an SPECT apparatus, a security inspection apparatus, a gamma camera, an X-ray apparatus, and a DR apparatus.

In other embodiments, the pulse signal may be a non-scintillation pulse, and the waveform of the pulse signal may appear as a triangular wave, a rectangular wave, a sine wave, a cosine wave, or other shaped waves, which will not be elaborated here.

In the embodiments of the disclosure, the pulse signal may be in a form of an electrical pulse signal, an acoustic pulse signal, a thermal pulse signal, or a pressure wave signal, etc. For example, when the pulse signal is an electrical pulse signal, its corresponding characteristics may be the voltage and current of the electrical pulse signal; when the pulse signal is an acoustic pulse signal, its corresponding characteristic may be the sound intensity of the acoustic pulse signal, and so on, which will not be elaborated here. Correspondingly, the threshold may have various forms. For example, when the pulse signal is an electrical pulse signal, the corresponding threshold may be a voltage threshold, a current threshold, or an energy threshold; when the pulse signal is an acoustic pulse signal, the corresponding threshold may be a sound intensity threshold, and so on, which will not be repeated here.

Those skilled in the art should understand that the pulse digitization in the disclosure may also be applied to the digitization of continuous signals. It only needs to regard the continuous signal as pulse signals arranged at a certain period. The pulse signal in the disclosure is not a limitation on the signal to be sampled.

Continuing to refer to FIG.1, the pulse digitization method 100 according to an embodiment of the disclosure is described. In the embodiments of the disclosure, based on the correspondence between the energy and (maximum) amplitude of a pulse, such as a scintillation pulse, several amplitude channel addresses may be set for the amplitude of the pulse, such as of the scintillation pulses, or several energy channel addresses may be set for the energy of the pulses, such as of the scintillation pulses. The number of pulses falling within different channel addresses corresponding to amplitude or energy is counted to obtain energy information of the pulses, such as of the scintillation pulses. In a specific embodiment, for example, an energy distribution histogram may be drawn according to the pulse countsto obtain an energy spectrum (referred to as energy spectrum). For instance, in specific examples such as in pulsed neutron saturation logging, for the energy characteristics of the scintillation pulse corresponding to gamma rays (e.g., generally within 9 MeV), the energy of the pulse may be quantified into N (e.g., 256) different levels to obtain N (e.g., 256) different energy channel addresses. The number of pulses at different energy levels corresponding to different energy channel addresses is counted, and an energy distribution histogram is drawn to obtain the energy spectrum of the scintillation pulses. Those skilled in the art will understand that in the several embodiments described below, 256 channel addresses will be used as an example, but other numbers (N≠256) of channel addresses may be conceived, which fall within the scope of the disclosure.

Specifically, as shown in FIG.1, the pulse digitization method 100 may comprise step S110, providing amplitude to energy mapping data of a plurality of reference pulses.

In one embodiment, providing the amplitude to energy mapping data of the plurality of reference pulses comprises: providing an amplitude to energy lookup table of the plurality of reference pulses.

Through analysis of collected priori information, the inventors have discovered that there is a significant linear relationship between energy and (maximum) amplitude of the pulses. Therefore, pulse energy information may be indirectly obtained by acquiring pulse amplitude information. Accordingly, in the embodiments of the disclosure, an amplitude to energy lookup table of the pulses, such as of the scintillation pulses, may be made based on the priori information of the pulses, which lookup table may characterize the mapping relationship between pulse amplitude and pulse energy.

In a specific embodiment, an acquisition device, such as an oscilloscope, may be used to collect data of a great number of pulses, such as of scintillation pulses, and each pulse, such as each scintillation pulse, is integrated to obtain its energy value, and meanwhile the amplitude of the said pulse is recorded. Thus, a corresponding mapping relationship between the energy and amplitude of a great number of reference pulses, such as reference scintillation pulses, may be obtained, and then the priori information may be used to create an amplitude to energy lookup table of the pulses, such as of the scintillation pulses. In some embodiments, these reference pulses may be pulses from the same source as the measured pulses. For example, when applied to nuclear logging to obtain energy information of the measured pulses, the reference pulses may be scintillation pulses obtained from the same well or the well of the same type (such as oil wells) using the same radiation source. However, in some embodiments, these reference pulses may be pulses similar to the measured pulses. For example, when applied to nuclear logging to obtain energy information of the measured pulses, the reference pulses may be scintillation pulses converted from the same or similar high-energy rays, such as gamma rays, through scintillators, while the reference pulses do not come from the same well or the well of the same type, but from different types of wells (such as wells of other type of energy).

As a supplement or alternative to the amplitude to energy lookup table, scintillation amplitude to energy mapping data of other types may also be used. For example, a function that may represent a simple linear relationship between pulse energy and pulse (maximum) amplitude may be used. Here, the energy corresponding to at least part of the amplitude of the measured pulses may be obtained by simple linear interpolation based on the linear relationship function.

In a further embodiment, the pulse digitization method 100 may comprise step S120, setting a plurality of channel addresses.

In this document, the term "channel address" refers to the channel address of the pulse characteristic value of a pulse, such as a scintillation pulse. In the embodiments of the disclosure, the plurality of channel addresses may collectively represent a continuous range of characteristic values or separately represent a plurality of sequential characteristic values, which will be further explained below.

In some embodiments, the channel address may be an energy channel address, and each energy channel address has its respective energy characteristic value.

In the embodiments of the disclosure, step S120 may comprise: determining the energy characteristic value corresponding to each energy channel address and determining the pulse amplitude characteristic value corresponding to the energy characteristic value according to the amplitude to energy mapping data, to set the plurality of energy channel addresses.

In the embodiments of the disclosure, the characteristic value may be broadly interpreted to cover a characteristic value interval or a discrete characteristic value.

For example, in one embodiment, an energy channel address (such as the n^{th} energy channel address, where n is a natural number) may have its corresponding energy interval [Eₙ, Eₙ₊₁), and this energy interval is the energy characteristic value of the corresponding channel address. Accordingly, a plurality (such as N, where N is a natural number) of energy channel addresses may collectively represent a greater continuous energy range [E₁, E_{N}].

In an alternative embodiment, an energy channel address may have its corresponding discrete energy characteristic value, such as the lower limit or upper limit or midpoint of the above energy interval. For example, the energy characteristic value of the n^{th} energy channel address is the lower limit Eₙ of the above energy interval [Eₙ, Eₙ₊₁). Here, a plurality (such as N) of energy channel addresses may represent multiple sequential energy values, such as E₁, E₂, ..., E_{N}.

Specifically, the energy interval or a discrete energy characteristic value corresponding to each energy channel address may be determined according to the energy information of the measured pulses and the number of energy channel addresses to be determined as needed.

In embodiments of the disclosure, each energy channel address also comprises an amplitude characteristic value correspondingly determined according to the amplitude to energy mapping data.

Specifically, the respective amplitude characteristic values of the energy channel addresses may be determined based on the amplitude to energy mapping data, such as the amplitude to energy lookup table, provided in step S110. Similarly, the amplitude characteristic value may be a pulse amplitude (peak value) interval or a discrete amplitude (peak value) characteristic value. Preferably, when the energy characteristic value is an interval, the amplitude characteristic value is also an interval. In the specific embodiment, by corresponding the energy interval of each energy channel address to the pulse amplitude (peak value) interval according to the lookup table, it may obtain the pulse amplitude interval of each energy channel address.

In a specific embodiment, the total number of energy channel addresses may be determined according to the actual need. Based on the provided energy amplitude lookup table of the scintillation pulses, the different levels of energy (energy intervals) corresponding to different energy channel addresses are respectively mapped to the corresponding pulse peak intervals, such that the energy channel addresses (energy intervals) correspond to the pulse peak intervals. In the several specific embodiments described below, the exemplary total number of energy channel addresses is 256 (N=256). However, those skilled in the art may conceive that these embodiments may be implemented with other total channel address numbers as needed.

The pulse amplitude (peak value) in the embodiments of the disclosure comprises, but is not limited to, a current peak value and a voltage peak value, etc. In further specific embodiments, taking the pulse amplitude (peak value) comprising the voltage peak value as an example, the pulse voltage amplitudes at one endpoint of the peak intervals corresponding to the respective energy channel addresses are recorded as V1, V2, V3,.... In several specific embodiments described below, the pulse voltage amplitudes V1, V2, V3, ... at the endpoints will be used to determine whether the measured pulse falls into the relevant energy channel addresses. However, those skilled in the art may conceive that these embodiments may be used to determine whether the measured pulses fall into the relevant energy channel addresses based on pulse amplitudes of other types as needed, or based on other values within the interval (such as another endpoint or the midpoint of the interval) or based on a discrete amplitude characteristic value as described above.

In some embodiments of the disclosure, the plurality of channel addresses are equally spaced, that is, the represented interval ranges are equal, or the sequential discrete characteristic value intervals are equally spaced. In a further specific embodiment, when the channel addresses are energy channel addresses, the energy characteristic values may be (strictly) equally spaced, or the amplitude characteristic values may be (strictly) equally spaced. For example, when the channel addresses are energy channel addresses, and the (discrete) energy characteristic value of each n^{th} energy channel address is Eₙ, and the (discrete) amplitude characteristic value is Vₙ, in some specific embodiments, Eₙ₊₂-Eₙ₊₁=Eₙ₊₁-Eₙ; in other specific embodiments, Vₙ₊₂-Vₙ₊₁=Vₙ₊₁-Vₙ. Here, it will be understood that although there is a general linear relationship between pulse energy and pulse (maximum) amplitude, it may divide the energy channel addresses equally based on the energy characteristic values or the amplitude characteristic values as needed, and both cases fall within the scope of the disclosure.

Those skilled in the art should understand that the plurality of channel addresses may also be non-equally spaced, that is, the represented interval ranges are not completely equal or not equal at all, or the sequential discrete characteristic values are not completely equally spaced or not equally spaced at all, which will be apparent to those skilled in the art based on the teachings of the disclosure, and will not be elaborated here.

In another embodiment, the channel addresses may be amplitude channel addresses, and each amplitude channel address has its respective amplitude characteristic value.

In the embodiments, the total number of amplitude channel addresses may be set as needed, and the whole amplitude range collectively represented by the plurality of amplitude channel addresses may also be determined according to the priori information such as reference pulses mentioned in step S110 or other reference pulses. Accordingly, the total number of amplitude channel addresses and/or the amplitude characteristic values of each amplitude channel address may be set specifically aiming at the characteristics of the measured pulses. In various pulse digitization schemes, the total number of amplitude channel addresses varies and/or the amplitude characteristic values of each amplitude channel address vary. However, in alternative embodiments, fixed total numbers of amplitude channel addresses and fixed amplitude characteristic values may be provided for various digitization schemes, which fall within the scope of the disclosure. For example, a given total number N of amplitude channel addresses (such as N=256) and given amplitude characteristic values corresponding to each amplitude channel address (such as V1, V2, V3, ...) are provided for the digitization schemes of the various pulses.

In the embodiments relating to setting a plurality of amplitude channel addresses, the mapping relationship between pulse amplitude and energy may not have been taken into consideration yet. Accordingly, in the embodiments relating to setting a plurality of amplitude channel addresses, in the step of obtaining energy information of the plurality of measured pulses (step S150), the energy information of the measured pulses may be determined according to the pulse counts within the amplitude channel addresses and the amplitude to energy mapping data provided in step S110, as further described below. By contrast, in the embodiments relating to setting a plurality of energy channel addresses, in the step of obtaining energy information of the plurality of measured pulses (step S150), the energy information of the measured pulses may be determined directly according to the pulse counts within the energy channel address (and its corresponding energy characteristic value).

In a further specific embodiment, the specific features described above with reference to the energy channel addresses may be applied to the embodiments relating to setting a plurality of amplitude channel addresses in a non-contradictory manner when appropriate. In addition, in several specific embodiments described below, such as specific embodiments of step S140, the description is made based on the energy channel addresses and the corresponding pulse voltage amplitudes. It will be understood that these embodiments may also be implemented based on amplitude channel addresses, and new embodiments may be obtained thereby which fall within the scope of the disclosure.

Continuing to refer to FIG.1, the pulse digitization method may further comprise step S140, determining channel addresses corresponding to a plurality of measured pulses based on a comparison result between the amplitude values of the plurality of measured pulses and the amplitude characteristic values of the plurality of channel addresses, based on the set plurality of channel addresses.

In some embodiments, the channel address in which each measured pulse falls may be determined in a dynamic processing manner. In some specific embodiments, the dynamic processing involves dynamically processing the amplitudes of the measured pulses such that the pulse amplitudes used for subsequent comparison may be changed. In other specific embodiments, the dynamic processing involves setting the comparison thresholds of the comparators to be dynamically variable. In some embodiments of the disclosure, it may also be a combination of both.

In other embodiments, the number of dynamic threshold comparisons may be reduced by pre-screening the range of channel addresses.

In some embodiments, the channel address in which each measured pulse falls may also be determined through non-dynamic processing of gate outputs.

In the embodiment of dynamically processing pulses shown in FIG.2, step S140 may comprise:
S210: comparing the amplitude of each measured pulse with comparison thresholds of a plurality of comparators in sequence;
S220: prior to comparison, selectively adjusting the amplitude of measured pulse according to a previous comparison result; and
S230: determining the channel address corresponding to each measured pulse based on comparison results of the plurality of comparators.

In the embodiment shown in FIG.2, the selective adjustment may be that if the amplitude of the measured pulse is less than the comparison threshold of the previous comparator, the amplitude of the measured pulse is not adjusted; if the amplitude of the measured pulse is greater than or equal to the comparison threshold of the previous comparator, the amplitude of the measured pulse is decreased. In a specific embodiment, the reduction value of the amplitude of the measured pulse is the comparison threshold of the previous comparator.

In the embodiment shown in FIG.2, the comparison thresholds of the plurality of comparators may be determined according to the amplitude characteristic values of the plurality of channel addresses. In a further embodiment, the comparison thresholds of the plurality of comparators are a portion of the amplitude characteristic values of the plurality of channel addresses. In a preferred embodiment, the comparison thresholds of the plurality of comparators are respectively determined by sequentially bisecting the determined channel amplitude characteristic values of the plurality of channel addresses (hereinafter referred to as bisecting the channel addresses). In a specific embodiment, for N channel addresses, the comparison thresholds of the plurality of comparators may be determined by the amplitude characteristic values of (1/2)×N, (1/2)²×N,(1/2)³×N,......, until the specific channel address in which the measured pulse falls may be determined through the comparisons. In an example, if N=256, the comparison thresholds of a plurality (e.g., 8) of comparators may be determined by the amplitude characteristic values of the 128^{th}, 64^{th}, 32^{nd}, 16^{th}, 8^{th}, 4^{th}, 2^{nd}, and 1^{st} channel address, such as V128, V64, V32, V16, V8, V4, V2, and V1.

Thus, in the embodiments of the disclosure, pulses undergo dynamic processing, making the amplitude of pulses input to each level of comparator variable.

Specifically, the selective dynamic adjustment (reduction) of the amplitude of the measured pulse may be realized by means of combination of subtractors or subtraction circuits, gates or gating circuits, and optional processing units.

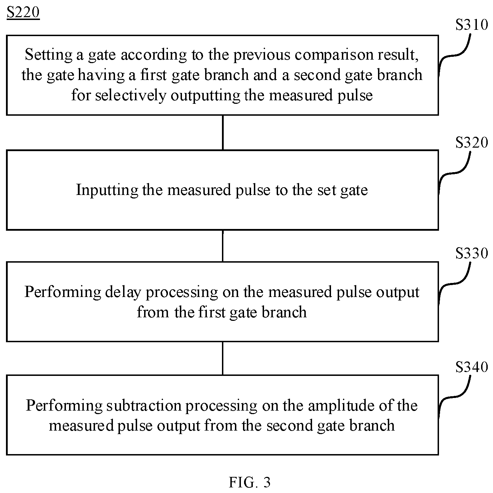

In the specific embodiment shown in FIG.3, step S220 may comprise:
S310: setting a gate according to the previous comparison result, the gate having a first gate branch and a second gate branch for selectively outputting the measured pulse;
S320: inputting the measured pulse to the set gate;
S330: performing delay processing on the measured pulse output from the first gate branch; and
S340: performing subtraction processing on the amplitude of the measured pulse output from the second gate branch.

In an optional embodiment, the step S310 comprises: inputting the comparison result of the previous comparator to a processing unit, and setting the gate by means of the processing unit.

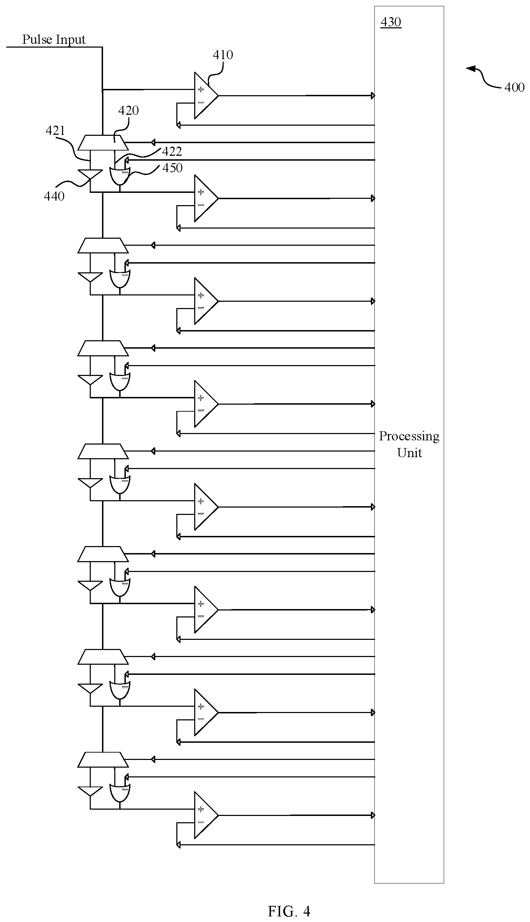

Referring to FIGS. 2 to 4, a specific example of dynamic processing of pulses is described below. FIG.4 shows a first module architecture diagram for implementing dynamic processing of pulses. In the specific example, the number of energy channel addresses is 256, and its amplitude characteristic values are represented by V1-V256.

As shown in FIG.4, the module architecture, also referred to as channel address determination unit 400, may comprise a plurality (e.g., 8) of comparators 410, a plurality (e.g., 7) of gates 420, and a processing unit 430 connected to the comparators and the gates. Each gate 420 may comprise a first gate branch 421 and a second gate branch 422 for selectively outputting the measured pulse, and a delay unit 440 may be set in the first gate branch 421, and a subtractor 450 may be set in the second gate branch 422. As shown in FIG.4, the reduction value of the subtractor 450 may be set by the processing unit 430, with the reduction value being equal to the comparison threshold of the previous comparator 410.

In the illustrated embodiment, the plurality of comparators 410 are set as multi-stage parallel comparators. Before the measured pulse signal is input to the next stage (e.g., n+1 stage), the amplitude of the measured pulse is subject to selectively dynamic adjustment according to the comparison result of the previous stage (e.g., n stage) comparator. In the specific embodiment shown in FIG.4, the selectively dynamic adjustment may be implemented by means of the gate 420 arranged between adjacent two stages of comparators 410 and the delay unit 440 and the subtractor 450 set in the first gate branch 421 and the second gate branch 422 thereof, respectively.

Taking a total number of energy channel addresses as 256 as an example, and referring to FIGS. 2 to 4, the implementation process of the said selectively dynamic adjustment is specifically described as follows:
0) A threshold voltage V₀₀ slightly greater than the maximum amplitude of noise signals may be set for the 0^{th} stage comparator (not shown in FIG.4), and after the 0^{th} stage comparator is triggered, the subsequent selectively dynamic adjustment of the pulse signal may be performed to determine the channel address.
1) The comparison threshold of the first end (such as the F end) of the first-stage comparator may be set according to the amplitude characteristic value corresponding to the 128^{th} channel address (that is, the channel address determined by bisecting the total energy channel addresses 256), such as the upper limit of the amplitude interval of the energy channel address, which may be represented by for example, V₁₂₈. When a pulse enters the second end (such as the P end) of the first-stage comparator, if the pulse energy is less than the energy characteristic value of the 128^{th} channel address, the amplitude of the pulse is correspondingly less than the comparison threshold of the 128^{th} channel address, and the comparator will output a result level 0; if the pulse energy is greater than or equal to the energy characteristic value of the 128^{th} channel address, the result level 1 will be output.
2) The pulse signal will then enter the second-stage comparator, and more specifically, it will enter the P end of the second-stage comparator. At this time, the number of channel addresses corresponding to the second-stage comparator is determined by bisecting the channel address number corresponding to the previous-stage comparator. Here, the comparison threshold of the F end of the second-stage comparator may be set according to the amplitude characteristic value corresponding to the 64^{th} channel address (that is, the channel address determined by bisecting the channel address of the previous stage), such as the upper limit of the amplitude interval of the energy channel address, which may be represented by V₆₄, for example.

Before the pulse signal enters the second-stage comparator, it will also undergo selectively dynamic adjustment. Here, when the output level of the first-stage comparator is 0, the pulse entering the second-stage comparator is the same as the pulse entering the first stage; when the output result of the first-stage comparator is 1, it will be decreased according to the previous comparison threshold of the pulse amplitude, here by V₁₂₈.

Accordingly, before the pulse enters the second-stage comparator, it first passes through the gate circuit, and the subtractor circuit, or the delay circuit. Thus, when the output result of the first-stage comparator is 0, the gate selects to leave the pulse amplitude unprocessed to pass it through the delay unit, and after that, the pulse enters the second-stage comparator, such that the arrival time of pulses entering the second-level comparator is consistent under the two output states of the gate; when the output result of the first-stage comparator is 1, the gate selects to pass the pulse through the subtractor circuit to reduce the pulse amplitude by V₁₂₈.

3) Similarly, the pulse signal will continue to enter the third-stage comparator, and more specifically, it will enter the P end of the third-stage comparator. At this time, the number of channel addresses corresponding to the third-stage comparator is determined by bisecting the number of channel addresses corresponding to the previous-stage comparator. Here, the comparison threshold of the F end of the third-stage comparator may be set according to the amplitude characteristic value corresponding to the 32nd channel address (that is, the channel address determined by bisecting the channel address of the previous stage), such as the lower limit of the amplitude interval of the energy channel address, which may be represented by V₃₂, for example.

Before the pulse signal enters the third-stage comparator, it will also undergo selective dynamic adjustment. Here, when the output level of the second-stage comparator is 0, after being processed by the delay unit, the pulse entering the third-stage comparator is the same as the pulse entering the second stage; when the output result of the second-stage comparator is 1, after being processed by the subtractor, the pulse amplitude will be reduced by the previous comparison threshold, here V₆₄.

4) Similarly, the amplitude of the measured pulse may be subject to selectively dynamic adjustment with reference to step 2) and step 3). When the total number of energy channel addresses is 256, the comparison thresholds of the fourth to eighth-stage comparators may be set according to the amplitude characteristic values corresponding to the 16^{th}, 8^{th}, 4^{th}, 2^{nd}, and 1^{st} channel addresses, respectively, such as the upper limit of the amplitude interval of the energy channel address, which can be represented by V₁₆, V₈, V₄, V₂, and V₁ here.

5) The output result of each stage comparator is counted to determine the channel address in which the measured pulse falls. For example, when the output of the 8-stage comparator is binary 00000000, the energy corresponding to this pulse is the 1^{st} channel address. Starting from 00000000, each increment of 1 corresponds to an increase of one energy channel address. When the output of the 8-stage comparator is binary 10000000, the energy corresponding to the pulse corresponds to the 129^{th} channel address; when the output of the 8-stage comparator is binary 11111111, the energy corresponding to this pulse corresponds to the 256^{th} channel address.

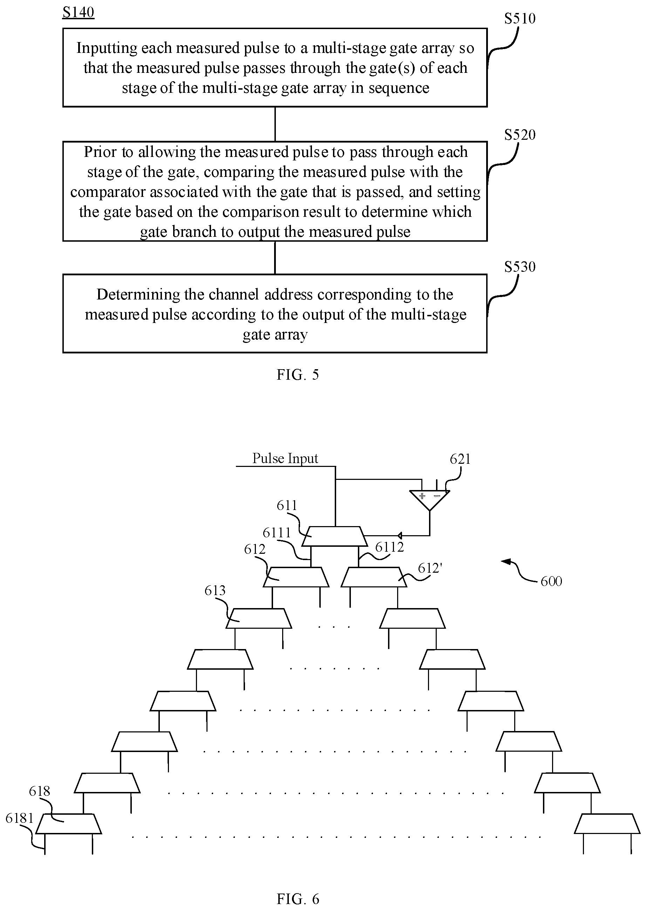

Continuing to refer to Figures 5 and 6, a further embodiment according to the disclosure is shown. In the embodiments shown in Figures 5 and 6, the channel address in which each measured pulse falls can be determined by means of non-dynamic processing of gate outputs.

In the embodiment shown in FIG.5, step S140 may comprise:
S510: inputting each measured pulse to a multi- stage gate array such that the measured pulse pass through the gate(s) of each stage of the multi-stage gate array in sequence;
S520: prior to allowing the measured pulse to pass through each stage of the gate array, comparing the measured pulse with the comparator associated with the gate that is passed, and setting the gate based on the comparison result to determine which gate branch to output the measured pulse; and
S530: determining the channel address corresponding to the measured pulse based on the output of the multi-stage gate array.

In the embodiments of the disclosure shown in FIGS. 5 and 6, a specific example of determining the channel address in which each measured pulse falls by means of non-dynamic processing of gate outputs is provided. FIG.6 shows a second module architecture diagram for determining the channel address in which the measured pulse falls. In this specific example, the number of energy channel addresses may also be 256, with amplitude characteristic values represented as V₁-V₂₅₆.

As shown in FIG.6, the module architecture, which may also be referred to as channel address determination unit 600, may comprise a multi-stage gate array, and each of the gates 611, 612, 612', 613, ..., 618 has an associated comparator 621. For simplicity, FIG.6 only shows the comparator 621 associated with the first stage gate 611. In addition, although not shown in FIG.6, it may be conceived that the module architecture may also comprise a processing unit.

As shown in FIG.6, each gate 611, 612, 612', 613, ..., 618 may have a first gate branch 6111 and a second gate branch 6112 for selectively outputting the measured pulse. Each non-final stage gate is respectively connected to two gates of the next stage through the first and second gate branches, and the first and second gate branches 6181 and 6182 of the final stage gates may serve as output of the multi-stage gate array.

In the embodiments of the disclosure, the multi-stage gate array may be constructed based on a bisection approach. In a further specific embodiment, the first-stage gate corresponds to the first channel address determined by bisecting the total number of channel addresses of the plurality of channel addresses, and the two channel address intervals for the subsequent-stage gates, are defined by the first channel address; each remaining gate corresponds to the second channel address determined by bisecting the channel address interval defined by the upper-stage gate to which it is connected, and the two channel address intervals defined by the second channel address for the subsequent-stage gates or for output. Accordingly, the comparison threshold of each comparator is determined by the amplitude characteristic value of the channel address corresponding to the associated gate.

In the specific example shown in FIG.6, the channel address corresponding to the first-stage gate 611 may be determined by bisecting the total number of energy channel addresses, such as the 128^{th} channel address, and correspondingly defines two channel address intervals for the subsequent-stage gates 612 and 612', such as the 1^{st} channel address to the 128^{th} channel address, that is [1, 128] and the 129^{th} channel address to the 256^{th} channel address, that is [129, 256]. Accordingly, the comparison threshold of the comparator 621 associated with the first-stage gate 611 may be determined according to the amplitude characteristic value of the 128^{th} channel address, such as V₁₂₈.

Further, in the embodiment shown in FIG.6, the two channel address intervals may be allocated accordingly according to the gate branch connected to the lower-stage gate. As shown in FIG.6, the second-stage gate 612 connected to the first gate branch 6111 of the first-stage gate 611 may be assigned a channel address interval from the 1^{st} channel address to the 128^{th} channel address, and accordingly corresponds to the channel address corresponding to the bisection of the channel address interval, such as the 64^{th} channel address. As shown in FIG.6, the second-stage gate 612' connected to the second gate branch 6112 of the first-stage gate 611 may be assigned a channel address interval from the 129^{th} channel address to the 256^{th} channel address, and accordingly corresponds to the channel address corresponding to the bisection of the channel address interval, such as the 192^{nd} channel address. Accordingly, the comparison threshold of the comparator (not shown) associated with the second-stage gate 612 may be determined according to the amplitude characteristic value of the 64^{th} channel address, such as V₆₄; the comparison threshold of the comparator (not shown) associated with the second-stage gate 612' may be determined according to the amplitude characteristic value of the 192^{nd} channel address, such as V₁₉₂.

Here, the channel address corresponding to the subsequent-level gate and the comparison threshold of the associated comparator may be determined accordingly.

Thus, it will be understood that the two gate branches of the last stage (such as the 8^{th} stage) gate may server as the output of the multi-stage gates, and the channel address in which the measured pulse falls may be determine according to the output of the multi-stage gates. For example, as shown in FIG.6, when the measured pulse is output by the first gate branch 6181 of the 8^{th} stage gate 618, it means that the measured pulse falls within the 1^{st} channel address.

It will be understood that the method features or module architecture features described in other embodiments may be combined with the embodiments shown in Figures 5 and 6 in a non-contradictory manner as needed.

In another embodiment, as described above, the channel address in which the pulse, such as the scintillation pulse, falls may be counted by setting dynamic comparison thresholds.

In a further embodiment, setting the dynamic comparison thresholds may be implemented by multi-stage comparison or single-stage comparison.

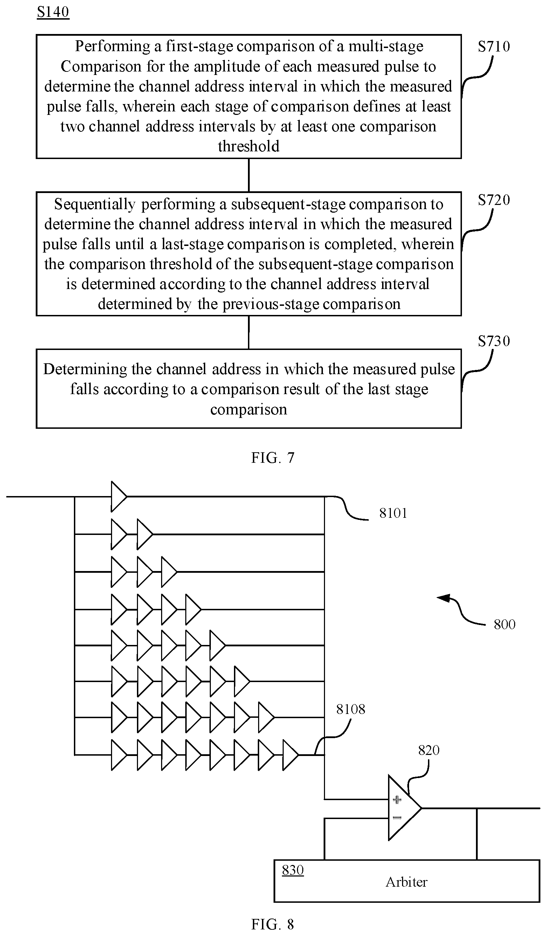

In the embodiment shown in FIG.7, a dynamic comparison threshold is set through multi-stage comparison. Specifically, step S140 may comprise:
S710: performing a first-stage comparison of multi-stage comparisons for the amplitude of each measured pulse to determine the channel address interval in which the measured pulse falls, wherein each stage of comparison defines at least two channel address intervals by at least one comparison threshold;
S720: sequentially performing a subsequent-stage comparison to determine the channel address interval in which the measured pulse falls until a last-stage comparison is completed, wherein the comparison threshold of the subsequent-stage comparison is determined according to the channel address interval determined by the previous-stage comparison; and
S730: determining the channel address in which the measured pulse falls according to a comparison result of the last stage comparison.

In the embodiments of the disclosure, by assigning dynamically variable thresholds to the comparators, the scintillation pulses may be counted according to the energy channel addresses.

As an explanation and not as a limitation, the above-mentioned multi-stage comparison may be implemented by different types of multi-stage comparison units, and the channel address determination unit may be or comprise the multi-stage comparison unit. It will be conceived that the module architecture of the multi-stage comparison unit may or may not have a "physical" multi-stage comparison structure, as long as multi-stage comparison based on dynamic thresholds may be realized. The embodiments of the disclosure are intended to cover both situations.

For example, in some embodiments, a multi-stage comparison without a "physical" multi-stage comparison structure may be implemented by one or more comparators connecting to a plurality of parallel delay lines, wherein multiple comparisons in the same stage or comparisons of different stages may be implemented by different delays of the delay lines in combination with an adjustable comparator.

For example, in other embodiments, "physical" multi-stage comparison structures corresponding to the multi-stage comparisons may be provided, and the number of "physical" stages of the multi-stage comparison structures corresponds to the number of stages of the multi-stage comparison. The number of comparators in each stage comparison structure corresponds to the number in each stage of comparison.

The exemplary module architecture of the above embodiments will be described below with reference to the drawings.

In some preferred embodiments, the number of comparison thresholds of each stage of comparison is the same, such that the number of channel address intervals defined by the comparison thresholds of each stage of comparison is the same.

In a further preferred embodiment, the channel address intervals defined by the comparison thresholds of each stage of comparison are equally divided. Here, in a specific embodiment, the comparison threshold set for the first-stage comparison is configured such that the channel address intervals defined by the comparison threshold of the first-stage comparison equally divide the plurality of channel addresses; and the comparison thresholds set for the next-stage comparison are configured such that the channel address intervals defined by the comparison thresholds of the next-stage comparison equally divide the channel address intervals determined by the previous-stage comparison.

Specifically, taking the total number of energy channel addresses as N=mⁿ (for example, N=256) as an example, the measured scintillation pulse may be subject to (m-1)×n (m is greater than or equal to 2) threshold comparisons by setting dynamic thresholds to determine a energy channel address among the mⁿ channel addresses in which the pulse falls , where n is the number of levels, m is the number of pulse (maximum) amplitude intervals defined by preset (m-1) comparison thresholds at each level. It will be understood that, given the correspondence between energy channel addresses, energy intervals, and pulse amplitude intervals, the embodiments of the disclosure cover various equivalences of dividing m amplitude intervals, energy intervals, and/or channel address intervals.

As mentioned above, the module architecture of the multi-stage comparison unit may not have a "physical" multi-stage comparison structure, such as being implemented by different delays of delay lines combined with an adjustable comparator.

In this embodiment, the multi-stage comparison is implemented by a first multi-stage comparison unit without physical multiple-stage comparison structure. The first multi-stage comparison unit may comprise a plurality of parallel delay lines connected to a measured pulse input, an adjustable comparator connected to the delay lines, and an arbiter operatively connected to the adjustable comparator, wherein the delay times of at least some of the delay lines are different.

In a further embodiment, the adjustable comparator may be a single comparator , with delay times of said multiple parallel delay lines all being different from each other.

In a further embodiment, taking the total number of energy channel addresses as N=mⁿ (e.g., N=256) as an example, it will perform at most (m-1)×n (m is greater than or equal to 2) threshold comparisons on the measured scintillation pulses, which may be achieved by using (m-1)×n parallel delay lines combined with the single comparator.

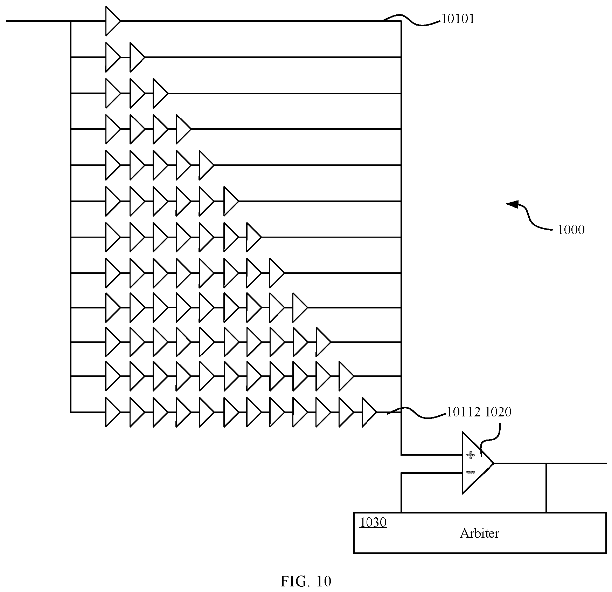

As shown in the embodiments of FIGS. 8 and 10, only one comparator combined with delay lines is used to implement dividing of the energy channel addresses for the pulse signals. Here, the threshold set in the negative input terminal of the comparator is determined by the arbiter. By configuring the corresponding delay lines, different comparison thresholds may be set when pulse signals with different delays are received. Specifically, when a pulse signal is input to the first multi-stage comparison unit, it will be sent to the lines with different delays, and the signals output from the several lines are finally input to the positive input terminal of the same comparator, such that the output pulses are input to the comparator at different time points with time intervals.

The embodiments of the disclosure cover different settings of comparator thresholds and corresponding delay lines.

In the embodiment shown in FIG.8, the number of comparison threshold of each stage of comparison is 1, thereby bisecting to define two channel address intervals, that is, m=2.

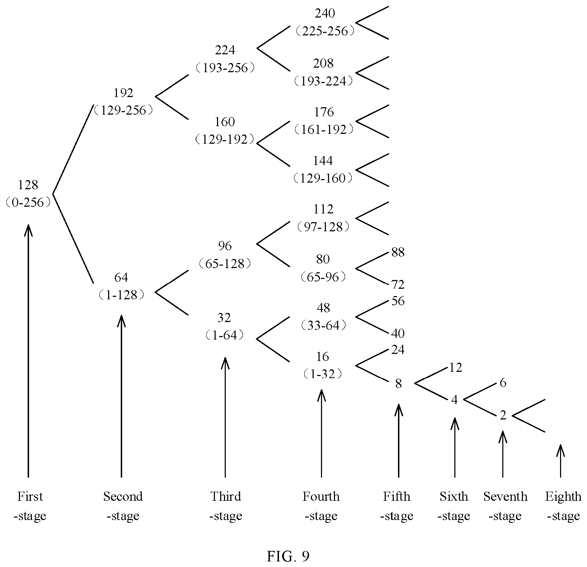

As shown in FIG.8, taking the total number of energy channel addresses as N=mⁿ (for example, N=256) as an example (FIG.9), the first multi-stage comparison unit 800 comprises a plurality of (8) delay lines 8101-8108 with different delays, an adjustable comparator 820 connected to the delay lines 8101-8108, and an arbiter 830 operatively connected to the adjustable comparator 820.

The comparison process is described below with reference to FIGS. 8 and 9.

When a pulse signal is input to the first-stage comparison unit 800, it will be sent respectively to multiple (8) delay lines 8101-8108 with different delays, and through the multiple (8) delay lines 8101-8108 with different delays to input to the positive input terminal of the same adjustable comparator 820, such that the pulses are input to the comparator at eight different time points with time intervals.

The threshold set at the negative input terminal of the adjustable comparator 820 is determined by the arbiter 830. The arbiter may set the comparison threshold of the adjustable comparator 820 according to the amplitude characteristic value of the set channel address, such that it enables the different pulse amplitudes corresponding to different pulse energies to be sequentially input to the negative input terminal of the comparator for comparison with the measured pulse.

Taking the multi-stage comparison using a bisection approach schematically shown in FIG.9 as an example, if the total number of energy channel addresses is N=mⁿ (for example, N=256), that is, 2⁸ channel addresses, the comparison will be performed (2-1)×8=8 times. The different delays are schematically shown in FIG.8 by delay units of different numbers, that is, by eight different delays, the signal is input (achieving the effect of sequentially inputting a signal eight times). In the embodiment shown in FIGS. 8 and 9, eight stages of comparison are implemented with one comparison threshold for each level, but there exists no "physical" 8-level comparison structure, instead only utilizing one adjustable comparator.

Continuing to refer to FIG.9, first, in the first-stage comparison, two channel address intervals are obtained by bisecting the total number of energy channel addresses, namely the 1^{st} to 128^{th} channel address and the 129^{th} to 256^{th} channel address (which may also be represented by amplitude intervals, such as V₁-V₁₂₈ and V₁₂₉-V₂₅₆). The corresponding comparison threshold is the amplitude characteristic value of the 128^{th} channel address, such as V₁₂₈.

After the first-stage comparison, if the pulse signal amplitude may exceed the comparison threshold V₁₂₈, the result of the first-stage comparison is that the pulse amplitude is located in V₁₂₉-V₂₅₆, and then, the comparison threshold of the second stage is determined based on the channel address interval (amplitude interval) in which the pulse signal falls as determined by the first-stage comparison , such as setting to V₁₉₂, thus further bisecting to define two channel address intervals (amplitude intervals) for the second stage, such as V₁₂₉-V₁₉₂, V₁₉₃ to V₂₅₆.

After the second-stage comparison, if the pulse signal amplitude may exceed the comparison threshold V₁₉₂, the result of the second-stage comparison is that the amplitude is between V₁₉₃-V₂₅₆. Therefore, the comparison threshold of the third stage may be determined accordingly based on the channel address interval (amplitude interval) as determined by the second-stage comparison, for example, setting to V₂₂₄, thereby further bisecting and defining two channel address intervals (amplitude intervals) for the third stage, such as V₁₉₃-V₂₂₄ and V₂₂₅ to V₂₅₆.

After the third-stage comparison, if the pulse signal amplitude may exceed the comparison threshold V₂₂₄, the result of the third-stage comparison is that the amplitude is between V₂₂₅ - V₂₅₆. Therefore, the comparison threshold of the fourth stage can be determined accordingly based on the channel address interval (amplitude interval) as determined by the third-stage comparison, for example, setting to V₂₄₀, thereby further bisecting and defining two channel address intervals (amplitude intervals) for the fourth stage, such as V₂₂₅-V₂₄₀ and V₂₄₁ to V₂₅₆.

After the fourth-stage comparison, if the pulse signal amplitude may exceed the threshold V₂₄₀, the result of the fourth-stage comparison is that the amplitude is between V₂₄₁-V₂₅₆. Therefore, the comparison threshold of the fifth stage may be determined accordingly based on the channel address interval (amplitude interval) as determined by the fourth-stage comparison, for example, setting to V₂₄₈, thereby further bisecting and defining two channel address intervals (amplitude intervals) for the fifth stage, such as V₂₄₁-V₂₄₈ and V₂₄₉ to V₂₅₆.

After the fifth-stage comparison, if the pulse signal amplitude may exceed the threshold V₂₄₈, the result of the fifth-stage comparison is that the amplitude is between V₂₄₉ - V₂₅₆. Therefore, the comparison threshold of the sixth stage may be determined accordingly based on the channel address interval (amplitude interval) as determined by the fifth-stage comparison, for example, setting to V₂₅₂, thereby further bisecting and defining two channel address intervals (amplitude intervals) of the sixth stage, such as V₂₄₉-V₂₅₂ and V₂₅₃ to V_{256.}

After the sixth-stage comparison, if the pulse signal amplitude may exceed the threshold V₂₅₂, the result of the sixth-stage comparison is that the amplitude is between V₂₅₃- V₂₅₆. Therefore, the comparison threshold of the seventh stage may be determined accordingly based on the channel address interval (amplitude interval) as determined by the sixth-stage comparison, for example, setting to V₂₅₄, thereby further bisecting and defining two channel address intervals (amplitude intervals) for the seventh stage, such as V₂₅₃-V₂₅₄ and V₂₅₅ to V₂₅₆.

After the seventh-stage comparison, if the pulse signal amplitude may exceed the threshold V₂₅₄, the result of the seventh-stage comparison is that the amplitude is between V₂₅₅ - V₂₅₆. Therefore, the comparison threshold of the eighth stage can be determined accordingly based on the channel address interval (amplitude interval) determined by the seventh-stage comparison, for example, setting to V₂₅₅, thereby further bisecting and defining two channel address intervals (amplitude intervals) for the eighth stage, which are two channel addresses (amplitudes), such as V255 and V256. If the pulse signal amplitude may exceed the comparison threshold V₂₅₅, the amplitude of the pulse signal is between V₂₅₅ (not comprised) and V₂₅₆, then the pulse signal is located in the 256^{th} energy channel address. It can be seen that the energy channel address (amplitude) corresponding to the pulse may be determined by 8 comparisons.

Here, after the pulses on all the delay lines have passed through the comparator, the specific channel address corresponding to the pulses may be determined according to the output result of the comparator.

In the embodiments of the disclosure, the arbiter may be implemented by a microcontroller unit (MCU), and the arbiter may control the change of the comparison threshold through a digital-to-analog converter (DAC).

As mentioned before, above, traditional MVT methods use fixed thresholds and complex fitting calculations, are limited to specific energy ranges, require precise timing information, and have dead time. This leads to disadvantages such as low processing efficiency, large consumption of hardware resources, and poor high-temperature resistance. By contrast, the embodiments directly sample and classify unknown pulses into corresponding energy channel addresses through dynamic threshold setting with simplified processing. In this way, fitting calculations, TDCs, and precise time information are not required. Compared with traditional methods, the solution simplifies the pulse energy acquisition process, saves hardware resources, reduces FPGA power consumption, and improves high-temperature resistance. Furthermore, the invention greatly shortens dead time through threshold comparison and lookup table operations, which may achieve continuous pulse processing and effectively improve system performance.

It will be conceived that, in other embodiments, the number of comparison thresholds in each stage of comparison may be greater than 1.

In the embodiment shown in FIG.10, the number of comparison thresholds in each stage of comparison is 3, thereby quartering to define four channel address intervals, that is, m=4. Similarly taking the total number of energy channel addresses as N=mⁿ (for example, N=256) as an example, the multi-stage comparison has four stages, , with 3 comparison thresholds at each stage.

Similar to the embodiment shown in FIG.8, in the embodiment shown in FIG.10, only one comparator combined with delay lines is used to implement dividing of the energy channel addresses for the pulse signal, where the threshold set at the negative input terminal of the comparator is determined by the arbiter.

As shown in FIG.10, the first multi-stage comparison unit 1000 comprises a plurality of (12) delay lines 10101-10112 with different delays, an adjustable comparator 1020 connected to the delay lines 10101-10112, and an arbiter 1030 operatively connected to the adjustable comparator 1020.

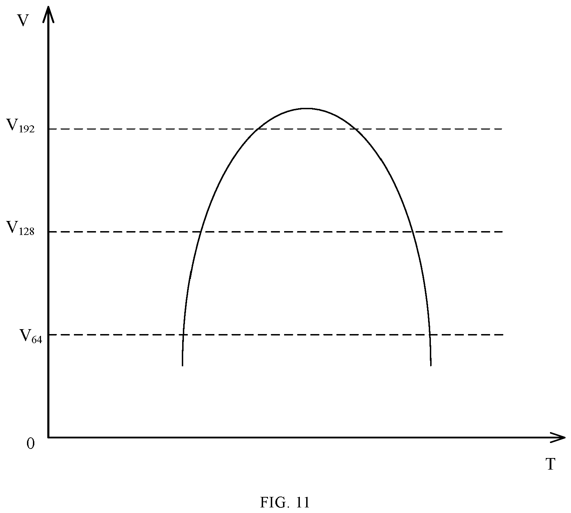

The comparison process is described below with reference to FIGS. 10 and 11.

As mentioned before, in the embodiment shown in FIG.10, the module architecture of the first multi-stage comparison unit 1000 may not have a "physical" multi-stage comparison structure, instead implement multi-stage comparison by means of multiple parallel delay lines and a single adjustable comparator.

In the specific embodiment shown in FIG.10, after the first-stage comparison, the channel address interval determined by the first-stage comparison is divided into four equal intervals, and the arbiter may sequentially set corresponding comparison thresholds for the second-stage comparison; and according to the second-stage comparison result, the channel address interval determined by the second-stage comparison is again divided into four equal intervals, thereby sequentially completing the multi-stage comparisons.

Thus, depending on the channel address interval in which the pulse falls, if only one comparison threshold needs to be compared in each stage to determine the channel address interval in which the pulse falls, it only needs at least 4 comparisons to determine the energy channel address; if all three comparison thresholds need to be compared in each stage to determine the channel address interval in which it falls, it will need up to 12 comparisons to determine the energy channel address. Accordingly, due to not having a "physical" multiple-stage comparison structure, the aforementioned multiple (12) delay lines 10101-10112 with different delays may be dynamically applicable to various times of comparisons in the multi-stage comparisons, such as between 4 and 12 times. In the embodiment shown in FIG.10, the comparison thresholds used for comparison in the same stage are preferably from small to large.

Continuing to refer to Figures 10 and 11, a specific example of dividing and defining four channel address intervals using a quadrisection approach is described.

In the first-stage comparison, the arbiter 1030 may set three comparison thresholds for the first-stage comparison, such as V₆₄, V₁₂₈, and V₁₉₂. Preferably, in the first-stage comparison, V₆₄, V₁₂₈, and V₁₉₂ are compared sequentially preferably in ascending order, and once a channel address interval is determined for the pulse, the remaining comparison thresholds may be skipped. For example, in the example shown in FIG.11, the pulse is at the 193^{rd} channel address with its corresponding amplitude characteristic value expressed as V₁₉₃, for example. Thus, the pulse amplitude sequentially exceeds the first comparison threshold V₆₄, the second comparison threshold V₁₂₈, and the third comparison threshold V₁₉₂ of the first-stage comparison. Thus, it can be determined that the amplitude range in which the pulse is located is V₁₉₃-V₂₅₆, that is, it is located within the channel address interval of the 193^{rd} to 256^{th} channel addresses.

In the second-stage comparison, the arbiter 1030 may determine which of V₁ (0) -V₆₄, V₆₅-V₁₂₈, V₁₂₉-V₁₉₂ and V₁₉₃-V₂₅₆ the channel address interval (amplitude interval) is located according to the first-stage comparison result (for example, in the aforementioned V₁₉₃-V₂₅₆), and accordingly set three comparison thresholds for the second-stage comparison in the channel address interval determined by the first-stage comparison to quarter the channel address interval determined by the first-stage comparison, thereby for completing all four stages of comparison sequentially.

For example, assuming that the pulse amplitude is located in the 1^{st} to 64^{th} channel addresses, specifically the 1^{st} to 4^{th} channel addresses (not shown), which is expressed as 0-V₆₄ (specifically V₄):

First, set the first comparison threshold (minimum threshold) V64 of the first stage for the comparator, and if the first pulse signal entering the comparator cannot exceed the threshold, the amplitude of the pulse signal is between 0-V₆₄;

Then, set the comparison threshold of the second stage for the comparator, and select to set the first comparison threshold (minimum threshold) V₁₆ of the second stage for the comparator first, and if the second pulse signal input to the comparator after a delay cannot exceed the threshold V₁₆, the amplitude of the pulse signal is between 0-V₁₆;

Then, set the comparison threshold of the third stage for the comparator, and select to set the first comparison threshold (minimum threshold) V₄ of the third stage for the comparator first, and if the third pulse signal input to the comparator after a delay cannot exceed the threshold V₄, the amplitude of the pulse signal is between 0-V₄;

Then, set the comparison threshold of the fourth stage for the comparator, and select to set the first comparison threshold (minimum threshold) V₁ of the fourth stage for the comparator first, and if the pulse signal input to the comparator after a delay cannot exceed the threshold V₁, the amplitude of the pulse signal is between 0- V₁, that is, it is located in the 1^{st} energy channel address; if the pulse signal exceeds V₁, set the second comparison threshold V₂of the fourth stage for the comparator, and if it cannot exceed the threshold V₂, the amplitude of the pulse signal is between V₁- V₂, that is, it is located in the 2^{nd} energy channel address; and if the pulse signal exceeds V₂, set the third comparison threshold V₃ of the fourth stage for the comparator, and if it cannot exceed the threshold V₃, the amplitude of the pulse signal is between V₂- V₃, that is, it is located in the 3^{rd} energy channel address; and if the pulse signal exceeds V₃, the amplitude of the pulse signal is between V₃ -V₄, that is, it is located in the 4^{th} energy channel address.

Thus, the embodiment using the quadrisection approach to determine the comparison threshold shown in FIG.10 has the advantages similar to the embodiment shown in FIG. 8 simply using the bisection approach to determine the comparison threshold. In addition, the embodiment shown in FIG.10 achieves bit expansion dynamic threshold spectrum formation through using the quadrisection approach, thereby having better working efficiency and structural flexibility, and the comparator chain (that is, the number of comparators in each stage and the number of comparison stages) may be adjustable according to the different needs of the requirement scenarios.

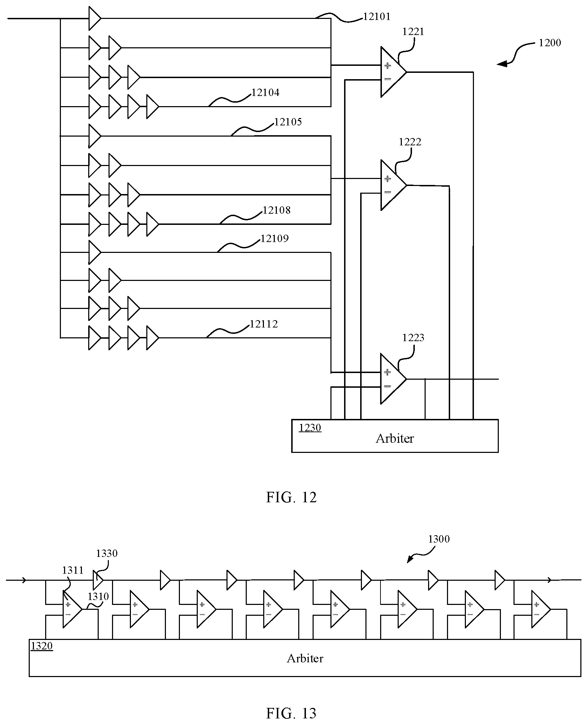

Different from the embodiment shown in FIG.10, the embodiment shown in FIG.12 uses multiple comparators combined with delay lines to implement dividing of the energy channel addresses of the pulse signals.

Thus, in the embodiment shown in FIG.12, there are multiple adjustable comparators, with different comparators connected to different delay lines, and delay times of delay lines connected to the same comparator are all different from each other.

As shown in FIG.12, the first multi-stage comparison unit 1200 comprises a plurality of (12) delay lines 12101-12112 with different delays, a plurality of (3) adjustable comparators 1221-1223, and an arbiter 1230 operatively connected to the adjustable comparators 1221-1223. The multiple (12) delay lines 12101-12112 with different delays are divided into multiple groups of delay lines corresponding to the multiple (3) adjustable comparators 1221-1223, and each group is connected to one adjustable comparator. The delay times of the delay lines, such as 12101-12104, 12105-12108, or 12109-12112, of the same group connected to the same adjustable comparator are different. However, as shown in FIG.12, each group of delay lines may have the same delay configuration as each other.

Here, reference may be made to the embodiments described above regarding FIGS. 8 and 10 to implement multiple-stage comparison based on dynamic comparison thresholds using the first multiple-stage comparison unit 1200 shown in FIG. 12, which will not be elaborated here.

In a preferred embodiment, the number of the plurality of adjustable comparators may correspond to the number of comparison thresholds of each stage of comparison. For example, in the embodiment shown in FIG.12, the number of adjustable comparators (3) corresponds to the number of comparison thresholds in each stage of comparison based on the quadrisection approach. In the preferred embodiment, it is possible to simultaneously compare different comparison thresholds of the same stage.

As mentioned before, a "physical" multi-stage comparison structure corresponding to the multi-stage comparisons may also be provided to assign dynamically changing thresholds to the comparators, thereby achieving counting of scintillation pulses according to energy channel addresses.

The exemplary module architecture of the embodiments having a "physical" multi-stage comparison structure will be described below with reference to the drawings. In the embodiment, the multi-stage comparison is implemented by a second multi-stage comparison unit having a physical multi-stage comparison structure. The second multi-stage comparison unit comprises a plurality of comparator subunits connected to a measured pulse input and an arbiter operatively connected to the plurality of comparator subunits, wherein each comparator subunit corresponds to one of the multi-stage comparisons and comprises a single comparator or a plurality of parallel adjustable comparators with delay units arranged between the adjacent comparator subunits.

In some preferred embodiments, the number of comparison thresholds of each stage of comparison is the same, such that the number of channel address intervals defined by the comparison thresholds of each stage of comparison is the same.

In a further embodiment, taking the total number of energy channel addresses as N=mⁿ (for example, N=256) as an example, it may perform at most (m-1)×n (m is greater than or equal to 2) threshold comparisons on the measured scintillation pulse and n-stage comparator subunits (each comparator subunit has (m-1) comparators) combined with delay units between adjacent multi-stage comparator subunits may also be used for implementation.

In the embodiment shown in FIG.13, physical multi-stage comparator subunits (8 stages) are set, and the number of physical comparator in each stage is 1, thereby bisecting and defining two channel address intervals, that is, m=2.

In terms of multi-stage comparison, the embodiment shown in FIG.13 is similar to the embodiment shown in FIG.8. Referring to FIGS. 13 and 9, if the total number of energy channel addresses is N=mⁿ (for example, N=256), that is, 2⁸ channel addresses, the comparison will be performed (2-1)×8=8 times.

Thus, as shown in FIG.13, the second multi-stage comparison unit 1300 comprises a plurality of (8) comparator subunits 1310 connected to a measured pulse input and an arbiter 1320 operatively connected to the plurality of comparator subunits 1310, wherein each comparator subunit 1310 corresponds to one of the multi (8) - stage comparisons and comprises a single adjustable comparator 1311, with delay units 1330 arranged between adjacent comparator subunits.

Continuing to refer to FIGS. 13 and 9, each stage may use one comparator to compare with the pulse peak voltage. Then, each comparison will make judgment between two channel address intervals (amplitude intervals), that is, above or below the comparison threshold set by the comparator of the stage. After 8 stages of comparison, it is possible to determine which of the 256 channel addresses the pulse falls in, for then generating a 256-channel energy spectrum, for example. In the example shown in FIG.13, a threshold voltage may be input to the negative input terminal of the adjustable comparator of each comparator subunit, and a delay unit is set between each comparator subunit to form, for example, a tiny delay (for example, 5 ns), and thus pulse signals serially input to the positive input ends of multiple (8) comparator subunits' comparators are processed by said multiple (8) comparator subunits with different delay times, and after passing through the last stage such as the 8^{th} stage comparator, it may determine which energy channel the pulse, particularly scintillation pulse, falls into.

Below, with reference to FIG.9, a specific example of using the second multi-stage comparison unit 1300 shown in FIG.13, based on the bisection approach, to determine which energy channel's pulse amplitude interval the input pulse, particularly scintillation pulse signal's pulse amplitude falls into.

According to the bisection approach, the middle energy channel address of 1-256 energy channel addresses is the 128^{th} energy channel address, and thus, a first comparison threshold, that is, the amplitude characteristic value of the 128^{th} energy channel address, may be set for the comparator of the first-stage comparator subunit; and two channel address intervals can be defined by the comparison threshold, that is, the 1-128 energy channel addresses and the 129-256 energy channel address. By comparing the input pulse signal amplitude with the first comparison threshold, it is determined whether the pulse signal is located in the 1-128 energy channel address interval or the pulse peak interval corresponding to the 129-256 energy channel address interval. If the output of the comparator is 1, it means that the pulse peak value of the input signal has exceeded the pulse amplitude characteristic value corresponding to the 128^{th} energy channel address, then the input pulse signal is located in the 129-256 channel address interval; if the output of the comparator is 0, it means that the pulse peak value of the input signal has not exceeded the pulse amplitude characteristic value corresponding to the 128^{th} energy channel address, then the pulse peak value of the input signal is located in the 1-128 channel address interval. By inputting the comparison result of the comparator of the first-stage comparator subunit to the arbiter, the arbiter determines according to the comparison result, in which energy channel address interval, or pulse amplitude interval corresponding to the energy channel address interval, the input pulse signal is located, and based on the energy channel interval, continues to set the comparison threshold for the comparator of the second-stage comparator subunit according to the bisection approach, and so on, until it is determined by the comparator of the last stage comparator subunit in which energy channel address the input scintillation pulse signal is located. Then, for example, the pulse counts in the said energy channel address may be incremented by 1 by means of a counting unit. For example, taking 256 energy channel addresses as an example, the 1^{st} channel address may correspond to 00000000, and the 256^{th} channel address can correspond to 11111111.

It will be understood that if a higher precision energy spectrum is to be obtained, the length of the comparator chain, i.e., the number of comparators in each stage and the number of comparator stages, may be increased.

As mentioned before, traditional MVT methods use fixed thresholds and complex fitting calculations, are limited to a specific energy segment, require precise time information, and have dead time, which leads to disadvantages such as low processing efficiency, large consumption of hardware resources, and poor high-temperature resistance. By contrast, the embodiments directly sample and classify unknown pulses into corresponding energy channel addresses through dynamic threshold setting and a simplified processing process. In this way, fitting calculations, TDCs, and precise time information are not required. Compared with traditional methods, this solution simplifies the pulse energy acquisition process, saves hardware resources, reduces FPGA power consumption, and improves high-temperature resistance. In addition, the present invention greatly shortens dead time through threshold comparison and lookup table operations, which may achieve continuous pulse processing and effectively improve system performance.

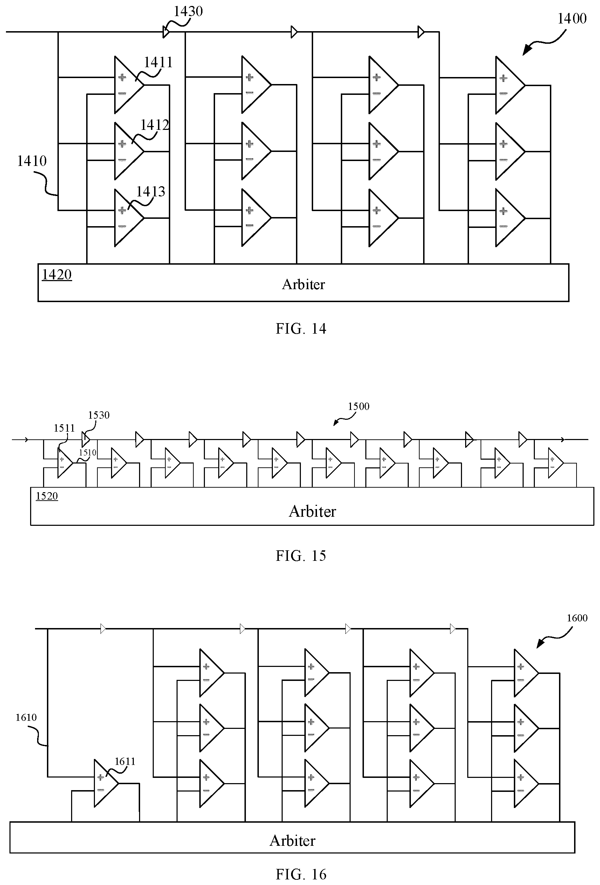

In the embodiment shown in FIG.14, physical multi-stage comparator subunits (4 stages) are set, and the number of physical comparators in each stage is 3, thereby quartering to define four channel address intervals, that is, m=4.

In terms of multi-stage comparison, the embodiment shown in FIG.14 is similar to the embodiment shown in FIG.10. Referring to FIGS. 14 and 11, if the total number of energy channel addresses is N=mⁿ (for example, N=256), that is, 2⁸ channel addresses, the comparison will be performed 4 levels.

Thus, as shown in FIG.14, the second multi-stage comparison unit 1400 comprises a plurality of (4) comparator subunits 1410 connected to a measured pulse input and an arbiter 1420 operatively connected to the plurality of comparator subunits 1410, wherein each comparator subunit 1410 corresponds to one stage of the multi (4) stage comparisons and comprises a plurality of (3) parallel adjustable comparators 1411-1413, and provided between adjacent comparator subunits is a delay unit 1430.

It will be understood that the features of the embodiments shown in FIGS. 10 and 13 may be combined with the embodiment of FIG.14 in a non-contradictory manner as needed to obtain new embodiments, which will not be elaborated here.

Below, with reference to FIG.11, a specific example is described of using the second multi-stage comparison unit 1400 shown in FIG.14, based on the quadrisection approach, to determine in which pulse amplitude interval corresponding to an energy channel address the pulse amplitude of an input pulse signal, such as a scintillation pulse signal, is located.

In the specific example shown in FIG.14, physical 4-stage comparator subunits 1410 are provided, with each comparator subunit having 3 physical adjustable comparators, thereby defining 4 channel address intervals (or represented as 4 energy intervals or amplitude intervals). Here, it may be represented as n=4 and m=4, meaning there are n=4 stages of comparison, with each stage dividing the unknown energy range into m=4 energy intervals.

Referring to FIGS. 14 and 11, the negative input terminals of the three comparators of the first-stage comparator subunit may be set based on the 64^{th}, 128^{th}, and 192^{nd} channel addresses obtained by quartering 256 channel addresses, to determine the three comparison thresholds of the first stage, for example represented as V₆₄, V₁₂₈, V₁₉₂, for example. If the amplitude (peak value) of the measured pulse exceeds V₆₄ but does not exceed V₁₂₈, then the arbiter can determine that the energy of the pulse is located between the 64^{th} channel address and the 128^{th} channel address. Thus, in the second-stage comparison, the arbiter sets the thresholds of the three comparators of the second-stage comparator subunit according to the channel address interval, such as V₆₅-V₁₂₈, determined by the previous stage of comparison, by quartering the interval [V₆₅, V₁₂₈], and so on to until completing all four stages of comparison to finally determine the specific channel address in which the pulse is located in the energy spectrum.

Thus, the embodiment shown in FIG.14 using the quadrisection approach to determine the comparison threshold has the advantages similar to the embodiment shown in FIG.13 simply using the bisection approach to determine the comparison threshold. In addition, the embodiment shown in FIG.14 implements bit expansion dynamic threshold spectrum formation by using the quadrisection approach, thereby having better working efficiency and structural flexibility, and the comparator chain (i.e., the number of comparators in each stage and the number of comparison stages) may be adjustable according to the different needs of the application scenarios.

In the embodiments shown in FIGS. 8 to 14, the comparison threshold(s) of the first-stage comparison is determined according to the total number of the plurality of channel addresses. However, it is conceivable to determine the comparison threshold(s) of the first-stage comparison according to inherent pulse characteristics or other features to reduce the number of comparisons.

In an embodiment, the comparison threshold of the first-stage comparison may be determined according to a given priori channel address interval. It will be understood that the priori channel address interval may cover various equivalences including energy intervals, amplitude intervals, or the like.

In some embodiments, there is one given priori channel interval, and thus there is one the comparison threshold for the first-stage comparison which is determined according to the amplitude characteristic value of one of the endpoint channel addresses of the priori channel address interval.

In an example, for example, still taking the total number of energy channel addresses as N=mⁿ (for example, N=256) as an example, if it is determined according to the pulse characteristics that one priori channel address interval is less than a certain channel address, such as less than the 64^{th} channel address, the comparison threshold of the first stage may be determined according to the priori interval. More specifically, the comparison threshold may be determined according to the endpoint (upper end) channel address (such as the 64^{th} channel address) of the priori channel address interval, for example, set according to the amplitude characteristic value corresponding to the 64^{th} channel address and is expressed as V₆₄, for example. It will be understood that the priori channel address interval may be determined according to different pulse characteristics. For example, in pulsed neutron saturation logging, considering that the channel addresses corresponding to the pulse energy of about 80% of the scintillation pulses corresponding to gamma rays are less than 64, the channel address interval is determined to less than 64 channel addresses. Further, as described before, the comparison threshold of the first comparison is set to V₆₄.

In the embodiments of the disclosure, in the first-stage comparison, it may determine whether the pulse is located in the priori channel address interval (located in the low-energy segment) or is not located in the priori channel address interval (located in the high-energy segment). Then, in subsequent stage comparisons, the comparison threshold may be dynamically set according to the principle of bisection or quadrisection.

The embodiment of determining the comparison threshold of the first-stage comparison according to a given priori channel address interval may be implemented in the multi-stage comparison unit according to the embodiments of the disclosure. That is, it may be implemented based on a module architecture in combination of delay lines and a comparator, or based on a "physical" multi-stage comparator subunit structure, for example, those multi-stage comparison units shown in FIGS. 8, 10, 12, 13, and 14 or the like structures.

Below, with the second multi-stage comparison unit 1500 shown in FIG.15 as an example, an embodiment of determining the comparison threshold of the first-stage comparison according to a given priori channel address interval will be described. In the embodiment, the non-first-stage comparison is implemented using the bisection approach. The second multi-stage comparison unit 1500 shown in FIG.15 is similar to the second multi-stage comparison unit 1300 shown in FIG.13, except that the second multi-stage comparison unit 1500 shown in FIG.15 has two more comparator subunits, that is, there is a total of ten-stage comparator subunits 1510.

In addition, the embodiment differs from the embodiment described above with reference to FIGS. 13 and 9 in that, in this embodiment, the comparison threshold of the comparator 1511 in the first-stage comparator subunit 1510 is set according to the upper endpoint (the 64^{th} channel address) of the above-mentioned priori channel address interval, e.g., V₆₄.

If the comparison result of the first-stage comparison is that the pulse energy is located in the priori channel address interval (located in the low-energy segment), and the pulse amplitude is between 0-V₆₄, then the comparison threshold of the comparator in the second-stage comparator subunit may be set to V₃₂ according to the bisection approach; assuming that the pulse signal amplitude may exceed the threshold V₃₂, then the amplitude of the pulse signal is between V₃₂ - V₆₄; then, according to the bisection approach, the comparison threshold of the comparator in the third-stage comparator subunit is set to V₄₈; assuming that the pulse signal amplitude may not exceed the threshold V₄₈, the amplitude of the pulse signal is between V₃₂ - V₄₈; then, according to the bisection approach, the comparison threshold of the comparator in the fourth-stage comparator subunit is set to V₄₀; assuming that the pulse signal amplitude cannot exceed the threshold V₄₀, the amplitude of the pulse signal is between V₃₂-V₄₀; then, according to the bisection approach, the comparison threshold of the comparator in the fifth-stage comparator subunit is set to V₃₆; assuming that the pulse signal amplitude may not exceed the threshold V₃₆, the amplitude of the pulse signal is between V₃₂- V₃₆; then, according to the bisection approach, the comparison threshold of the comparator in the sixth-stage comparator subunit is set to V₃₄; assuming that the pulse signal amplitude cannot exceed the threshold V₃₄, the amplitude of the pulse signal is between V₃₂- V₃₄; then, according to the bisection approach, the comparison threshold of the comparator in the seventh-stage comparator subunit is set to V33; assuming that the pulse signal amplitude may not exceed the threshold V₃₃, the amplitude of the pulse signal is between V₃₂- V₃₃, that is, it is located at the 33^{rd} energy channel address. It can be seen that the energy channel address corresponding to the pulse amplitude is determined by 7 stages of comparison.

In the example where about 80% of the scintillation pulse energy corresponds to channel addresses below 64, the number of comparisons is reduced by 1 for 80% of the pulses.

If the comparison result of the first-stage comparison is that the pulse energy is located in the high-energy segment (that is, outside the priori channel address interval), and the pulse amplitude is between V₆₄-V₂₅₆, then the comparison threshold of the comparator in the second-stage comparator subunit may be set to V₁₆₀ according to the bisection approach; assuming that the pulse signal amplitude may exceed the threshold V₁₆₀, then the amplitude of the pulse signal is between V₁₆₀ - V₂₅₆; then, according to the bisection approach, the comparison threshold of the comparator in the third-stage comparator subunit is set to V₂₀₈; assuming that the pulse signal amplitude may not exceed the threshold V₂₀₈, the amplitude of the pulse signal is between V₁₆₀ - V₂₀₈; then, according to the bisection approach, the comparison threshold of the comparator in the fourth-stage comparator subunit is set to V₁₈₄; assuming that the pulse signal amplitude may not exceed the threshold V₁₈₄, the amplitude of the pulse signal is between V₁₆₀ - V₁₈₄; then, according to the bisection approach, the comparison threshold of the comparator in the fifth-stage comparator subunit is set to V₁₇₂; assuming that the pulse signal amplitude may exceed the threshold V₁₇₂, the amplitude of the pulse signal is between V₁₇₂-V₁₈₄; then, according to the bisection approach, the comparison threshold of the comparator in the sixth-stage comparator subunit is set to V₁₇₈; assuming that the pulse signal amplitude may not exceed the threshold V₁₇₈, the amplitude of the pulse signal is between V₁₇₂- V₁₇₈; then, according to the bisection approach, the comparison threshold of the comparator in the seventh-stage comparator subunit is set to V₁₇₅; assuming that the pulse signal amplitude may exceed the threshold V₁₇₅, the amplitude of the pulse signal is between V₁₇₅- V₁₇₈. Then, according to the bisection approach, the comparison threshold of the comparator in the eighth-stage comparator subunit is set to V₁₇₇; assuming that the pulse signal amplitude may exceed the threshold V₁₇₇, the amplitude of the pulse signal is between V₁₇₇- V₁₇₈, which is located at the 178^{th} energy channel address; and if the pulse signal may not exceed the threshold V₁₇₇, the amplitude of the pulse signal is between V₁₇₅- V₁₇₇; then, the comparison threshold of the comparator in the ninth-stage comparator subunit may continue to be set to V₁₇₆according to the bisection approach; assuming that the pulse signal amplitude may exceed the threshold V₁₇₆, the amplitude of the pulse signal is between V₁₇₆- V₁₇₇, which is located at the 177^{th} energy channel address. It can be seen that the energy channel address corresponding to the pulse amplitude is determined by 8 to 10 stages of comparison.

In the example where about 80% of the scintillation pulse energy corresponds to channel addresses below 64, since only about 20% of the pulses are located in the high-energy segment (that is, outside the priori channel address interval), although these scintillation pulses require 1-2 more comparisons, a significant reduction in the total number of comparisons for all the measured pulses may still be obtained.

Thus, except for the first-stage comparator subunit, the negative input terminal of the comparator of each subsequent comparator subunit will have its threshold voltage set according to the principle of bisection based on the energy range divided by the result from the previous level comparator subunit, as determined by the arbiter, and delay units are set between the respective stage comparator subunits to form a small delay (for example 5ns), thus pulse signals serially input to the positive input ends of multiple comparator subunits' comparators are processed by said multiple comparator subunits with different delay times, such that after passing through the final stage (determined by the arbiter based on previous-stage comparator output result) comparator, in which the specific energy channel the pulse, particularly scintillation pulse is located, may be determined.

It will be conceived that the multi-stage comparison of the above embodiment may also be implemented by modifying the first multi-stage comparison unit shown in FIG.8, for example, by adding two delay lines.

In addition, in the embodiment of determining the comparison threshold of the first-stage comparison according to a given priori channel address interval, the non-first-stage comparison may be implemented using the quadrisection approach.

Below, with the second multi-stage comparison unit 1600 shown in FIG.16 as an example, an embodiment of determining the comparison threshold of the first-stage comparison according to a given priori channel address interval will be described. In the embodiment, the non-first-stage comparison is implemented using the quadrisection approach. The second multi-stage comparison unit 1600 shown in FIG.16 is similar to the second multi-stage comparison unit 1400 shown in FIG.14, except that the second multi-stage comparison unit 1600 shown in FIG.16 has one more comparator subunit, that is, a total of five comparator subunits 1610, but the first-stage comparator subunit has only 1 comparator.

In addition, the embodiment differs from the embodiment described above with reference to FIGS. 14 and 11 in that, in the said embodiment, the comparison threshold of the comparator 1611 in the first-stage comparator subunit 1610 is set according to the upper endpoint (the 64^{th} channel address) of the above-mentioned priori channel address interval, which is V₆₄, for example.

If the comparison result of the first-stage comparison is that the pulse energy is located in the priori channel address interval (located in the low-energy segment), then the amplitude of the pulse signal is between 0-V₆₄; then, the comparison thresholds of the three comparators in the second-stage comparator subunit may be set to V₁₆, V₃₂, and V₄₈ according to the quadrisection approach; if the pulse signal amplitude may not exceed the threshold V₁₆, the amplitude of the pulse signal is between 0- V₁₆; then, according to the quadrisection approach, the comparison thresholds of the three comparators in the third-stage comparator subunit are set to V₄, V₈, and V₁₂; if the pulse signal amplitude may not exceed the threshold V₄, the amplitude of the pulse signal is between 0- V₄; then, according to the quadrisection approach, the comparison thresholds of the three comparators in the fourth-stage comparator subunit are set to V₁, V₂, and V₃; if the pulse signal amplitude may not exceed the threshold V₁, the amplitude of the pulse signal is between 0- V₁, that is, it is located in the 1st energy channel address; if the pulse signal exceeds V₁ but may not exceed the threshold V₂, the amplitude of the pulse signal is between V₁- V₂, that is, it is located in the 2^{nd} energy channel address; if the pulse signal exceeds V₂ but may not exceed the threshold V₃, the amplitude of the pulse signal is between V₂- V₃, that is, it is located in the 3^{rd} energy channel address; if the pulse signal exceeds V₃, the amplitude of the pulse signal is between V₃- V₄, that is, it is located in the 4^{th} energy channel address. It can be seen that the energy channel address corresponding to the pulse amplitude is determined by using 4 stages of comparison.

In the example where about 80% of the scintillation pulse energy corresponds to channel addresses below 64, 80% of pulses only need 1 comparison at the first stage.

If the comparison result of the first-stage comparison is that the pulse energy is located in the high-energy segment (that is, outside the priori channel address interval), then the amplitude of the pulse signal is between V₆₄-V₂₅₆; then, the comparison thresholds of the three comparators in the second-stage comparator subunit may be set to V₁₁₂, V₁₆₀, and V₂₀₈ according to the quadrisection approach; if the pulse signal amplitude may not exceed the threshold V₁₁₂, then the amplitude of the pulse signal is between V₆₄- V₁₁₂; then, according to the quadrisection approach, the comparison thresholds of the three comparators in the third-stage comparator subunit are set to V₇₆, V₈₈, and V₉₀, and the delayed pulse signal is input to the comparators; if the pulse signal amplitude may not exceed the threshold V₇₆, the amplitude of the pulse signal is between V₆₄- V₇₆; then, according to the quadrisection approach, the comparison thresholds of the three comparators in the fourth-stage comparator subunit are set to V₆₇, V₇₀, and V₇₃, and the delayed pulse signal is input to the comparators; if the pulse signal amplitude may not exceed the threshold V₆₇, the amplitude of the pulse signal is between V₆₄- V₆₇; then, according to the quadrisection approach, the comparison thresholds of the three comparators in the fifth-stage comparator subunit are set to V₆₅, V₆₆, and V₆₇; if the pulse signal may not exceed V₆₅, the amplitude of the pulse signal is between V₆₄- V₆₅, that is, it is located at the 65^{th} energy channel address; if the pulse signal exceeds V₆₅ but may not exceed the threshold V₆₆, the amplitude of the pulse signal is between V₆₅ - V₆₆, that is, it is located at the 66^{th} energy channel address; if the pulse signal exceeds V₆₆ but may not exceed the threshold V₆₇, the amplitude of the pulse signal is between V₆₆ - V₆₇, that is, it is located at the 67^{th} energy channel address. It can be seen that the energy channel address corresponding to the pulse amplitude is determined by 5 stages of comparison.

In the example where about 80% of the scintillation pulse energy corresponds to channel addresses below 64, since only about 20% of the pulses are located in the high-energy segment (that is, outside the priori channel address interval) and the first stage comparison of the pulses only requires one comparison, although these scintillation pulses require 1 more stage, a significant reduction in the total number of comparisons for all the measured pulses may still be obtained.

It will be conceived that the multi-stage comparison of the above embodiments may be implemented by modifying the first multi-stage comparison unit shown in FIG.10 or 12, for example, by adding one more delay line.

In some embodiments, there is one given priori channel address interval, and the first-stage comparison has 2 comparison thresholds and are respectively determined according to the amplitude characteristic values of the two endpoint channel addresses of the priori channel address interval.

In an example, for example, still taking the total number of energy channel addresses as N=mⁿ (for example, N=256) as an example, if it is determined according to the pulse characteristics that one priori channel address interval is greater than the first channel address and less than the second channel address, such as 60 to 64 channel addresses, the comparison thresholds of the first stage may be determined according to the priori interval. More specifically, the comparison thresholds may be determined according to the two endpoint channel addresses (such as the 60^{th} channel address and the 64th channel address) of the priori channel address interval, and for example, may be set according to the amplitude characteristic values corresponding to the 60^{th} and 64^{th} channel addresses, for example, as V₆₀ and V₆₄. It will be understood that the priori channel address interval may be determined according to various pulse characteristics. For example, in pulsed neutron saturation logging, assuming that a significant portion of the scintillation pulses corresponding to gamma rays have pulse energies corresponding to channel addresses between 60 and 64, the priori channel address interval is set to 60 to 64 channel addresses, and further, as described above, the comparison thresholds of the first comparison are set to V₆₀ and V₆₄.

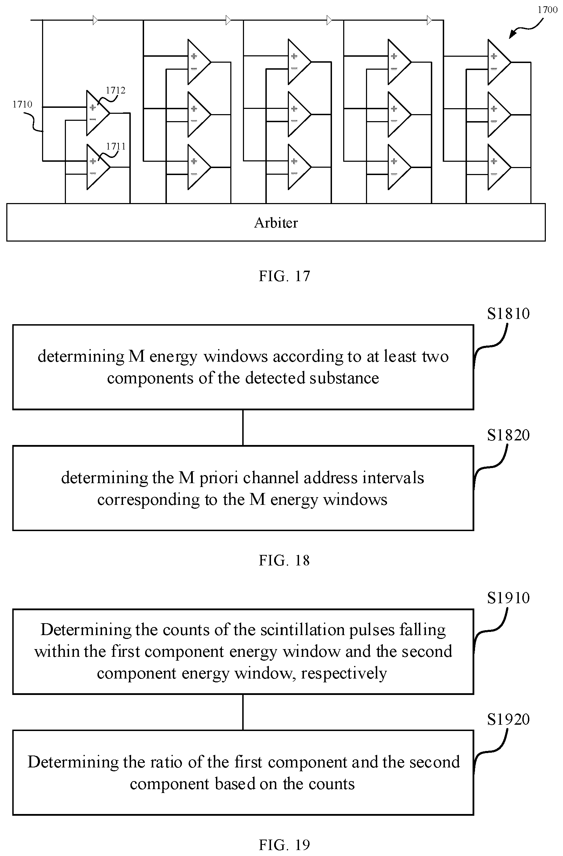

Below, with the second multi-stage comparison unit 1700 shown in FIG.17 as an example, an embodiment of determining the comparison threshold of the first-stage comparison according to a given priori channel address interval will be described. In the embodiment, the non-first-stage comparison is implemented using the quadrisection approach. The second multi-stage comparison unit 1700 shown in FIG.17 is similar to the second multi-stage comparison unit 1600 shown in FIG.16, except that the first-stage comparator subunit 1710 in the second multi-stage comparison unit 1700 shown in FIG.17 has two comparators 1711 and 1712.

If the comparison result of the first-stage comparison is that the pulse energy is located within the priori channel address interval (referred to as the mid-energy segment), that is, the amplitude of the pulse signal is between V₆₀ - V₆₄; then the comparison thresholds of the three comparators in the second-stage comparator subunit may be set to V₆₁, V₆₂, and V₆₃ according to the quadrisection approach; and if the pulse signal may not exceed V₆₁, then the amplitude of the pulse signal is between V₆₀ - V₆₁, that is, it is located in the 61^{st} energy channel address; if the pulse signal exceeds V₆₁ but may not exceed the threshold V₆₂, then the amplitude of the pulse signal is between V₆₁- V₆₂, that is, it is located in the 62^{nd} energy channel address; if the pulse signal exceeds V₆₂but may not exceed the threshold V₆₃, the amplitude of the pulse signal is between V₆₂- V₆₃, that is, it is located in the 63^{rd} energy channel address; if the pulse signal exceeds V₆₃, then the amplitude of the pulse signal is between V₆₃ - V₆₄, that is, it is located in the 64^{th} energy channel address. The energy channel address corresponding to the pulse amplitude is determined by 2 stages of comparison.

In cases where a significant portion of the scintillation pulse energy corresponds to channel addresses located in the priori channel address interval, only two stages of comparison and two comparisons in the first stage of comparison for such pulses are needed in total, which may obtain a significant reduction in total number of comparisons.

If the comparison result of the first-stage comparison is that the pulse energy is located outside the priori channel address interval, i.e., located in the high-energy segment or in the low-energy segment, the quadrisection approach may be used to divide channel address intervals and perform comparison with reference to the embodiment described in FIG.16. Accordingly, the energy channel address corresponding to the pulse amplitude is determined by 4 or 5 stages of comparison.

It will be conceived that the multi-stage comparison of the above embodiment may be implemented by modifying the second multi-stage comparison unit based on the bisection approach shown in FIG.15, for example, by setting two comparators in the first-stage comparator subunit.

It will be conceived that the multi-stage comparison of the above embodiment may be implemented by modifying the first multi-stage comparison unit shown in FIG.8, 10 or 12, for example, by adding delay lines.

It will be conceived that in embodiments where multi-stage comparison is implemented based on delay lines combined with a comparator, for example, if the channel address interval determined by the first-stage comparison is located outside the priori channel address interval, then in the subsequent stages of comparison, comparison thresholds adjacent to said priori channel interval are compared first. The feature may bring about the advantage of further reducing the number of comparisons, because even for pulses which fall outside the priori channel address interval, the closer to the priori channel address interval, the more pulses there are located.

For example, taking the given priori channel address interval as less than the 64^{th} channel address as an example, if the comparison result of the first-stage comparison is that the pulse energy is located in the high-energy segment (that is, outside the priori channel address interval), the amplitude of the pulse signal is located between V₆₄-V₂₅₆; and the comparison thresholds of the three comparators in the second-stage comparator subunit may be set to V₁₁₂, V₁₆₀, and V₂₀₈ according to the quadrisection approach. If the example is implemented through the first multi-stage comparison unit based on delay lines combined with a comparator, then in the second stage of comparison, comparison threshold adjacent to said priori channel interval, i.e., the comparison threshold V₁₁₂ which is adjacent to priori channel interval, i.e., adjacent to V₆₄, will be compared first, with the pulse signal from the delay lines of shorter delay (such as the second delay line). This is because the probability of the pulse falling within the V64-V112 channel address interval is greater than the probability of falling within the other three channel address intervals.

In some embodiments, there are the given priori channel address intervals that are greater than or equal to 2 (M≥2). Accordingly, the number of comparison thresholds of the first-stage comparison is 2M and is determined respectively according to the amplitude characteristic values of the 2M endpoint channel addresses of the priori channel address intervals.

In a further embodiment, when the measured pulse is a scintillation pulse generated by detecting a substance, especially a scintillation pulse generated by detecting a substance based on high-energy radiation, the priori energy channel address may be set based on the energy characteristics, such as energy peak values, of the high-energy radiation emitted by the substance components (elements).

In a further embodiment, the pulse digitization method further comprises determining M priori channel address intervals based on the components of the detected substance. In some embodiments, the components of the detected substance may comprise a first component and a second component. In a specific embodiment, for example, in well logging applications, the components of the detected substance may be, for example, carbon (C) and oxygen (O) components.

In some embodiments of the present invention, as shown in FIG.18, determining M priori channel address intervals specifically comprises:
S1810: determining M energy windows according to at least two components of the detected substance. As mentioned above, the at least two components may be, for example, a first component and a second component. In some specific embodiments, a first component energy window and a second component energy window may be determined according to the first component and the second component. In a specific embodiment, for example, in C/O spectral logging, the two components may be, for example, carbon (C) and oxygen (O) components. The properties of the downhole substance may be determined by the ratio of the number of pulses in the energy range corresponding to the carbon and oxygen elements on the obtained energy spectrum, respectively. Accordingly, the energy spectrum properties of carbon and oxygen elements may be used to implement the pulse digitization method according to the preferred embodiments of the disclosure.

Specifically, according to the accuracy requirements of different application scenarios, and according to the priori information or the properties of carbon and oxygen elements, the energy range of the gamma rays generated by carbon atoms and oxygen atoms are determined respectively, and thus carbon energy windows and oxygen energy windows are obtained.

S1820: determining the M priori channel address intervals corresponding to the M energy windows.

In some embodiments, step S1820 may comprise: determining M amplitude ranges corresponding to the M energy windows; and determining the M priori channel address intervals according to the determined M amplitude ranges.

In some embodiments, the M amplitude ranges corresponding to the M energy windows may be determined in a manner similar to that described in step S110, such as determining the amplitude range corresponding to the first component energy window and determining the amplitude range corresponding to the second component energy window.

In a specific embodiment, for example, in C/O spectral logging, the C pulse amplitude range corresponding to the C energy window and the O pulse amplitude range corresponding to the O energy window may be determined.

In a specific example, a great amount of pulse data generated by γ photons may be collected with a high sampling frequency using high-speed sampling equipment such as an oscilloscope, the pulse data then may be processed, and the energy information and voltage peak information of each pulse may be obtained. By plotting a scatter diagram of the energy and peak values of the pulses and fitting them, theoretically obtaining a linear mapping relationship between energy and peak values.

In further specific examples, the M amplitude ranges corresponding to the M energy windows may be obtained by interpolating according to a lookup table based on energy versus peak values.

In other embodiments, when the channel addresses are energy channel addresses, step S1820 may comprise directly determining the priori channel address intervals corresponding to the M energy windows according to the energy windows and the energy characteristic values corresponding to the energy channel addresses, and correspondingly determining the amplitude ranges corresponding to the priori channel address intervals.

For example, in a specific embodiment, after determining the C pulse amplitude range corresponding to the C energy window and the O pulse amplitude range corresponding to the O energy window, the multiple comparison thresholds of the first-stage comparison in the multi-stage comparison may be set correspondingly with reference to the above, and after performing the first-stage comparison, the comparison threshold of the subsequent stage comparison is dynamically adjusted according to the channel address interval in which the measured pulse falls, which will not be elaborated here.

In addition, in a preferred embodiment, on the basis of pulse digitization, that is, the energy spectrum of all pulses, the carbon-oxygen ratio (C/O ratio) used for C/O spectral logging is further obtained.

Here, in the embodiment shown in FIG.19, the pulse digitization method further comprises:
S1910: determining the counts of the scintillation pulses falling within the first component energy window and the second component energy window, respectively; and
S1920: determining the ratio of the first component and the second component based on the counts.

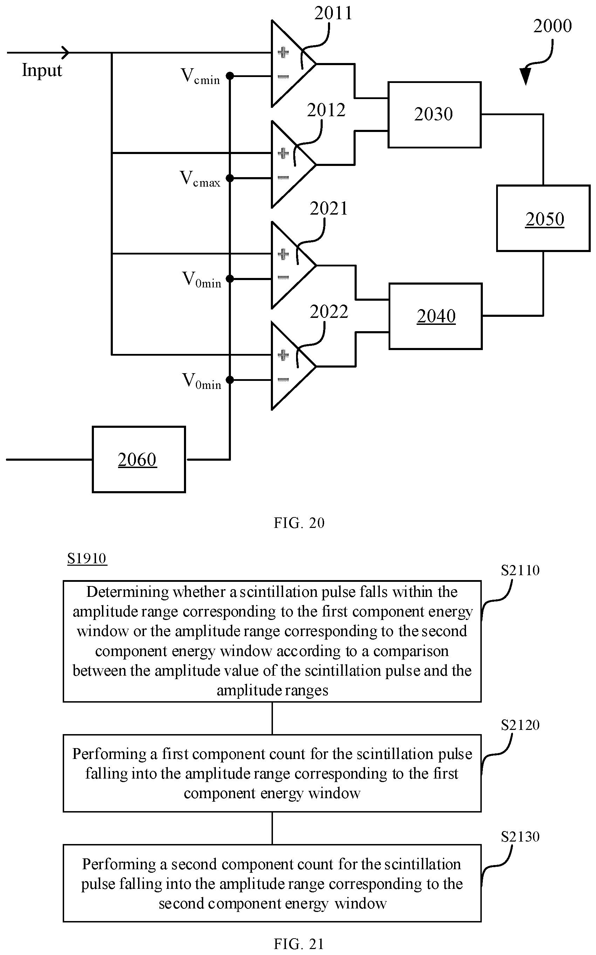

In a specific embodiment, for example, in C/O spectral logging, the carbon-oxygen ratio may be determined by a carbon-oxygen ratio determination unit that is independent of the channel address determination unit, as shown in FIG.20.

In the embodiment shown in FIG.20, the carbon-oxygen ratio determination unit 2000 comprises a first carbon comparator 2011, a second carbon comparator 2012, a first oxygen comparator 2021, a second oxygen comparator 2022, a carbon counter 2030, an oxygen counter 2040, a calculation unit 2050, and an optional calibration unit 2060.

Thus, in this embodiment, as shown in FIG.21, step S1910 may comprise:
S2110: determining whether a scintillation pulse falls within the amplitude range corresponding to the first component energy window or the amplitude range corresponding to the second component energy window according to a comparison between the amplitude value of the scintillation pulse and the amplitude ranges;
S2120: performing a first component count for the scintillation pulse falling into the amplitude range corresponding to the first component energy window; and
S2130: performing a second component count for the scintillation pulse falling into the amplitude range corresponding to the second component energy window.

Specifically, the measured pulse is input in parallel to the first carbon comparator, the second carbon comparator, the first oxygen comparator, and the second oxygen comparator. The first carbon comparator sets the comparison threshold based on the lower limit of the amplitude range corresponding to the C energy window, and the second carbon comparator sets the comparison threshold based on the upper limit of the amplitude range corresponding to the C energy window; and the first oxygen comparator sets the comparison threshold based on the lower limit of the amplitude range corresponding to the O energy window, and the second oxygen comparator sets the comparison threshold based on the upper limit of the amplitude range corresponding to the O energy window.

In some embodiments, the carbon counter is connected to the first carbon comparator and the second carbon comparator; the oxygen counter is connected to the first oxygen comparator and the second oxygen comparator; and the calculation unit is connected to the carbon counter and the oxygen counter, and is used to calculate the carbon-oxygen ratio.

An optional calibration unit 2060 is connected to the negative terminals of the first carbon comparator 2011, the second carbon comparator 2012, the first oxygen comparator 2021, and the second oxygen comparator 2022, and is used to set calibration thresholds.

Here, the C pulse amplitude range corresponding to the C energy window and the O pulse amplitude range corresponding to the O energy window may be determined in the step S1820 as mentioned above, for example, by determining according to the linear mapping relationship or the lookup table, or by determining the amplitude range determined according to the determined priori channel address interval. Thus, four pulse amplitude (peak value) endpoint values corresponding to the endpoints of the carbon energy window and of the oxygen energy window may be obtained, which are expressed as V_{Cmin}, V_{Cmax}, V_{Omin}, and V_{Omax}, for example.

Here, for example, the comparison thresholds of the first carbon comparator 2011, the second carbon comparator 2012, the first oxygen comparator 2021, and the second oxygen comparator 2022 may be set to the four pulse peak endpoint values V_{Cmin}, V_{Cmax}, V_{Omin}, and V_{Omax}, respectively, by using a digital-to-analog converter. Thus, when a measured pulse enters the system, it will be input to the four comparators in parallel; if the measured pulse exceeds V_{Cmin} but does not exceed V_{Cmax}, the carbon counter will increase by 1; if the measured pulse exceeds V_{Omin} but does not exceed V_{Omax}, the oxygen counter will increase by 1; and if neither of the above two conditions is met, neither of the counters needs to make any response.

When all the measured pulses have passed through the system, the C/O value may be obtained by reading and calculating the values of the two counters by means of a calculation unit.

As mentioned before, the embodiments of the disclosure also optionally comprise a step of calibrating the above first carbon comparator 2011, second carbon comparator 2012, first oxygen comparator 2021, and second oxygen comparator 2022.

In actual well logging scenarios, equipment typically needs to operate in environments with varying and generally high temperatures which are often an unavoidable factor affecting electronic device operation. In order to enable the instruments to still obtain relatively accurate data during the downhole process, a calibration unit may be set for the DAC , such as setting an additional DAC channel as input for the calibration unit, which has known the output differences of the DAC at different temperatures based on priori information, and uses them to calibrate the comparison thresholds of the four comparators accordingly. For example, taking the setting of the comparison threshold, such as 3V, with the DAC for setting amplitude endpoints as an example, when the comparison threshold deviates due to temperature changes, such as a deviation of 0.5V, the deviation comparison threshold may be set by the calibration unit, such as by setting the DAC with a deviation of -0.5, thereby correcting the deviation of the carbon comparator and the oxygen comparator.

In the preferred embodiment, on the basis of determining the energy channel address in which each measured pulse falls (such as based on a multi-stage bisection approach or quadrisection approach or the like), the carbon-oxygen ratio spectrum used for C/O spectral logging is determined through the additionally set carbon/oxygen comparators, which effectively shortens the spectrum formation time of the carbon-oxygen ratio.

In an alternative preferred embodiment, it is also conceivable to obtain the carbon-oxygen ratio by counting the pulse counts within the channel address or channel address interval corresponding to the C energy window and the pulse counts within the channel address or channel address interval corresponding to the amplitude range of the O energy window.

Thus, in this embodiment, after determining the energy information of all the measured pulses on all the channel addresses in step S150, such as after generating the energy spectrum of all the energy channel addresses, the counts falling within the C energy window and the O energy window respectively are determined according to the energy channel addresses corresponding to the C energy window and the O energy window. For example, the C energy window corresponds to channel address A-B, and the O energy window corresponds to channel address C-D, and meanwhile, it only needs to calculate the counts within these two channel address intervals to determine the carbon-oxygen ratio.

In addition, as further described below, in the embodiments of the disclosure also methods and devices for determining material composition based on scintillation pulses are also involved, which are independent of or combined with the pulse digitization method in the embodiments of the disclosure.

In further embodiments, the comparison between the amplitude values of the plurality of measured pulses and the amplitude characteristic values of the plurality of channel addresses may be implemented by single-stage comparison.

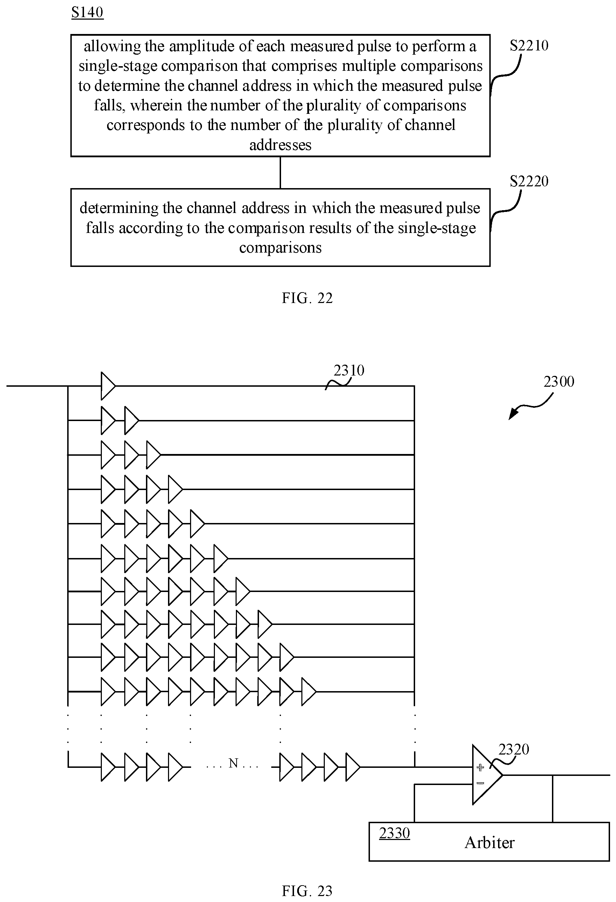

In the embodiment shown in FIG.22, an embodiment of single-stage comparison is shown. Specifically, step S140 may comprise:
S2210: allowing the amplitude of each measured pulse to perform a single-stage comparison that comprises multiple comparisons to determine the channel address in which the measured pulse falls, wherein the number of the plurality of comparisons corresponds to the number of the plurality of channel addresses; and
S2220: determining the channel address in which the measured pulse falls according to the comparison results of the single-stage comparisons.

To implement the above single-stage comparison, the channel address determination unit may comprise or be a single-stage comparison unit.

In some embodiments, the multiple comparisons in the module architecture of a single-stage comparison unit for implementing single-stage comparison may be implemented by a plurality of comparators, which number is greater than or equal to the number of the plurality of channel addresses.

In other embodiments, it may also be implemented by a comparator architecture with fewer comparators than the number of channel addresses, or even a single comparator architecture, for example, by using different delays of delay lines in combination with an adjustable comparator.

FIG.23 shows a schematic embodiment of a first single-stage comparison unit 2300 for implementing single-stage comparison. The first single-stage comparison unit 2300 comprises a plurality of parallel delay lines 2310 connected to a measured pulse input, an adjustable comparator 2320 connected to the delay lines, and an arbiter 2330 operatively connected to the adjustable comparator. Preferably, the delay times of at least some of the delay lines are different, and in the embodiment shown in FIG.23, the delay times of all the delay lines are all different. Preferably, the number of the plurality of parallel delay lines is greater than or equal to the number of the plurality of channel addresses. In the illustrated embodiment, N parallel delay lines 2310 are shown.

For example, if the total number of energy channel addresses is N=256, then the number of N parallel delay lines 2310 corresponds to the total number of energy channel addresses. Thus, a single-stage N-division approach may be used to determine the channel address in which the measured pulse falls. Here, the number of comparisons in the single-stage comparison is the same as the number of energy channel addresses.

Specifically, the input pulses may be input to the positive input terminal of all the 256 comparators by passing through 256 delay lines with different delays. For each comparator, the threshold voltage for the comparison is set by the arbiter. The arbiter sequentially assigns comparison thresholds for the negative input terminals of the comparators according to the amplitude characteristic values corresponding to the energy channel address, such as V₁, V₂, V₃, ..., V₂₅₆. After 256 comparisons, the specific channel address in which the energy of the input measured pulse falls may be obtained.

This embodiment simplifies the dynamic threshold spectrum formation solution using multi-stage comparison, by setting only one stage of comparison. Compared with the dynamic threshold spectrum formation solution, it may reduce or avoid errors introduced by the differences among the comparators to some extent. As an explanation and not as a limitation, for the comparison of pulses in the dynamic threshold spectrum formation solution using multi-stage comparison, due to the differences between comparators, errors may be introduced into the comparison of pulse peaks, which will ultimately affect the accuracy of the formed energy spectrum.

As mentioned before, in some embodiments, the comparisons in the module architecture of the single-stage comparison unit for implementing single-stage comparison may be implemented by multiple comparators.

Although not shown in the drawings, it is conceivable to set N parallel comparators, where N is greater than or equal to the number of energy channel addresses. Preferably, the number of comparators is the same as the number of energy channel addresses.

For example, taking the total number of channel addresses as 256 as an example, 256 parallel comparators are set, for example, the amplitude characteristic values corresponding to the energy channel addresses (such as the endpoint values of the pulse peak intervals corresponding to the energy channel addresses) are provided as comparison thresholds for the respective comparators by using the corresponding DACs.

As mentioned above, in the embodiments of the disclosure, the channel address interval in which each measured pulse falls may also be pre-determined based on time parameters.

In a further specific embodiment, time over threshold (TOT) may be used in combination with dynamic comparison thresholds to count the channel address in which a pulse, such as a scintillation pulse, falls.

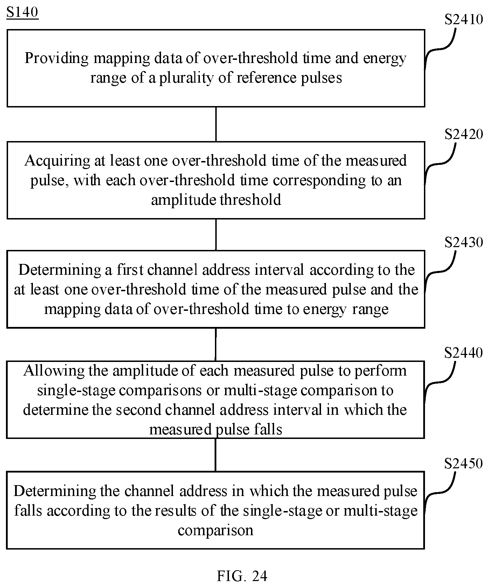

In a specific embodiment, as shown in FIG.24, the step S140 may comprise:
S2410: providing mapping data of over-threshold time to energy range of a plurality of reference pulses.

In a specific embodiment, the mapping data of the over-threshold time to the energy range is a look-up table of over-threshold time to energy range.

In some embodiments, the plurality of reference pulses in step S2410 are the plurality of reference pulses mentioned in step S110 or a portion thereof, or the plurality of reference pulses in step S2410 and step S110 partially overlap.

In other preferred embodiments, the plurality of pulses in step S2410 are different from the reference pulses mentioned in step S110. For example, they are shaped pulses from the reference pulses mentioned in step S110 or pulses collected in other way.

Here, the lookup table corresponding to the pulse energy range and TOT may be obtained based on priori information.

For example, a comparison threshold slightly larger than the maximum amplitude of the noise, such as a threshold voltage Vₜ₁, may be set for the comparator, and a great number of pulses with known energies pass through the channel, and the time value at which each pulse is over the threshold, that is, the time over threshold (TOT), is recorded. Through priori information, for example, a look-up table of the pulse energy range corresponding to the TOT under this threshold voltage Vₜ₁ may be obtained. As an addition or an alternative, other comparison thresholds may be set for the comparator, such as threshold voltages Vₜ₂, Vₜ₃, etc., and the time over threshold (TOT) under these comparison thresholds, such as threshold voltages, is obtained accordingly. Therefore, based on priori information, the correspondence between the TOT and the energy range may be obtained.

As an explanation and not as a limitation, since the pulse signals typically have slightly varied pulse widths, and if the pulse is shaped, these variations in pulse widths may become even smaller, and therefore, time over threshold (TOT) values also show only slight variations when pulse signals cross this threshold voltage, resulting in like TOT potentially corresponding to multiple pulse energies, namely a certain energy range.

S2420: acquiring at least one over-threshold time of the measured pulse, with each over-threshold time corresponding to an amplitude threshold.

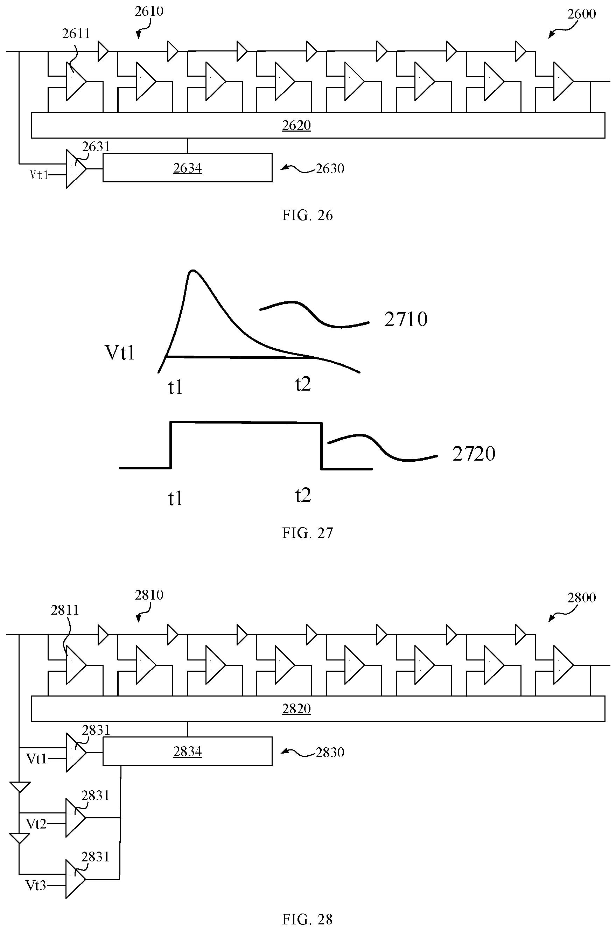

As mentioned before, step S140 may be implemented by a channel address determination unit. FIGS. 26 and 28 show channel address determination units 2600 and 2800 that may be used to implement the embodiment shown in FIG.24, which especially comprise a time over threshold unit connected to a measured pulse input.

As shown in FIG.26, the channel address determination unit 2600 may comprise a comparison unit 2610 connected to a measured pulse input, a time over threshold unit 2630 connected to the measured pulse input, and an arbiter 2620 operatively connected to the time over threshold unit 2630 and the comparison unit 2610.

In the embodiment shown in FIG.26, the comparison unit 2610 comprises a physical multi-stage comparator subunit 2611, and each comparator subunit 2611 comprises a single physical adjustable comparator, which may perform bisection comparisons, for example, in subsequent single-stage or multi-stage comparisons. It will be conceived that the comparison unit shown in FIG.26 may be set or modified with reference to the single-stage or multi-stage comparison unit structures described in other embodiments of the disclosure, such as the comparison unit structures shown in FIGS. 8, 10, 12-17, and 23. In particular, when the comparison unit shown in FIG.26 is used to implement multi-stage comparison, it may comprise physical multi-stage comparator subunits, or comprise a plurality of parallel delay lines with different delays and an adjustable comparator connected to the delay lines for implementing multi-stage comparison, all of which fall within the scope of the disclosure.

Continuing to refer to FIG.26, the time over threshold unit 2630 may comprise a time over threshold comparator 2631 and a time over threshold (TOT) acquisition processor 2634 connected to the time over threshold comparator 2631.

Referring to FIGS. 26 and 27, the time over threshold comparator 2631 may set a comparison threshold, in this case an amplitude threshold, such as a voltage threshold Vₜ₁. Accordingly, by inputting measured pulse 2710 into the time over threshold comparator 2631, when the measured pulse crosses the amplitude threshold, including crossing from below to above and from above to below, the time over threshold comparator 2631 will output transition signals 2720, such as from low level 0 to high level 1 and from high level 1 to low level 0. Accordingly, the time of generation of the transition signal, such as t₁ and t₂, may be determined by a time determination unit, such as a TDC. Thus, the TOT acquisition processor 2634 may determine a time interval between two transition moments from the same time over-threshold comparator 2631, such as t₂-t₁, to determine the TOT under the amplitude threshold, such as the voltage threshold Vₜ₁.

In another embodiment, a plurality of TOTs may be determined based on a plurality of amplitude thresholds.

As shown in FIG.28, the channel address determination unit 2800 may comprise a comparison unit 2810 connected to a measured pulse input, a time over threshold unit 2830 connected to the measured pulse input, and an arbiter 2820 operatively connected to the time over-threshold unit 2830 and the comparison unit 2810.

Continuing to refer to FIG.28, the time over threshold unit 2830 may comprise a plurality of (such as 3) time over threshold comparators 2831 and a time over threshold (TOT) acquisition processor 2834 connected to the time over threshold comparators 2831.

Here, the time over-threshold unit 2830 shown in FIG.28 differs from the time over-threshold unit 2630 shown in FIG.26 in that the time over-threshold unit 2830 comprises multiple (such as 3) time over-threshold comparators 2831, which may set different comparison thresholds, in such case that there are amplitude thresholds, such as voltage thresholds Vₜ₁, Vₜ₂, and Vₜ₃. Thus, in the embodiment shown in FIG.28, multiple (such as 3) TOTs may be determined according to multiple amplitude thresholds.

S2430: determining a first channel address interval according to the at least one over-threshold time of the measured pulse and the mapping data of over-threshold time to energy range.

In this embodiment, the channel addresses may be energy channel addresses.

Thus, based on the mapping data such as a lookup table provided in the above step S2410, the energy range corresponding to the TOT determined in step S2420 may be determined, and then, based on the energy characteristic values corresponding to the energy channel addresses set in step S120, the first channel address interval corresponding to the TOT, which is referred to as a TOT channel address interval here, is determined.

In a specific example, the arbiter 2620 and/or the TOT acquisition processor 2634 may set the comparison threshold for the time over threshold comparator 2631, such as the threshold voltage, to Vₜ₁. After a measured pulse is input to the time over threshold comparator 2631 crossing the threshold Vt1, the TOT acquisition processor 2634 determines the TOT value at which the pulse signal passes cross the threshold. The arbiter 2620 will determine the energy range of the pulse corresponding to the TOT value according to the obtained lookup table, thereby determining the first channel address interval corresponding to the TOT. For example, the two energy values at the end points of the energy range correspond to two energy channel addresses, and the energy segment between the two energy channel addresses is the first channel address interval reduced relative to the total number of channel addresses. More specifically, the comparison threshold, such as the threshold voltage Vₜ₁, of the time over threshold comparator 2631 is, for example, a threshold voltage slightly larger than the maximum amplitude of the noise signal. According to determined time over threshold value (i.e., TOT value) of measured pulse, it make look up the table to obtain energy range, for example range [3.48MeV, 3.66MeV], corresponding to the TOT value and it is further determined that the two energy values correspond to e.g., 100^{th} energy channel and 105^{th} energy channel respectively, and thus determined energy channel interval will be channel addresses 100-105.

As mentioned before, in step S2420, the plurality of TOTs may be determined according to multiple amplitude thresholds. Accordingly, in step S2430, the first channel address interval (TOT channel address interval) may be determined according to the intersection and/or subset of the energy ranges corresponding to the plurality of TOTs. In the specific embodiment shown in FIG.28, the first channel address interval (TOT channel address interval) may be determined according to the intersection of the energy ranges corresponding to the plurality of (such as 3) TOTs determined by multiple (such as 3) voltage thresholds Vₜ₁, Vₜ₂, and Vₜ₃. In a specific example, for example, the energy channel address interval corresponding to the TOT determined by the voltage threshold Vₜ₁ is from the 100^{th} energy channel address to the 120^{th} energy channel address, the energy channel address interval corresponding to the TOT determined by the voltage threshold Vₜ₂ is from the 90^{th} energy channel address to the 110^{th} energy channel address, and the energy channel address interval corresponding to the TOT determined by the voltage threshold Vt3 is from the 88^{th} energy channel address to the 105^{th} energy channel address. Then, the first channel address interval (TOT channel address interval) may be finally determined as the 100^{th} to 105^{th} energy channel address according to the intersection of the energy ranges or channel address intervals.

S2440: allowing the amplitude of each measured pulse to perform single-stage comparisons or multi-stage comparison to determine the second channel address interval in which the measured pulse falls.

In the embodiments of the disclosure, each stage of comparison defines at least two second channel address intervals by at least one comparison threshold, and the comparison thresholds of the single-stage comparison or the first-stage comparison threshold of the multi-stage comparison is determined based on the first channel address interval.

S2450: determining the channel address in which the measured pulse falls according to the results of the single-stage or multi-stage comparison.

The first channel address interval (TOT interval) determined according to the foregoing step S2430 may be used to dynamically determine the comparison thresholds for subsequent single-stage or multi-stage comparison. The comparison approach described in this embodiment may, for example, refer to the single-stage or multi-stage comparison approaches described in other embodiments. In some embodiments, the comparison may be based on a single comparator or a plurality of parallel adjustable comparators. In other embodiments, the comparison may be based on a combination of delay lines and adjustable comparator(s).

For example, using the aforementioned 100^{th}-105^{th} energy channel address as an example, since the number of channel addresses within the first channel address interval is relatively small, further comparison then may be performed directly, for example the intermediate energy channel address may be determined as the 102^{nd} energy channel address, and if the amplitude of the pulse signal exceeds the amplitude characteristic value corresponding to the 102^{nd} energy channel address, then it is located in the 103^{rd}-105^{th} energy channel addresses; and then, the amplitude characteristic value corresponding to the 104^{th} energy channel address is used as the comparison threshold; and if it is greater than the comparison threshold, it is located in the 105^{th} energy channel address, otherwise it is located in the 103^{rd}-104^{th} energy channel addresses; and then, the amplitude characteristic value corresponding to the 103^{rd} energy channel address is used as the comparison threshold; and if the pulse signal exceeds the comparison threshold, it is located in the 104^{th} energy channel address, otherwise it is located in the 103^{rd} energy channel address.

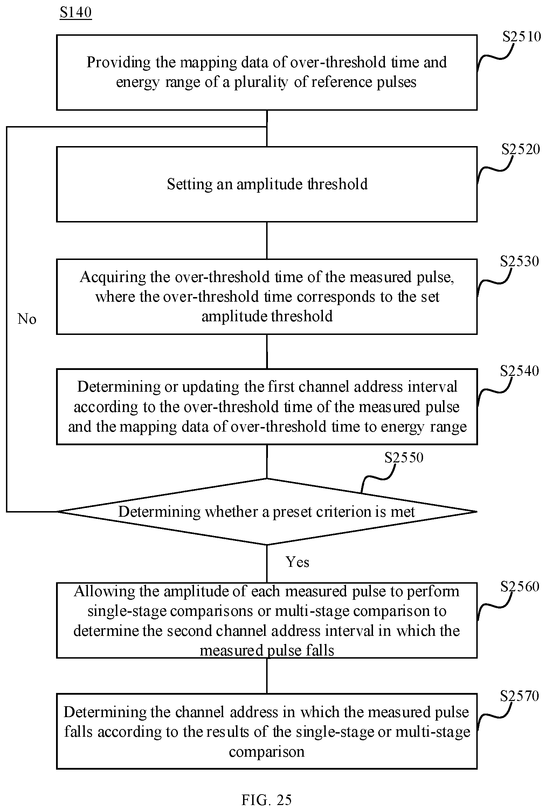

As an alternative to the embodiment shown in FIG.24, the first channel address interval may be dynamically pre-determined according to preset criteria. In a specific embodiment, referring to FIG.25, the step S140 may comprise:
S2510: providing the mapping data of over-threshold time to energy range of a plurality of reference pulses.

In step S2510, reference may be made to step S2410 in the embodiment shown in FIG.24.

As shown in FIG.25, the step S140 further comprises performing the following steps in a loop:
S2520: setting an amplitude threshold,
S2530: acquiring the over threshold time of the measured pulse, wherein the over threshold time corresponds to the set amplitude threshold,
S2540: determining or updating the first channel address interval according to the over threshold time of the measured pulse and the mapping data of over threshold time to energy range, and
S2550: determining whether a preset criterion is met.

If yes, exiting the loop, and if no, continuing to perform the loop steps.

In some embodiments, the above loop steps may be implemented using the channel address determination unit 2800 shown in FIG.28. As mentioned above, the time over threshold unit 2830 may comprise a plurality of (such as 3) time over threshold comparators 2831 and a time over-threshold (TOT) acquisition processor 2834 connected to the time over threshold comparators 2831.

Accordingly, there are a plurality of time over-threshold comparators with different amplitude thresholds.

In some embodiments, the preset criterion is that the number of set amplitude thresholds reaches a preset quantity. For example, when the set amplitude thresholds are greater than or equal to 3, the loop is exited, and subsequent steps are performed according to the latest determined first channel address interval.

In other embodiments, the preset criterion is that the number of channel addresses within the first channel address interval is less than a preset quantity. For example, when the number of channel addresses within the first channel address interval is relatively small, for example, less than 5, the loop may be exited, and subsequent steps are performed according to the latest determined first channel address interval.

After exiting the loop, the step S140 may further comprise:
S2560: allowing the amplitude of each measured pulse to perform single-stage comparisons or multi-stage comparison to determine the second channel address interval in which the measured pulse falls.

In a specific embodiment, each stage of comparison defines at least two second channel address intervals through at least one comparison threshold, and the comparison thresholds of the single-stage comparison or the first-stage comparison threshold(s) of the multi-stage comparison are determined according to the first channel address interval.

S2570: determining the channel address in which the measured pulse falls according to the results of the single-stage or multi-stage comparison.

Similar to step S2450, the comparison approach described in step S2570 may refer to the single-stage or multi-stage comparison approaches described in other embodiments, for example. In some embodiments, the comparison may be based on a single adjustable comparator or multiple parallel adjustable comparators. In other embodiments, the comparison may be based on a combination of delay lines and an adjustable comparator.

In the multiple embodiments shown in Figures 24 to 28, by using time over threshold (TOT) combined with dynamic comparison thresholds to count the channel addresses in which pulses, such as scintillation pulses, fall, the solution is advantageous in the scenario where high-precision energy spectra are drawn, effectively shortening the spectrum formation time and changing the order of the voltages being compared with the pulse, which overall accelerates acquisition of comparison results. Further, in the embodiment shown in FIG.25 or in the embodiment shown in FIG.25 in combination with FIG.28, the energy channel address range is pre-screened, which further improves the spectrum formation efficiency and effectively reduces the comparison time.

Continuing to refer to FIG.1, the pulse digitization method 100 may also comprise step S150: determining the energy information of the plurality of measured pulses based on the pulse counts within each channel address and the amplitude to energy mapping data or the energy characteristic values of the energy channel addresses.

More specifically, step S150 comprises: generating an energy spectrum of the plurality of measured pulses.

In some embodiments, when the channel addresses set in step S120 are energy channel addresses, the energy spectrum may be obtained directly by plotting a histogram based on the scintillation pulse counts statistically obtained within each energy channel address.

In an alternative embodiment, when the channel addresses set in step S120 are amplitude channel addresses, an amplitude distribution may be obtained by plotting a histogram based on the scintillation pulse counts statistically obtained within the amplitude channel addresses, for example. Next, the energy range corresponding to each amplitude channel address may be determined according to the amplitude to energy mapping data, such as the amplitude to energy lookup table, and then the amplitude distribution may be converted into energy information, such as an energy spectrum, accordingly.

In the embodiments of the disclosure, prior to counting the measured pulses, a threshold calibration step S2930 may also be comprised.

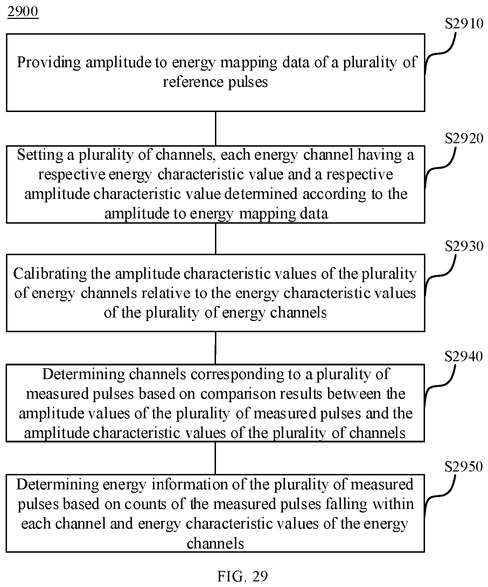

Optionally, when the set channel addresses are energy channel addresses, as shown in FIG.29, the pulse digitization method may also comprise a calibration step S2930, that is: calibrating the amplitude characteristic values of the plurality of energy channel addresses relative to the energy characteristic values of the plurality of energy channel addresses.

It will be understood that steps S2910, S2920, S2940, and S2950 in the embodiment shown in FIG.29 may refer to steps S110, S120, S140, and S150 in the embodiment shown in FIG.1, respectively, which will not be elaborated here.

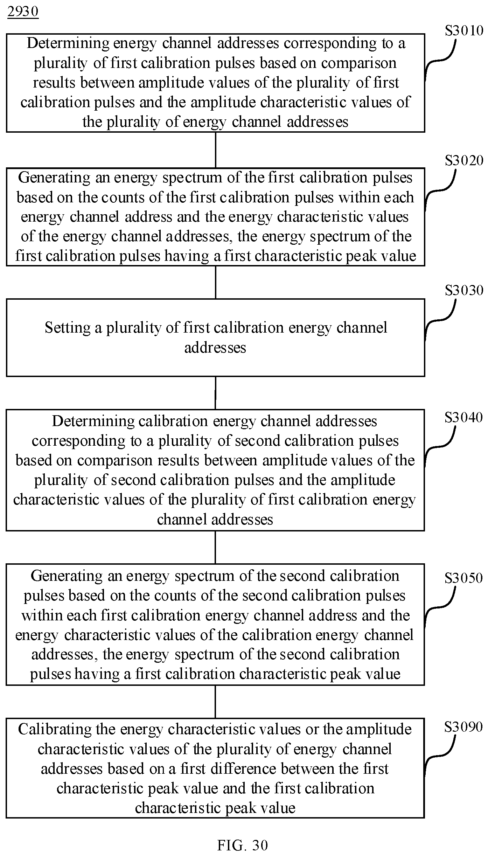

In the embodiment shown in FIG.30, the step S2930 may comprise:
S3010: determining energy channel addresses corresponding to a plurality of first calibration pulses based on comparison results between amplitude values of the plurality of first calibration pulses and the amplitude characteristic values of the plurality of energy channel addresses;
S3020: generating an energy spectrum of the first calibration pulses based on the counts of the first calibration pulses within each energy channel address and the energy characteristic values of the energy channel addresses, the energy spectrum of the first calibration pulses having a first characteristic peak value;
S3030: setting a plurality of first calibration energy channel addresses;
   wherein, the energy range corresponding to the plurality of first calibration energy channel addresses is smaller than the energy range corresponding to the plurality of energy channel addresses, and each calibration energy channel address has its respective energy characteristic value and a respective amplitude characteristic value determined according to the amplitude to energy mapping data;
S3040: determining calibration energy channel addresses corresponding to a plurality of second calibration pulses based on comparison results between amplitude values of the plurality of second calibration pulses and the amplitude characteristic values of the plurality of first calibration energy channel addresses;
S3050: generating an energy spectrum of the second calibration pulses based on the counts of the second calibration pulses within each first calibration energy channel address and the energy characteristic values of the calibration energy channel addresses, the energy spectrum of the second calibration pulses having a first calibration characteristic peak value; and
S3090: calibrating the energy characteristic values or the amplitude characteristic values of the plurality of energy channel addresses based on a first difference between the first characteristic peak value and the first calibration characteristic peak value.

In some embodiments, the calibration of the energy channel address may be implemented by setting different channel address division approaches, which may be achieved by different working modes. One of modes, for example, is a normal working mode or a calibration mode similar to the normal working mode, where "normal" energy channel addresses, also referred to as energy channel addresses to be calibrated, which may be used for measured pulses. The further calibration mode may operate under calibration energy channel addresses with energy range smaller than "normal" energy channel addresses. For ease of distinction, the former one may be referred to as a first calibration mode, and the latter may be referred to as a second calibration mode.

In some embodiments of the disclosure, the calibration steps use a single characteristic peak value. A specific example of implementing calibration using a single characteristic peak value is described below with reference to the embodiment shown in FIG.30.

Specifically, as shown in steps S3010 and S3020, operation may be performed in the first calibration mode similar to normal working mode according to previously described approaches of obtaining energy information through digitization. It may run normally for a working cycle in the required working environment, obtaining energy spectrum with 256 energy channel addresses representing energy range within 9MeV, where there may be a clearly identifiable characteristic peak in low energy segment of this spectrum (peak formed by pulses from γ photons produced by H (hydrogen) atoms, hereinafter referred to as H peak), thus obtaining corresponding first characteristic peak value. Optionally, channel E_{H1} corresponding to H peak on spectrum obtained under this first calibration mode may be acquired.

In some embodiments, in step S3030, the plurality of first calibration energy channel addresses may be set according to the first characteristic peak value in such a way that the first characteristic peak value falls within the energy range corresponding to the first calibration energy channel addresses.

In a further embodiment, in step S3030, the plurality of first calibration energy channel addresses may be set according to the first characteristic peak value and a preset contraction ratio, so as to contract the energy range corresponding to the plurality of energy channel addresses by the preset contraction ratio, thereby obtaining the energy range corresponding to the plurality of first calibration energy channel addresses, in such a way that the first characteristic peak value falls within the energy range corresponding to the first calibration energy channel addresses.

In a further embodiment, in step S3030, the first characteristic peak value is a midpoint value of the energy range corresponding to the first calibration energy channel addresses.

In a further embodiment, in step S3030, the number of calibration energy channel addresses may correspond to the number of energy channel addresses to be calibrated, such as both being 256 channel addresses.

In the specific embodiments steps S3030 to S3050 are described below. For example, it may set the second calibration mode, in which second calibration mode, system's underlying logic is same as first calibration mode similar to normal working mode, but difference is that in second calibration mode, energy range corresponding to multiple first calibration energy channel addresses is smaller than energy range corresponding to the plurality of energy channel addresses to be calibrated. For example, referring to the specific example described above, the energy range corresponding to the plurality of first calibration energy channel addresses is no longer the original 0-9 MeV, but is determined by the first characteristic peak value and a predetermined contraction ratio. For example, taking the 900 keV energy range centered at the first characteristic peak value of 2.25 MeV, that is 1.8 MeV to 2.7 MeV, with the contraction ratio herein being 1/10. Accordingly, the center of the energy range corresponding to the plurality of first calibration energy channel addresses is the theoretical energy value 2.25 MeV of the H-peak, and the range size is set to 900 keV, which range is one-tenth of the original range of 0-9 MeV. The number of energy channel addresses remains 256. Correspondingly, the current energy range of 1.8 MeV to 2.7 MeV may be divided equally into 256 intervals. According to this range, the energy (characteristic value) corresponding to each channel address on the energy spectrum is redivided, such that the corresponding pulse peak value or maximum amplitude characteristic value is found according to the energy corresponding to each of the redivided channel addresses. Here, it may work reference to the approaches of obtaining energy information digitally as described before, such that the system may operate for a working cycle in the second calibration mode. Herein, an energy spectrum with higher precision but a narrower energy range will be obtained. The energy range of the energy spectrum corresponding to these first calibration energy channel addresses comprises the range where H peak is located, and a more accurate energy value (that is, the first calibration characteristic peak value) where the H-peak is located may be obtained through the said energy spectrum, and first calibration channel E_{H2} of H peak herein will be recorded.

Subsequently, as described in step S3090, the energy characteristic values or amplitude characteristic values of the plurality of energy channel addresses may be calibrated based on a first difference between the first characteristic peak value and the first calibration characteristic peak value.

As an example, it may be determined that, in the first calibration mode similar to the normal working mode, the energy corresponding to the H-peak is 9×E_{H1}/256 MeV (denoted as Energy_{H1}), while in the second calibration mode, the energy corresponding to the H-peak is (1.8+0.9×E_{H2}/256)MeV (denoted as Energy_{H2}) (with the range being 1.8 MeV to 2.7 MeV, and in this range, the channel addresses being arranged from 0 to 255, such that the initial value 1.8 MeV should be added). The proportional difference in the occurrence of the H-peak is k=Energy_{H1}/Energy_{H2}.

In the embodiment shown in FIG.30, a linear function y=kx may be used for calibration. Therefore, the energy value represented by each energy channel address in the first calibration mode, which is similar to the normal working mode, should be 1/k times the original value. That is, the energy value represented by each energy channel address in the future's normal working mode for the measured pulses should be 1/k times the original value. Accordingly, different forms of calibration may be performed. In an embodiment, the energy characteristic value corresponding to the energy channel addresses to be calibrated may be adjusted to 1/k times the original value. In a further embodiment, the amplitude characteristic value corresponding to the energy channel addresses to be calibrated may be adjusted to k times the original value. For example, the voltage threshold corresponding to the energy channel address to be calibrated is adjusted to k times the original value. Thus, relative calibration of energy characteristic values and amplitude characteristic values of energy channel addresses are completed, such that the degree of shift in the formed energy spectrum is reduced.

It will be understood that more than one characteristic peak value may be used for calibration. Accordingly, the calibration function comprises, but is not limited to, a linear function y=kx, and the accuracy of the calibration may also be improved by increasing characteristic peak values used for calibration and corresponding parameters or orders in function model.

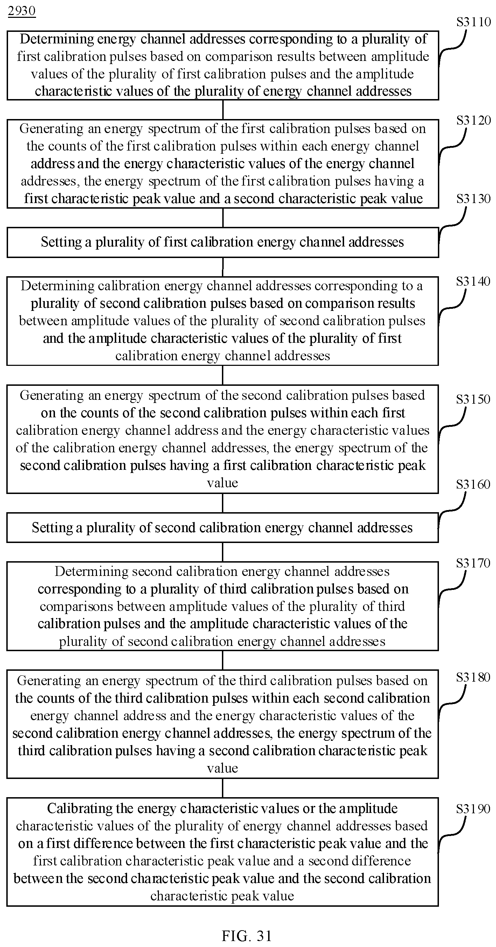

In the embodiment shown in FIG.31, the step S2930 may comprise:
S3110: determining energy channel addresses corresponding to a plurality of first calibration pulses based on comparison results between amplitude values of the plurality of first calibration pulses and the amplitude characteristic values of the plurality of energy channel addresses;
S3120: generating an energy spectrum of the first calibration pulses based on the counts of the first calibration pulses within each energy channel address and the energy characteristic values of the energy channel addresses, the energy spectrum of the first calibration pulses having a first characteristic peak value and a second characteristic peak value;
S3130: setting a plurality of first calibration energy channel addresses;
   wherein, the energy range corresponding to the plurality of first calibration energy channel addresses is smaller than the energy range corresponding to the plurality of energy channel addresses, and each calibration energy channel address has its respective energy characteristic value and a respective amplitude characteristic value determined according to the amplitude to energy mapping data;
S3140: determining calibration energy channel addresses corresponding to a plurality of second calibration pulses based on comparison results between amplitude values of the plurality of second calibration pulses and the amplitude characteristic values of the plurality of first calibration energy channel addresses;
S3150: generating an energy spectrum of the second calibration pulses based on the counts of the second calibration pulses within each first calibration energy channel address and the energy characteristic values of the calibration energy channel addresses, the energy spectrum of the second calibration pulses having a first calibration characteristic peak value;
S3160: setting a plurality of second calibration energy channel addresses;
   wherein, the energy range corresponding to the plurality of second calibration energy channel addresses is smaller than the energy range corresponding to the plurality of energy channel addresses, each second calibration energy channel address having its respective energy characteristic value and a respective amplitude characteristic value determined according to the amplitude to energy mapping data;
S3170: determining second calibration energy channel addresses corresponding to a plurality of third calibration pulses based on comparisons between amplitude values of the plurality of third calibration pulses and the amplitude characteristic values of the plurality of second calibration energy channel addresses;
S3180: generating an energy spectrum of the third calibration pulses based on the counts of the third calibration pulses within each second calibration energy channel address and the energy characteristic values of the second calibration energy channel addresses, the energy spectrum of the third calibration pulses having a second calibration characteristic peak value; and
S3190: calibrating the energy characteristic values or the amplitude characteristic values of the plurality of energy channel addresses based on a first difference between the first characteristic peak value and the first calibration characteristic peak value and a second difference between the second characteristic peak value and the second calibration characteristic peak value.

In the embodiment shown in FIG.31, steps S3110-S3140 may refer to steps S3010-3040.

In step S3150, the energy spectrum of the first calibration pulses also has a second characteristic peak value. Accordingly, the second calibration characteristic peak value may be obtained in steps S3160-3180. Further, in step S3190, the energy channel addresses will be calibrated based on the differences between the two characteristic values and their calibrated values.

Accordingly, in the embodiment shown in FIG.31, in step S3170, the plurality of second calibration energy channel addresses may be set according to the second characteristic peak value, such that the second characteristic peak value falls within the energy range corresponding to the second calibration energy channel addresses.

In a further embodiment, in step S3170, the plurality of second calibration energy channel addresses may be set according to the second characteristic peak value and a preset contraction ratio, so as to contract the energy range corresponding to the plurality of energy channel addresses by the preset contraction ratio, thereby obtaining the energy range corresponding to the plurality of second calibration energy channel addresses, in such a way that the second characteristic peak value falls within the energy range corresponding to the second calibration energy channel addresses.

In a further embodiment, in step S3170, the second characteristic peak value is a midpoint value of the energy range corresponding to the second calibration energy channel addresses.

In a further embodiment, in step S3170, the number of second calibration energy channel addresses may correspond to the number of energy channel addresses to be calibrated, such as both being 256.

As an example, when using y=kx+b, y=ax²+bx, or a similar function as the mathematical model for calibration, two sets of corresponding data may be used to solve for the two unknown parameters in the model.

Since two calibration working modes similar to the second calibration working mode described above may be set, correspondingly, there may be a first calibration working mode similar to the normal working mode, and a second and a third calibration working modes. For example, the second calibration mode may also be referred to as the H calibration mode, and the newly added third working mode can be named the C calibration mode (a peak formed by pulses generated by gamma photons produced by C atoms, hereinafter referred to as C peak). Similar to the H calibration mode, in the C calibration mode, the energy range of 900 keV centered at the second characteristic peak value, such as the C peak value (4.43 MeV), is used as the energy range corresponding to the plurality of second calibration energy channel addresses, and the energy corresponding to the C peak is obtained, denoted as Energy_{C2}. Meanwhile, the energy corresponding to the C peak obtained in the first calibration mode under the similar normal working mode is denoted as Energy_{C1}. Substitute (Energy_{C2}, Energy_{C1}) and (Energy_{H2}, Energy_{H1}) in the form of (x, y) into the determined function model, the unknown parameters may be obtained, and the expression of the function y=f(x) is obtained. Since there is a certain functional relationship between the pulse peak value and the pulse energy, which is E=g(V), let the amplitude characteristic value before calibration, such as the threshold voltage, be V₁, and the energy (characteristic value) theoretically corresponding to V₁ on the energy spectrum before calibration be E₁, then the actual energy value corresponding to V₁ should be E₂, and thus it can be known that E₂=g(V1) and E₁=f(E₂); let the threshold voltage after calibration be V₂, and the energy corresponding to V₂ on the energy spectrum after calibration is E₁, that is, E₁=g(V₂), accordingly g(V₂)=f(E₂)=f(g(V₁)), that is, V₂=g⁻¹(f(g(V₁))).

Although the document shows embodiments for performing calibration based on one or two characteristic peak values, if needed, the parameters in the mathematical model may be further increased, and the number of characteristic peak values used for calibration may also be increased. For example, a characteristic peak of a further element may be taken too, with its accurate energy spectrum being obtained, such that the above steps may be repeated to realize the calibration.

Compared with traditional MVT methods, which are suitable for sampling known pulses, and whose thresholds are determined according to the energy range of known pulses, the digitization method described in the above embodiments of the disclosure may sample unknown pulses by dynamically processing the pulses or dynamically setting the thresholds, and by combining them with the set thresholds, and may categorize unknown pulses into corresponding energy channel addresses without fitting calculations.

Compared with the traditional MVT methods, the digitization method of the embodiments of the disclosure may obtain pulse energy spectrum without fitting pulse waveform through solving equation sets to obtain function curves during pulse signal processing, simplifying pulse energy acquisition process, and may save more hardware resources for the limited FPGA resources, reducing FPGA power consumption, improving chip's high temperature tolerance. The prior art MVT was to collect the voltage values of pulses through various channels, and then fit the pulse waveform through sampling points, and then calculate the energy value of the pulse by integration, and finally draw the energy spectrum, while the solution of the disclosure is that each channel directly forms the spectrum by passing the input pulse voltage through several comparators and/or gates and/or delay lines, without need for fitting, such that it may determine in which channel address the pulses fall in according to the output values of the comparator(s).

The conventional MVT method with fixed threshold sampling, due to having fixed numbers and values of thresholds, only performs well for specific energy ranges. Because MVT needs to fit scintillation pulses, it needs to collect the precise time corresponding to each point. Therefore, it needs a large number of time-to-digital converters (TDCs). The embodiments of the disclosure greatly reduce or eliminate TDCs by counting scintillation pulses according to energy channel addresses, which makes the system simpler and more widely applicable.

Due to complex fitting calculations required in traditional MVT method, the system cannot process new pulses for a specific time period after each pulse ends - this is known as the system dead time. Embodiments of this disclosure bypass the complex calculation process of pulse waveform fitting, and instead obtain energy spectrum directly through simple threshold comparisons and lookup table operations, greatly reducing the dead time in acquisition circuit operation. As a result, the digitization method in the embodiments of this disclosure has either no dead time or very short dead time, enabling essentially continuous pulse processing.

In some embodiments of the disclosure, it may dynamically process the amplitude of the measured pulse and determine the channel address in which each measured pulse falls, which implements a solution for rapid pulse shaping.

In some embodiments of the disclosure, the structure of the comparator chain is extended, and the number of comparators at each stage and the number of comparison stages may be flexibly adjustable according to actual conditions.

In some embodiments of the disclosure, it may pre-determine the comparison range according to pulse characteristics on the basis of the comparator chain, and combine the pulse characteristics with the bit extension approach based on the comparator chain, such as the bisection approach and the quadrisection approach, pre-categorizing the pulses into corresponding energy channel address intervals, which is more advantageous in the scenario where high-precision energy spectra are drawn and may effectively shorten the spectrum formation time.

In some embodiments of the disclosure, it may use a scheme combining time over threshold (TOT) with dynamic threshold spectrum formation solution, which is more advantageous in the scenario where high-precision energy spectra are drawn and can effectively shorten the spectrum formation time and change sequence of voltage comparison with pulses, overall accelerating acquisition of comparison results.

In some embodiments of the disclosure, considering possible differences between comparators in multi-stage comparator chain, it may adopt single-stage comparator solution, only needing to set one stage of comparators to obtain energy spectrum, which may to some extent reduce or avoid errors introduced by differences between comparators.

In some embodiments of the disclosure, it may also provide a step of calibrating the energy channel address, which further improves the accuracy of the energy spectrum drawing by the digitization scheme of the embodiments of the disclosure.

Accordingly, various embodiments of the disclosure may have at least some of the following advantages:
1) Compared with traditional MVT methods, in the processing of pulse signals, it may pulse energy spectrum without fitting pulse waveform through solving equation sets to obtain function curves during pulse signal processing, simplifying pulse energy acquisition process, and can greatly save hardware resources when FPGA resources are limited, reducing FPGA power consumption, improving chip's high temperature tolerance.
2) Compared with the scheme of directly sampling pulses with ADCs, there is no need to accumulate collected voltage values, and it may directly obtain energy spectrum, simplifying calculation process.
3) For the traditional MVT methods, due to need for complex fitting calculations, system cannot process new pulses during specific time period after each pulse ends, the time being system dead time, while digitization solution in the embodiments of the disclosure has no dead time or very small dead time, enabling essentially continuous pulse processing.

Accordingly, in embodiments of the disclosure a calibration method 3200 for pulse digitization is provided. As shown in FIG.32, the calibration method 3200 may comprise steps S3210-S3280.

In the embodiment shown in FIG.32, the calibration method 3200 may comprise:
S3210: acquiring amplitude to energy mapping data of a plurality of reference pulses;
S3220: acquiring a plurality of energy channel addresses to be calibrated, each energy channel address to be calibrated having a respective energy characteristic value and a respective amplitude characteristic value determined according to the amplitude to energy mapping data;
S3230: determining energy channel addresses to be calibrated corresponding to a plurality of first calibration pulses based on comparisons between amplitude values of the plurality of first calibration pulses and the amplitude characteristic values of the plurality of energy channel addresses to be calibrated;
S3240: generating an energy spectrum of the first calibration pulses based on counts of the first calibration pulses within each energy channel address to be calibrated and the energy characteristic values of the energy channel addresses to be calibrated, the energy spectrum of the first calibration pulses having a first characteristic peak value;
S3250: setting a plurality of first calibration energy channel addresses;
   wherein, the energy range corresponding to the plurality of first calibration energy channel addresses is smaller than the energy range corresponding to the plurality of energy channel addresses, and each calibration energy channel address has a respective energy characteristic value and a respective amplitude characteristic value determined according to the amplitude to energy mapping data;
S3260: determining calibration energy channel addresses corresponding to a plurality of second calibration pulses based on comparison results between amplitude values of the plurality of second calibration pulses and the amplitude characteristic values of the plurality of first calibration energy channel addresses;
S3270: generating an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and
S3280: calibrating the energy characteristic values or the amplitude characteristic values of the plurality of energy channel addresses to be calibrated based on a first difference between the first characteristic peak value and the first calibration characteristic peak value.

In some embodiments, the calibration method may be based on a single characteristic peak value.

In other embodiments, the calibration method may be based on two or more characteristic peak values. Accordingly, the calibration method 3200 may further comprise: setting a plurality of second calibration energy channel addresses, wherein the energy range corresponding to the plurality of second calibration energy channel addresses is smaller than the energy range corresponding to the plurality of energy channel addresses to be calibrated, and each second calibration energy channel address has a respective energy characteristic value and a respective amplitude characteristic value determined according to the amplitude to energy mapping data; determining second calibration energy channel addresses corresponding to a plurality of third calibration pulses based on comparisons between amplitude values of the plurality of third calibration pulses and the amplitude characteristic values of the plurality of second calibration energy channel addresses; and generating an energy spectrum of the third calibration pulses based on the counts of the third calibration pulses within each second calibration energy channel address and the energy characteristic values of the second calibration energy channel addresses, the energy spectrum of the third calibration pulses having a second calibration characteristic peak value. Accordingly, step S3280 may comprise: calibrating the energy characteristic values or the amplitude characteristic values of the plurality of energy channel addresses to be calibrated based on a first difference between the first characteristic peak value and the first calibration characteristic peak value and a second difference between the second characteristic peak value and the second calibration characteristic peak value.

In the embodiments of the disclosure, the calibration method 3200 may also comprise, as needed, steps or features of the pulse digitization method in a non-contradictory manner, especially the sub-steps or features related to the calibration steps shown in FIGS. 26 to 29, or the calibration method 3200 may be combined with the pulse digitization method to obtain new embodiments, and vice versa.

Furthermore, in embodiments of the disclosure, methods for determining material composition based on scintillation pulses may also be involved.

In various embodiments of the disclosure, methods for determining material composition based on scintillation pulses may be provided independently from or in combination with the digitalization solution of determining the channel addresses.

In some embodiments, the solution that is the digitalization solution of determining the channel addresses may be implemented by combining with the structure shown in FIG.20, for example.

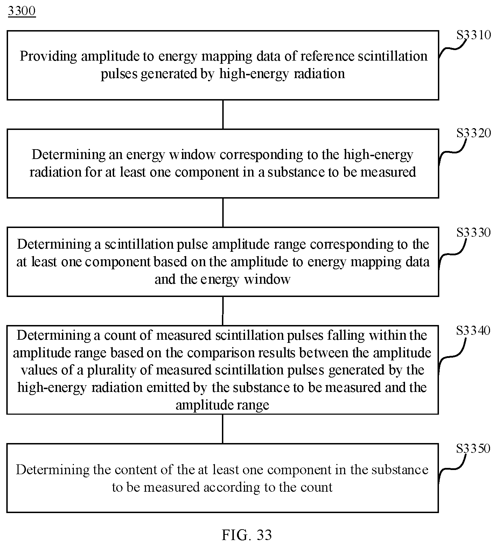

Referring to FIGS. 20 to 22, in the embodiment shown in FIG.33, the method for determining material composition 3300 may comprise steps S3310-S3350:
S3310: providing amplitude to energy mapping data of reference scintillation pulses generated by high-energy radiation;
S3320: determining an energy window corresponding to the high-energy radiation for at least one component in a substance to be measured;
S3330: determining a scintillation pulse amplitude range corresponding to the at least one component based on the amplitude to energy mapping data and the energy window;
S3340: determining counts of measured scintillation pulses falling within the amplitude range based on the comparison results between the amplitude values of the plurality of measured scintillation pulses generated by the high-energy radiation emitted by the substance to be measured and the amplitude range; and
S3350: determining the content of the at least one component in the substance to be measured according to the counts

In some embodiments, there are two components.

Accordingly, in some embodiments, determining an energy window corresponding to the high-energy radiation for at least one component in the substance to be measured comprises: determining a first energy window corresponding to the high-energy radiation for a first component in the substance to be measured, and determining a second energy window corresponding to the high-energy radiation for a second component in the substance to be measured.

Accordingly, in some embodiments, determining a scintillation pulse amplitude range corresponding to the at least one component based on the amplitude to energy mapping data and the energy window comprises: determining a first amplitude range corresponding to the first component based on the amplitude to energy mapping data and the first energy window, and determining a second amplitude range corresponding to the second component based on the amplitude to energy mapping data and the second energy window.

Accordingly, in some embodiments, determining counts of measured scintillation pulses falling within the amplitude range comprises: determining first counts and second counts of measured scintillation pulses falling within the first amplitude range and the second amplitude range, respectively. Accordingly, in some embodiments, determining the content of the at least one component in the substance to be measured based on the count, comprises: determining the relative content of the first component and the second component based on the first counts and the second counts

In some embodiments, the first component is carbon C, and the second component is oxygen O, wherein the relative content of the first component and the second component is the carbon-oxygen ratio C/O.

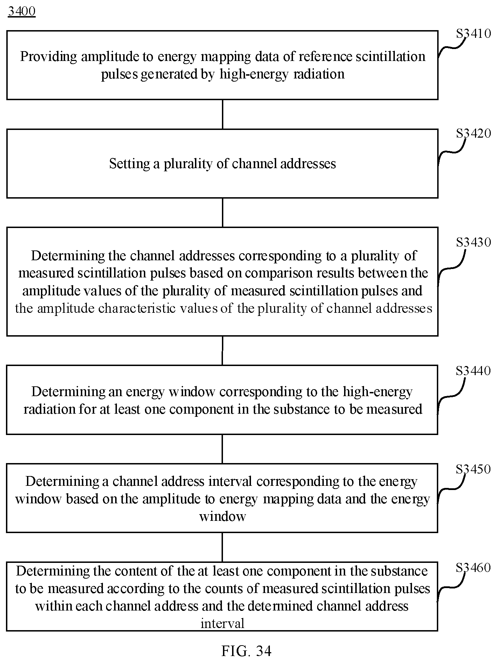

In the embodiment shown in FIG.34, the method for determining material composition may be implemented by combining with a digitization scheme that determines channel addresses.

In the embodiment shown in FIG.34, the method for determining material composition 3400 may comprise steps S3410-S3460:
S3410: providing amplitude to energy mapping data of reference scintillation pulses generated by high-energy radiation;
S3420: setting a plurality of channel addresses,
   wherein the channel addresses are energy channel addresses or amplitude channel addresses, each energy channel address has a respective energy characteristic value and a respective amplitude characteristic value determined according to the amplitude to energy mapping data, and each amplitude channel address has a respective amplitude characteristic value;
S3430: determining the channel addresses corresponding to a plurality of measured scintillation pulses based on comparison results between the amplitude values of the plurality of measured scintillation pulses and the amplitude characteristic values of the plurality of channel addresses, wherein the plurality of measured scintillation pulses are generated by the high-energy radiation emitted by the substance to be measured;
S3440: determining an energy window corresponding to the high-energy radiation for at least one component in the substance to be measured;
S3450: determining a channel address interval corresponding to the energy window based on the amplitude to energy mapping data and the energy window; and
S3460: determining the content of the at least one component in the substance to be measured according to the counts of measured scintillation pulses within each channel address and the determined channel address interval.

In the embodiments, the relevant means for determining channel addresses described in the digitization methods in the embodiments of the disclosure may be used to determine the component content , but not limited to whether obtaining related energy information or generating energy spectrum.

Accordingly, the method for determining material composition 3400 described in the embodiments of the disclosure may refer to different embodiments shown in FIGS. 1 to 32 to determine the channel address in which the scintillation pulse falls, which is within the scope of the disclosure.

In some embodiments, for example, referring to FIGS. 2 to 4, step S3430 may comprise: sequentially comparing the amplitude of each measured scintillation pulse with the comparison thresholds of a plurality of comparators, and selectively adjusting the amplitude of the measured scintillation pulse according to a previous comparison result before the comparison, such that if the amplitude of the measured scintillation pulse is less than the comparison threshold of the previous comparator, the amplitude of the measured scintillation pulse is not adjusted, and if it is greater than or equal to the comparison threshold of the previous comparator, the amplitude of the measured scintillation pulse is reduced, wherein, the comparison thresholds of the plurality of comparators are determined according to the amplitude characteristic values of the plurality of channel addresses; and determining the channel address corresponding to each measured scintillation pulse according to the comparison results of the plurality of comparators.

In some embodiments, for example, referring to FIGS. 5 and 6, step S3430 may comprise: inputting each measured scintillation pulse to a multi-stage gate array so that the measured scintillation pulse sequentially passes through the gates of each stage of the multi-stage gate array, wherein each gate is associated with a respective comparator and has a first gate branch and a second gate branch for selectively outputting the measured scintillation pulse, the non-final stage gates being respectively connected to two gates of the next stage through the first and second gate branches, wherein, the comparison thresholds of the comparators are determined according to the amplitude characteristic values of the plurality of channel addresses; prior to allowing the measured scintillation pulse to pass through the respective gate stage of the gate array, comparing the measured scintillation pulse with the comparator associated with the respective gate being passed, setting the gate according to the comparison result to determine which gate branch of the gate to output the measured scintillation pulse; and determining the channel address corresponding to the measured scintillation pulse according to the output of the multi-stage gate array.

In some embodiments, for example, referring to FIGS. 7 to 14, step S3430 may comprise: performing a first-stage comparison of multi-stage comparisons on the amplitude of each measured scintillation pulse to determine a channel address interval in which the measured scintillation pulse falls, wherein each stage of comparison defines at least two channel address intervals by at least one comparison threshold; sequentially performing subsequent-stage comparisons to determine the channel address interval in which the measured scintillation pulse falls until a last-stage comparison is completed, wherein the comparison threshold(s) of the subsequent-stage comparison is/are determined according to the channel address interval determined by the previous-stage comparison; and determining the channel address in which the measured scintillation pulse falls according to a comparison result of the last stage of comparison.

In some embodiments, for example, referring to FIGS. 10 to 13, the multi-stage comparison is implemented by a first multi-stage comparison unit, which first multi-stage comparison unit comprises a plurality of parallel delay lines connected to a measured scintillation pulse input, an adjustable comparator connected to the delay lines, and an arbiter operatively connected to the adjustable comparator, wherein at least some of the delay lines have different delays.

In some embodiments, for example, referring to FIGS. 10 to 13, the multi-stage comparison is implemented by a second multi-stage comparison unit, which second multi-stage comparison unit comprises a plurality of comparator subunits connected to a measured scintillation pulse input and an arbiter operatively connected to the plurality of comparator subunits, wherein each comparator subunit corresponds to one of the multi-stage comparisons and comprises a single comparator or multiple parallel adjustable comparators, with delay units being arranged between adjacent comparator subunits.

In an embodiment, the comparison threshold(s) of the first-stage comparison is/are determined according to a given priori channel address interval.

In some embodiments, for example, referring to FIGS. 23 to 24, step S3430 may comprise: allowing the amplitude of each measured scintillation pulse to perform a single-stage comparison that comprises multiple comparisons to determine the channel address in which the measured scintillation pulse falls, wherein the number of multiple comparisons in the single-stage comparison is greater than or equal to the number of the plurality of channel addresses; and determining the channel address in which the measured scintillation pulse falls according to the comparison results of the single-stage comparison.

In some embodiments, for example, referring to FIG.24, step S3430 may comprise: providing mapping data of over-threshold time to energy range of a plurality of reference scintillation pulses; acquiring at least one over-threshold time of the measured scintillation pulse, wherein each over-threshold time corresponds to an amplitude threshold; determining a first channel address interval according to the at least one over-threshold time of the measured scintillation pulse and the mapping data of over-threshold time to energy range; allowing the amplitude of each measured scintillation pulse to perform single-stage comparison or to perform multi-stage comparison to determine the second channel address interval in which the measured scintillation pulse falls, wherein each stage of comparison defines at least two second channel address intervals by at least one comparison threshold, and the comparison threshold of the single-stage comparison or the first-stage comparison threshold of the multi-stage comparison being determined based on the first channel address interval; and determining the channel address in which the measured scintillation pulse falls according to the results of the single-stage or multi-stage comparison.

In some embodiments, for example, referring to FIGS. 24 to 25, step S3430 may comprise: providing mapping data of over-threshold time to energy range of a plurality of reference scintillation pulses; acquiring at least one over-threshold time of the measured scintillation pulse, where each over-threshold time corresponds to an amplitude threshold; determining a first channel address interval according to the at least one over-threshold time of the measured scintillation pulse and the mapping data of over-threshold time to energy range; allowing the amplitude of each measured scintillation pulse to perform single-stage comparison or multi-stage comparison to determine the second channel address interval in which the measured scintillation pulse falls, wherein each stage of comparison defines at least two second channel address intervals through at least one comparison threshold, and the comparison thresholds of the single-stage comparison or the first-stage comparison threshold of the multi-stage comparison is determined based on the first channel address interval; and determining the channel address in which the measured scintillation pulse falls according to the results of the single-stage or multi-stage comparison.

In other embodiments, for example, referring to FIG.25, step S3430 may comprise: providing mapping data of over-threshold time to energy range of a plurality of reference scintillation pulses; and performing the following steps in a loop: setting an amplitude threshold, acquiring the over-threshold time of the measured scintillation pulse, wherein the over-threshold time corresponds to the set amplitude threshold, determining or updating the first channel address interval according to the over-threshold time of the measured scintillation pulse and the mapping data of over-threshold time to energy range, and determining whether a preset criterion is met; if yes, exiting the loop, if no, continuing to perform the loop steps; allowing the amplitude of each measured scintillation pulse to perform single-stage comparison or to perform multi-stage comparison to determine the second channel address interval in which the measured scintillation pulse falls, wherein each stage of comparison defines at least two second channel address intervals through at least one comparison threshold, the comparison thresholds of the single-stage comparison or the first-stage comparison threshold of the multi-stage comparison being determined based on the first channel address interval; and determining the channel address in which the measured scintillation pulse falls according to the results of the single-stage or multi-stage comparison.

In the embodiments of the disclosure, determining an energy window corresponding to the high-energy radiation for at least one component in the substance to be measured comprises: determining a first energy window corresponding to the high-energy radiation for a first component in the substance to be measured, and determining a second energy window corresponding to the high-energy radiation for a second component in the substance to be measured.

In the embodiments of the disclosure, determining a channel address interval corresponding to the energy window based on the amplitude to energy mapping data and the energy window comprises: determining a first channel address interval corresponding to the first energy window based on the amplitude to energy mapping data and the first energy window, and determining a second channel address interval corresponding to the second energy window based on the amplitude to energy mapping data and the second energy window.

In the embodiments of the disclosure, determining the content of the at least one component in the substance to be measured according to the counts of measured scintillation pulses within each channel address and the determined channel address interval comprises: determining first counts of measured scintillation pulses within the first channel address interval; determining second counts of measured scintillation pulses within the first channel address interval; and determining the relative content of the first component and the second component based on the first counts and the second count.

In the embodiments of the disclosure, the first component is carbon C, and the second component is oxygen O, where the relative content of the first component and the second component is a carbon-oxygen ratio C/O.

In the embodiments of the disclosure, the material composition determination method 3300 and 3400 may also comprise, as needed, steps or features of the pulse digitization method in a non-contradictory manner, especially the sub-steps or features related to the embodiments shown in FIGS. 20 to 22, or the material composition determination methods 3300 and 3400 may be combined with the pulse digitization method to obtain new embodiments, and vice versa.

Accordingly, different embodiments of the disclosure may provide a pulse digitization device 3500.

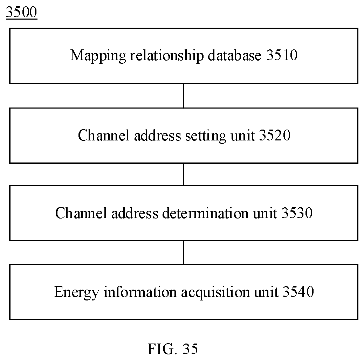

FIG.35 is an exemplary module diagram of a pulse digitization device 3500 according to some embodiments of the disclosure. The pulse digitization device 3500 may comprise a mapping relationship database 3510 having amplitude to energy mapping data of a plurality of reference pulses, and preferably having an amplitude to energy lookup table of the plurality of reference pulses; a channel address setting unit 3520 configured to set a plurality of channel addresses, wherein the channel addresses are energy channel addresses or amplitude channel addresses, each energy channel address has a respective energy characteristic value and a respective amplitude characteristic value determined according to the amplitude to energy mapping data, and each amplitude channel address has a respective amplitude characteristic value; a channel address determination unit 3530 configured to determine the channel addresses corresponding to a plurality of measured pulses based on comparison results between amplitude values of the plurality of measured pulses and the amplitude characteristic values of the plurality of channel addresses; and an energy information acquisition unit 3540 configured to determine the energy information of the plurality of measured pulses based on the pulse counts within each channel address and the amplitude to energy mapping data or the energy characteristic values of the energy channel addresses.

In the embodiments, the channel address determination unit 3530 of the pulse digitization device 3500 may be implemented in many different forms, for example, with reference to the characteristics of the pulse digitization methods in the different embodiments shown in FIGS. 1 to 31.

In some embodiments, for example, referring to FIG.4, the channel address determination unit 3530 may comprise a plurality of comparators, a plurality of gates, and a processing unit connected to the comparators and the gates, wherein the plurality of comparators are multi-stage parallel comparators, the gates are arranged between adjacent comparators, and each gate comprises a first gate branch and a second gate branch for selectively outputting measured pulses to the subsequent-stage comparators, wherein a delay unit is provided in the first gate branch, and a subtractor is provided in the second gate branch.

In some embodiments, the processing unit may be configured to receive a comparison result output by the upper-stage comparator and to set the gate according to the comparison result.

In some embodiments, the processing unit can be configured to set a reduction value in the subtractor in the gate according to the comparison result.

In some embodiments, the gate may be configured to output the measured pulse to the first gate branch and the second gate branch of the subsequent-stage comparator according to the output level of the upper-stage selector, if the output level of the upper-stage comparator is 0, outputting the measured pulse to the first gate branch of the subsequent-stage comparators; and if the output level of the upper-stage comparator is 1, outputting the measured pulse to the second gate branch of the subsequent-stage comparators.

In some embodiments, the subtractor can be configured to decrease the amplitude of the measured pulse by a reduction value equal to the comparison threshold of the previous comparator.

In some embodiments, for example, referring to FIG.6, the channel address determination unit 3530 may comprise a multi-stage gate array, and each gate is associated with a comparator and comprises a first gate branch and a second gate branch for selectively outputting the measured pulse to the subsequent-stage comparators.

In some embodiments, for example, referring to FIGS. 8, 10, 12, and 26, the channel address determination unit 3530 may comprise a plurality of parallel delay lines connected to a measured pulse input, an adjustable comparator connected to the delay lines, and an arbiter operatively connected to the adjustable comparator, wherein at least some of the delay lines have different delays.

In some embodiments, for example, referring to FIGS. 13 to 17, the channel address determination unit 3530 may comprise a plurality of comparator subunits connected to a measured pulse input and an arbiter operatively connected to the plurality of comparator subunits, wherein each comparator subunit corresponds to one of the multi-stage comparisons and comprises a single comparator or a plurality of parallel adjustable comparators with delay units arranged between the adjacent comparator subunits.

In some embodiments, the channel address determination unit 3530 may comprise a plurality of parallel adjustable comparators connected to a measured pulse input and an arbiter operatively connected to the plurality of parallel adjustable comparators, wherein the number of the plurality of parallel adjustable comparators is greater than or equal to the number of the plurality of channel addresses.

In the embodiments of the disclosure, for example, referring to FIGS. 13 to 17, the arbiter may be configured to set the comparison threshold of the adjustable comparator according to the amplitude characteristic values of the set channel addresses.

In some embodiments, for example, referring to FIGS. 26 and 28, the channel address determination unit 3530 may comprise a time over threshold unit connected to a measured pulse input, a comparison unit connected to the measured pulse input, and an arbiter operatively connected to the time over-threshold unit and the comparison unit.

In some embodiments, for example, referring to FIGS.26 and 28, the time over threshold unit comprises a time over threshold comparator and a time over threshold acquisition processor connected to the time over threshold comparator.

In some embodiments, the time over-threshold comparator is configured to output a transition signal when the measured pulse crosses the set amplitude threshold.

In some embodiments, the time over threshold acquisition processor is configured to determine the over-threshold time according to a time interval between the two transition signals from the same time over-threshold comparator.

In some embodiments, the arbiter is configured to determine the first channel address interval corresponding to the over-threshold time according to the amplitude to energy lookup table of the plurality of reference pulses.

In some embodiments, for example, referring to FIG.28, there are a plurality of the time over threshold comparators, and the plurality of time over-threshold comparators have differently set amplitude thresholds.

In the embodiments of the disclosure, the pulse digitization device 3500 can be used to implement the pulse digitization method 100 or other methods described in the embodiments herein, and can optionally combine the features of the pulse digitization method 100 or other methods, and vice versa.

Accordingly, in various embodiments of the disclosure a calibration device 3600 may be provided.

FIG.35 is an exemplary module diagram of a calibration device 3600 according to some embodiments of the disclosure. The calibration device 3600 may comprise: a first acquisition unit 3610 configured to acquire amplitude to energy mapping data of a plurality of reference pulses; a second acquisition unit 3620 configured to acquire a plurality of energy channel addresses to be calibrated, each energy channel address to be calibrated having a respective energy characteristic value and a respective amplitude characteristic value determined according to the amplitude to energy mapping data; a first channel address determination unit 3630 configured to determine energy channel addresses to be calibrated corresponding to a plurality of first calibration pulses based on comparisons between amplitude values of the plurality of first calibration pulses and the amplitude characteristic values of the plurality of energy channel addresses to be calibrated; a first energy spectrum generation unit 3640 configured to generate an energy spectrum of the first calibration pulses based on counts of the first calibration pulses within each energy channel address to be calibrated and the energy characteristic values of the energy channel addresses to be calibrated, the energy spectrum of the first calibration pulses having a first characteristic peak value; a first calibration channel address setting unit 3650 configured to set a plurality of first calibration energy channel addresses, wherein the energy range corresponding to the plurality of first calibration energy channel addresses is sized smaller than the energy range corresponding to the plurality of energy channel addresses, and each calibration energy channel address has a respective energy characteristic value and a respective amplitude characteristic value determined according to the amplitude to energy mapping data; a second channel address determination unit 3660 configured to determine calibration energy channel addresses corresponding to a plurality of second calibration pulses based on comparison results between amplitude values of the plurality of second calibration pulses and the amplitude characteristic values of the plurality of first calibration energy channel addresses; a second energy spectrum generation unit 3670 configured to generate an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and a calibration unit 3680 configured to calibrate the energy characteristic values or the amplitude characteristic values of the plurality of energy channel addresses to be calibrated based on a first difference between the first characteristic peak value and the first calibration characteristic peak value.

Optionally, the calibration device 3600 may also comprise: a second calibration channel address setting unit configured to set a plurality of second calibration energy channel addresses, wherein the energy range corresponding to the plurality of second calibration energy channel addresses is sized smaller than the energy range corresponding to the plurality of energy channel addresses to be calibrated, and each second calibration energy channel address has a respective energy characteristic value and a respective amplitude characteristic value determined according to the amplitude to energy mapping data; a third channel address determination unit configured to determine second calibration energy channel addresses corresponding to a plurality of third calibration pulses based on comparisons between amplitude values of the plurality of third calibration pulses and the amplitude characteristic values of the plurality of second calibration energy channel addresses; and a third energy spectrum generation unit configured to generate an energy spectrum of the third calibration pulses based on counts of the third calibration pulses within each second calibration energy channel address and the energy characteristic values of the second calibration energy channel addresses, the energy spectrum of the third calibration pulses having a second calibration characteristic peak value.

Optionally, the calibration unit 3600 is also configured to calibrate the energy characteristic values or the amplitude characteristic values of the plurality of energy channel addresses to be calibrated based on a first difference between the first characteristic peak value and the first calibration characteristic peak value and a second difference between the second characteristic peak value and the second calibration characteristic peak value.

In the embodiments of the disclosure, the calibration device 3600 may be used to implement the calibration method 2900 or other methods described in the embodiments herein, and may optionally combine the features of the calibration method 2900 or other methods, and vice versa.

Accordingly, in various embodiments of the disclosure, devices 3700 and 3800 for determining material composition may be provided.

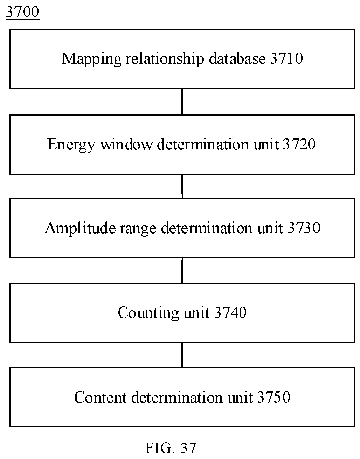

As shown in FIG.37, a material composition determination device 3700 may comprise: a mapping relationship database 3710 having amplitude to energy mapping data of reference scintillation pulses generated by high-energy radiation; an energy window determination unit 3720 configured to determine an energy window corresponding to the high-energy radiation for at least one component in the substance to be measured; an amplitude range determination unit 3730 configured to determine a scintillation pulse amplitude range corresponding to the at least one component based on the amplitude to energy mapping data and the energy window; a counting unit 3740 configured to determine the counts of measured scintillation pulses falling within the amplitude range based on comparison results between amplitude values of the measured scintillation pulses generated by the high-energy radiation emitted by the substance to be measured and the amplitude range; and a content determination unit 3750 configured to determine the content of the at least one component in the substance to be measured according to the counts.

In some embodiments, the energy window determination unit in the material composition determination device 3700 is configured to determine a first energy window corresponding to the high-energy radiation for a first component in the substance to be measured and a second energy window corresponding to the high-energy radiation for a second component in the substance to be measured.

In some embodiments, the amplitude range determination unit in the material composition determination device 3700 comprises a first amplitude determination subunit and a second amplitude determination subunit, configured to determine a first scintillation pulse amplitude range corresponding to the first component and a second scintillation pulse amplitude range corresponding to the second component based on the amplitude to energy mapping data and the first energy window and the second energy window.

In one embodiment, the counting unit in the material composition determination device 3700 further comprises: a first comparison subunit configured to determine whether the measured scintillation pulse falls within the first scintillation pulse amplitude range according to a comparison between the amplitude value of the measured scintillation pulse and the first scintillation pulse amplitude range; and a second comparison subunit configured to determine whether the measured scintillation pulse falls within the second scintillation pulse amplitude range according to a comparison between the amplitude value of the measured scintillation pulse and the second scintillation pulse amplitude range.

In a further embodiment, the first comparison subunit in the material composition determination device 3700 comprises a first comparator and a second comparator, wherein the first comparator sets the comparison threshold based on the lower limit of the amplitude range corresponding to the first energy window, and the second comparator sets the comparison threshold based on the upper limit of the amplitude range corresponding to the first energy window; and the second comparison subunit comprises a third comparator and a fourth comparator, wherein the third comparator sets the comparison threshold based on the lower limit of the amplitude range corresponding to the second energy window, and the fourth comparator sets the comparison threshold based on the upper limit of the amplitude range corresponding to the second energy window.

In other embodiments, the material composition determination device 3700 may further comprise a calibration unit, which is configured to acquire the operating temperature of the comparators, to determine a comparison threshold deviation that the comparators have under the operating temperature according to priori information, and to correct the comparison thresholds of the comparators according to the comparison threshold deviation.

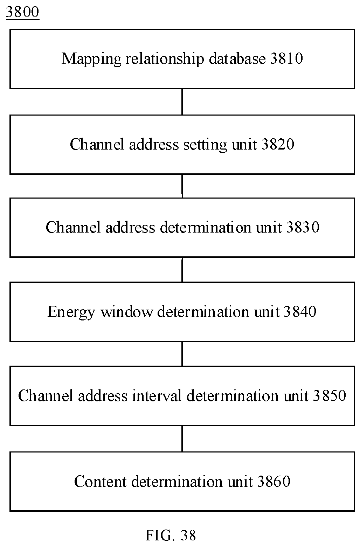

As shown in FIG.38, a material composition determination device 3800 may comprise: a mapping relationship database 3810 having amplitude to energy mapping data of reference scintillation pulses generated by high-energy radiation; a channel address setting unit 3820 configured to set a plurality of channel addresses, wherein the channel addresses are energy channel addresses or amplitude channel addresses, each energy channel address has a respective energy characteristic value and a respective amplitude characteristic value determined according to the amplitude to energy mapping data, and each amplitude channel address has a respective amplitude characteristic value; a channel address determination unit 3830 configured to determine channel addresses corresponding to a plurality of measured scintillation pulses based on comparison results between amplitude values of the plurality of measured scintillation pulses and the amplitude characteristic values of the plurality of channel addresses, wherein the plurality of measured scintillation pulses are generated by high-energy radiation emitted by the substance to be measured; an energy window determination unit 3840 configured to determine an energy window corresponding to the high-energy radiation for at least one component in the substance to be measured; a channel address interval determination unit 3850 configured to determine a channel address interval corresponding to the energy window based on the amplitude to energy mapping data and the energy window; and a content determination unit 3860 configured to determine the content of the at least one component in the substance to be measured according to the counts of measured scintillation pulses within each channel address and the determined channel address interval.

In some embodiments, the channel address determination unit in the material composition determination device 3800 may comprise a plurality of comparators, a plurality of gates, and a processing unit connected to the comparators and the gates, wherein the plurality of comparators are multi-stage parallel comparators, the gates are arranged between adjacent comparators, and each gate comprises a first gate branch and a second gate branch for selectively outputting measured scintillation pulses to the subsequent-stage comparators, wherein a delay unit is provided in the first gate branch, and a subtractor is provided in the second gate branch.

In some embodiments, the channel address determination unit in the material composition determination device 3800 may comprise a plurality of parallel delay lines connected to a measured scintillation pulse input, an adjustable comparator connected to the delay lines, and an arbiter operatively connected to the adjustable comparator, wherein the delay times of at least some of the delay lines are different.

In some embodiments, the channel address determination unit in the material composition determination device 3800 may comprise a plurality of comparator subunits connected to a measured scintillation pulse input and an arbiter operatively connected to the plurality of comparator subunits, wherein each comparator subunit corresponds to one of the multi-stage comparisons and comprises a single comparator or multiple parallel adjustable comparators, and delay units are arranged between adjacent comparator subunits.

In another embodiment, the channel address determination unit in the material composition determination device 3800 may comprise a time over threshold unit connected to the measured scintillation pulse input, a comparison unit connected to the measured scintillation pulse input, and an arbiter operatively connected to the time over threshold unit and the comparison unit.

In the embodiments of the disclosure, the material composition determination devices 3700 and 3800 can be used to implement the material composition determination methods 3300 and 3400 or other methods described in the embodiments herein, and may optionally combine the features of the material composition determination methods 3300 and 3400 or other methods, and vice versa.

In the embodiments of the disclosure, the pulse digitization device 3500 may also comprise components or features of the calibration device 3600 and/or the material composition determination devices 3700 and 3800 in a non-contradictory manner as needed, or the pulse digitization device 3500 may be combined with the calibration device 3600 and/or the material composition determination devices 3700 and 3800 to obtain new embodiments, and vice versa.

It should be noted that the above descriptions of the various steps in the drawings are only for the purpose of illustration and explanation, and do not limit the scope of application of the disclosure. For those skilled in the art, various modifications and changes can be made to the various steps in the related drawings under the guidance of the disclosure. However, these modifications and changes are still within the scope of the disclosure.

It should be understood that the methods and devices described in the embodiments of the disclosure can be implemented through different systems and their modules. For example, in some embodiments, the system and its modules may be implemented by hardware, software, or a combination of software and hardware. Herein the hardware part may be implemented using dedicated logic; the software part may be stored in memory and executed by appropriate instruction execution systems, such as microprocessors or dedicated design hardware. Those skilled in the art may understand that the above methods and systems may be implemented using computer-executable instructions and/or contained in processor-controlled code, for example, such code is provided on a carrier medium such as a disk, CD or DVD-ROM, programmable memory such as read-only memory (firmware), or data carriers such as optical or electronic signal carriers. The systems and modules of the disclosure may not only have hardware circuits implemented by semiconductors such as very large-scale integrated circuits or gate arrays, logic chips, transistors, etc., or programmable hardware devices such as field-programmable gate arrays, programmable logic devices, etc., but may also be implemented by software executed by various types of processors, or a combination of the above hardware circuits and software (e.g., firmware).

It should be noted that the above description of the modules is for descriptive convenience only and does not limit the disclosure to the scope of the cited embodiments. It can be understood that after understanding the principles of the system, those skilled in the art may arbitrarily combine various modules, or form subsystems to connect with other modules, without deviating from this principle. For example, the data acquisition module and the threshold switching module may be the same comparison module. As another example, the sampling module may comprise a comparison module. As yet another example, each module may share a storage module, or each module may have its own storage module. Such variations are all within the scope of protection of the disclosure.

In some embodiments of the disclosure also provided is a digitization apparatus that may comprise the digitization device mentioned in the above embodiments. The digitization apparatus may be used to collect corresponding pulse signals, such as scintillation pulse data, and generate the required energy information, such as an energy spectrum. In a specific example in the disclosure, the pulse digitization apparatus provided may be applied to well logging technology, for example, as a nuclear logging device. In another specific example in the disclosure, the pulse digitization device provided may be applied to positron emission tomography (PET). In a PET system, it may be used to collect gamma photon data using the solution described in the embodiments of the disclosure and then perform image reconstruction. In other specific examples of the disclosure, the pulse digitization device provided may be applied to various digitization apparatus, e.g., one or a combination of apparatuses utilizing high-energy radiation conversion principles, such as a positron emission tomography (PET) apparatus, a CT apparatus, a MRI apparatus, a radiation detection apparatus, an oil detection apparatus, a weak light detection apparatus, an SPECT apparatus, a security inspection apparatus, a gamma camera, an X-ray apparatus, and a DR apparatus.

Although not shown, in some embodiments, an electronic apparatus is also provided, characterized in that it comprises: a memory, a processor, and an executable program stored in the memory and executable on the processor. The executable program, when executed by the processor, implements the steps of the method according to any one of the embodiments of the disclosure.

Although not shown, in some embodiments a storage medium is also provided, storing executable program, executable program configured to implement steps of any method described in embodiments of the disclosure when executed. The executable program contains program modules/units constituting device according to embodiments of the disclosure, when computer program constituted by various program modules/units is executed, it may implement functions corresponding to various steps in methods described in above embodiments. The executable program can also run on the electronic apparatus as described in embodiments of the disclosure.

Basic concepts have been described in this document, obviously, for those skilled in the art, above detailed disclosure is only exemplary and does not constitute limitation on the disclosure. Although not explicitly stated here, those skilled in the art may make various modifications, improvements and corrections to the disclosure, which modifications, improvements, corrections are suggested in the disclosure, therefore such modifications, improvements, corrections still fall within spirit and scope of exemplary embodiments of the disclosure.

Meanwhile, in the disclosure specific words are used to describe embodiments of the disclosure. "An embodiment", "one embodiment", and/or "some embodiments" signify certain features, structures or characteristics related to at least one embodiment of the disclosure. Therefore, it should be emphasized and noted that "an embodiment" or "one embodiment" or "an alternative embodiment" mentioned twice or more times in different places in the disclosure does not necessarily refer to the same embodiment. Furthermore, certain features, structures or characteristics in one or more embodiments of the disclosure may be appropriately combined.

Moreover, those skilled in the art may understand that various aspects of the disclosure may be illustrated and described through several patentable types or circumstances, comprising any new and useful process, machine, product or composition of matter, or any new and useful improvement thereof. Accordingly, various aspects of the disclosure may be executed entirely by hardware, may be executed entirely by software (comprising firmware, resident software, microcode, etc.), or may be executed by combination of hardware and software. All such hardware or software can be called "data blocks", "modules", "engines", "units", "components" or "systems". Furthermore, various aspects of the disclosure may be manifested as products located in one or more readable media, said products comprising readable program code.

Storage medium may comprise a propagated data signal containing program code, for example on baseband or as part of carrier. The propagated signal may take various forms, comprising electromagnetic form, optical form, etc., or suitable combinations thereof. Storage medium may be any readable medium except readable storage medium, which medium may implement communication, propagation or transmission of program for use through connection to an instruction execution system, apparatus or device. Program code located on storage medium may be propagated through any suitable medium, comprising wireless, cable, optical fiber cable, RF, or similar media, or any combination of above media.

Furthermore, unless explicitly stated in claims, processing elements and sequences described in the disclosure, use of numerical letters, or use of other names, are not intended to limit order of processes and methods of the disclosure. Although some currently considered useful embodiments of invention are discussed through various examples in above disclosure, it should be understood that such details are only for illustrative purposes, additional claims are not limited to disclosed embodiments, rather, claims aim to cover all modifications and equivalent combinations that fall within substance and scope of embodiments of the disclosure.

Similarly, it should be noted that to simplify expression of the disclosure, thus helping understanding of one or more embodiments of invention, in above description of embodiments of the disclosure, multiple features are sometimes consolidated into a single embodiment, drawing or description thereof. However, the disclosure method does not mean that subjects of the disclosure require more features than features mentioned in claims. Actually, features in embodiments may be fewer than all features of single embodiment disclosed above.

Some embodiments use numbers describing component proportions, attributes, it should be understood that such numbers used for describing embodiments, in some examples use modifiers "about", "approximately" or "substantially". Unless otherwise stated, "about", "approximately" or "substantially" indicate said numbers allow ±20% variation. Accordingly, in some embodiments, numerical parameters used in specification and claims are approximate values, these approximate values may change according to characteristics needed by individual embodiments. In some embodiments, numerical parameters should consider specified significant digits and use general digit retention methods. Although some embodiments use value domains and parameters to confirm their scope breadth as approximate values, in specific embodiments, such numerical settings may be as precise as possible within feasible range.

For each patent, patent application, patent application publication and other materials referenced by the disclosure, such as articles, books, specifications, publications, documents etc., entire content of which may be hereby incorporated into the disclosure as reference, except for application history documents inconsistent with or conflicting with the disclosure content, and for documents (current or later added to the disclosure) that have limiting effect on broadest scope of claims of the disclosure. It should be noted that if description, definition, and/or term usage in materials attached to the disclosure are inconsistent or conflict with content described in the disclosure, description, definition and/or term usage in the disclosure shall prevail.

Finally, it should be understood that embodiments described herein are only used to illustrate principles of embodiments of the disclosure. Other variations may also fall within scope of the disclosure. It is possible for those skilled in the art to make various modifications, improvements and corrections to the disclosure. Such modifications, improvements, and corrections are suggested in the disclosure. Therefore, such modifications, improvements, and corrections still fall within spirit and scope of exemplary embodiments of the disclosure.

## Claims

1. A pulse digitization method, **characterized in that** the pulse digitization method comprises:
providing amplitude to energy mapping data of a plurality of reference pulses;
setting a plurality of channel addresses which are energy channel addresses or amplitude channel addresses, each energy channel address having a respective energy characteristic value and a respective amplitude characteristic value determined according to the amplitude to energy mapping data, and each amplitude channel address having a respective amplitude characteristic value;
determining channel addresses corresponding to a plurality of measured pulses based on comparison results between the amplitude values of the plurality of measured pulses and the amplitude characteristic values of the plurality of channel addresses; and
determining energy information of the plurality of measured pulses based on counts of the measured pulses falling within each channel address and the amplitude to energy mapping data or energy characteristic values of the energy channel addresses.

2. The pulse digitization method according to claim 1, **characterized in that** providing amplitude to energy mapping data of the plurality of reference pulses, comprises:
providing an amplitude to energy lookup table of the plurality of reference pulses.

3. The pulse digitization method according to claim 1, **characterized in that** the channel addresses are energy channel addresses; and,
setting the plurality of channel addresses, comprises:
determining the energy characteristic value corresponding to each energy channel address and determining the pulse amplitude characteristic value corresponding to the energy characteristic value according to the amplitude to energy mapping data, to set the plurality of energy channel addresses.

4. The pulse digitization method according to claim 1, **characterized in that** the channel addresses are amplitude channel addresses;
determining energy information of the plurality of measured pulses based on counts of the measured pulses falling within each channel address and the amplitude to energy mapping data, comprises:
obtaining an amplitude distribution of the plurality of the measured pulses over the amplitude channel addresses based on counts of the measured pulses within each channel address;
determining an energy characteristic value corresponding to the amplitude characteristic value of each amplitude channel address according to the amplitude to energy mapping data; and
obtaining the energy information from the amplitude distribution and energy characteristic values.

5. The pulse digitization method according to claim 1, **characterized in that** determining channel addresses corresponding to a plurality of measured pulses based on comparison results between the amplitude values of the plurality of measured pulses and the amplitude characteristic values of the plurality of channel addresses, comprises:
comparing the amplitude of each measured pulse with comparison thresholds of a plurality of comparators in sequence;
prior to comparison, selectively adjusting the amplitude of measured pulse according to a previous comparison result; and
determining the channel address corresponding to the each measured pulse based on comparison results of the plurality of comparators.

6. The pulse digitization method according to claim 5, **characterized in that** selectively adjusting the amplitude of measured pulse according to a previous comparison result, comprises:
if the amplitude of the measured pulse is less than the comparison threshold of the previous comparator, not adjusting the amplitude of the measured pulse; and
if the amplitude of the measured pulse is greater than or equal to the comparison threshold of the previous comparator, decreasing the amplitude of the measured pulse, wherein the comparison thresholds of the plurality of the comparators are determined according to amplitude characteristic values of the plurality of channel addresses.

7. The pulse digitization method according to claim 5, **characterized in that** prior to comparison, selectively adjusting the amplitude of measured pulse according to a previous comparison result, comprises:
setting a gate according to the previous comparison result, the gate having a first gate branch and a second s gate branch for selectively outputting the measured pulse;
inputting measured pulse to the set gate;
performing delay processing on measured pulse output from the first gate branch; and
performing subtraction processing on the amplitude of measured pulse output from the second gate branch.

8. The pulse digitization method according to any one of claims 5 to 7, **characterized in that** the reduction value of the amplitude of the measured pulse is the comparison threshold of previous comparator.

9. The pulse digitization method according to any one of claims 5 to 7, **characterized in that** the comparison thresholds of the plurality of comparators are determined by sequentially bisecting the determined amplitude characteristic values of the plurality of channel addresses.

10. The pulse digitization method according to claim 1, **characterized in that** determining channel addresses corresponding to a plurality of measured pulses based on comparison results between the amplitude values of the plurality of measured pulses and the amplitude characteristic values of the plurality of channel addresses, comprises:
inputting each measured pulse to a multi- stage gate array such that the measured pulse pass through the gate of each stage of the multi-stage gate array in sequence, wherein each gate is associated with a respective comparator and has a first gate branch and a second gate branch for selectively outputting the measured pulse, and non-final stage gate is connected to two gates of the next stage respectively through the first and second gate branches, wherein comparison thresholds of the comparators are determined according to the amplitude characteristic values of the plurality of channel addresses;
prior to allowing the measured pulse to pass through each stage of the gate array, comparing the measured pulse with the comparator associated with the gate of the stage, and setting the gate based on the comparison result to determine which gate branch to output the measured pulse; and
determining the channel address corresponding to the measured pulse based on the output of the multi-stage gate array.

11. The pulse digitization method according to claim 10, **characterized in that** the first-stage gate corresponds to a first channel address determined by bisecting the total channel address number of the plurality of channel addresses, and two channel address intervals defined by the first channel address for the subsequent-stage gates; and each remaining gate corresponds to a second channel address determined by bisecting the channel address interval defined by the upper-stage gate in the preceding stage, and two channel address intervals defined by the second channel address for either the subsequent-stage gates or for output, wherein the comparison threshold of each comparator is determined by the amplitude characteristic value of the channel address corresponding to the associated gate.

12. The pulse digitization method according to claim 1, **characterized in that** determining channel addresses corresponding to a plurality of measured pulses based on comparison results between the amplitude values of the plurality of measured pulses and the amplitude characteristic values of the plurality of channel addresses, comprises:
performing a first-stage comparison of multiple-stage comparisons for the amplitude of each measured pulse to determine a channel address interval into which the measured pulse falls, wherein each stage of comparison defines at least two channel address intervals by at least one comparison threshold;
sequentially performing a subsequent-stage comparison to determine the channel address interval in which the measured pulse falls until a last-stage comparison is completed, wherein the comparison threshold of the subsequent-stage comparison is determined according to the channel address interval determined by the previous-stage comparison; and
determining a channel address in which the measured pulse falls according to a comparison result of the last stage comparison.

13. The pulse digitization method according to claim 12, **characterized in that** the multi-stage comparison is implemented by a first multi-stage comparison unit comprising a plurality of parallel delay lines connected to a measured pulse input, an adjustable comparator connected to the delay lines, and an arbiter operatively connected to the adjustable comparator, wherein the delay times of at least some of the delay lines are different.

14. The pulse digitization method according to claim 13, **characterized in that** the adjustable comparator comprises a single comparator, and the delay times of the multiple parallel delay lines are all different from each other.

15. The pulse digitization method according to claim 13, **characterized in that** the adjustable comparator comprises a plurality of comparators with the individual comparators coupled to different delay lines, wherein delay times of delay lines connected to the same comparator are all different from each other.

16. The pulse digitization method according to claim 15, **characterized in that** the number of the plurality of adjustable comparators corresponds to the number of comparison thresholds of each comparison stage.

17. The pulse digitization method according to claim 12, **characterized in that** the multi-stage comparison is implemented by a second multi-stage comparison unit comprising a plurality of comparator subunits connected to a measured pulse input and an arbiter operatively connected to the plurality of comparator subunits, wherein each comparator subunit corresponds to one of the multi-stage comparisons and comprises a single comparator or a plurality of parallel adjustable comparators with delay units arranged between the adjacent comparator subunits.

18. The pulse digitization method according to any one of claims 12 to 17, **characterized in that** the comparison threshold of the first-stage comparison is determined according to a total number of the plurality of channel addresses.

19. The pulse digitization method according to claim 18, **characterized in that** the channel address intervals defined by the comparison threshold set for the first-stage comparison evenly divide the range of the plurality of channel addresses; and the channel address intervals defined by the comparison threshold set for a subsequent-stage comparison evenly divide the channel address interval determined by a previous-stage comparison.

20. The pulse digitization method according to claim 17, **characterized in that** the number of comparison threshold of each stage comparison is the same, and each comparator subunit has the same number of adjustable comparators with each other.

21. The pulse digitization method according to claim 17, **characterized in that** each stage comparison has one comparison threshold, thereby defining two equally sized channel address intervals.

22. The pulse digitization method according to claim 19, **characterized in that** each stage comparison has three comparison thresholds, thereby defining four equally sized channel address intervals.

23. The pulse digitization method according to any one of claims 12 to 17, **characterized in that** the comparison threshold of the first stage comparison is determined according to a given priori channel address interval.

24. The pulse digitization method according to claim 23, **characterized in that** there is one given priori channel address interval;
wherein the first stage comparison has one comparison threshold which is determined according to amplitude characteristic value of one of endpoint channel addresses of the priori channel address interval.

25. The pulse digitization method according to claim 23, **characterized in that** the first stage comparison has two comparison thresholds which are determined respectively according to amplitude characteristic values of two endpoint channel addresses of the priori channel address interval.

26. The pulse digitization method according to claim 24, **characterized by** if the channel address interval determined by the first-stage comparison falls outside the priori channel address interval, sequentially performing a subsequent-stage comparison to determine the channel address interval in which the measured pulse falls until a last-stage comparison is completed, further comprising:
in each stage comparison, firstly comparing the comparison threshold adjacent to priori channel address interval.

27. The pulse digitization method according to claim 23, **characterized in that** the number of the given priori channel address intervals is M, M≥2, and the first-stage comparison has 2M comparison thresholds which are determined respectively according to the amplitude characteristic values of 2M endpoint channel addresses of the M priori channel address intervals.

28. The pulse digitization method according to claim 27, **characterized in that** the measured pulses comprise scintillation pulses generated by detecting a substance;
wherein the pulse digitization method further comprises: determining the M priori channel address intervals, specifically comprising:
determining M energy windows according to at least two components of the detected substance; and
determining the M priori channel address intervals corresponding to the M energy windows.

29. The pulse digitization method according to claim 28, **characterized in that** the M energy windows comprise a first component energy window and a second component energy window;
wherein the pulse digitization method further comprises:
determining counts of the scintillation pulses falling within the first component energy window and the second component energy window, respectively; and
determining a ratio of the first component and the second component based on the counts.

30. The pulse digitization method according to claim 28, **characterized in that** determining the M energy windows according to at least two components of the detected substance, comprises:
determining a first component energy window and a second component energy window respectively, according to energy spectra of the first component and the second component.

31. The pulse digitization method according to claim 29, **characterized in that** determining the counts of the scintillation pulses falling within the first component energy window and the second component energy window, respectively, comprises:
determining whether a scintillation pulse falls within the amplitude range corresponding to the first component energy window or the amplitude range corresponding to the second component energy window, according to comparison result between the amplitude of the scintillation pulse and the amplitude range;
performing a first component count for the scintillation pulse falling into the amplitude range corresponding to first component energy window; and
performing a second component count for the scintillation pulse falling into the amplitude range corresponding to second component energy window.

32. The pulse digitization method according to claim 29, **characterized in that** determining counts of the scintillation pulses falling within the first component energy window and the second component energy window, respectively, comprises:
determining counts falling into the first component energy window and the second component energy window respectively according to energy information of the plurality of measured pulses.

33. The pulse digitization method according to claim 1, **characterized in that** determining channel addresses corresponding to a plurality of measured pulses based on comparison results between the amplitude values of the plurality of measured pulses and the amplitude characteristic values of the plurality of channel addresses, comprises:
allowing the amplitude value of each measured pulse to perform single-stage comparisons comprising a plurality of comparisons to determine the channel address in which the measured pulse falls, wherein the number of the plurality of comparisons being greater than or equal to the number of the plurality of channel addresses; and
determining the channel address in which the measured pulse falls based on the comparison results of the single-stage comparisons.

34. The pulse digitization method according to claim 33, **characterized in that** the single-stage comparison is implemented by a first single-stage comparison unit, comprising a plurality of parallel delay lines connected to a measured pulse input, an adjustable comparator connected to the delay lines, and an arbiter operatively connected to the adjustable comparator, wherein the delay times of at least some of the delay lines are different to each other, and the number of the plurality of parallel delay lines is greater than or equal to the number of the plurality of channel addresses.

35. The pulse digitization method according to claim 34, **characterized in that** delay times of the multiple parallel delay lines are all different to each other.

36. The pulse digitization method according to claim 34, **characterized in that** the multi-stage comparison is performed by a second single-stage comparison unit comprising a plurality of parallel adjustable comparators connected to a measured pulse input and an arbiter operatively connected to the plurality of parallel adjustable comparators, wherein the number of the plurality of parallel adjustable comparators is greater than or equal to the number of the plurality of channel addresses.

37. The pulse digitization method according to claim 3, **characterized in that** determining channel addresses corresponding to a plurality of measured pulses based on comparison results between the amplitude values of the plurality of measured pulses and the amplitude characteristic values of the plurality of channel addresses, comprises:
providing over-threshold time to energy range mapping data of the plurality of reference pulses;
acquiring at least one over-threshold time of the measured pulses, each over-threshold time corresponding to an amplitude threshold;
determining a first channel address interval according to the at least one over-threshold time of the measured pulses and the over-threshold time to energy range mapping data;
allowing the amplitude value of each measured pulse to perform single-stage comparisons or a multi-stage comparison to determine the second channel address interval in which the measured pulse falls, wherein each stage comparison defines at least two second channel address intervals by at least one comparison threshold, and the comparison thresholds of the single-stage comparisons or the first-stage comparison threshold of the multi-stage comparison is determined based on the first channel address interval; and
determining the channel address in which the measured pulse falls according to the results of the single-stage or multi-stage comparison.

38. The pulse digitization method according to claim 37, **characterized in that** determining a first channel address interval according to the at least one over-threshold time of the measured pulses and the over-threshold time to energy range mapping data, comprises:
determining the first channel address interval according to an intersection and/or a subset of the plurality of energy ranges respectively corresponding to a plurality of over-threshold times.

39. The pulse digitization method according to claim 3, **characterized in that** determining the channel addresses corresponding to the plurality of measured pulses based on comparison results between the amplitude values of the plurality of measured pulses and the amplitude characteristic values of the plurality of channel addresses, comprises:
providing time over-threshold to energy mapping data of a plurality of reference pulses;
performing the following steps in a loop:
setting an amplitude threshold,
determining or updating a first channel address interval according to the over-threshold time of the measured pulse and the over-threshold time to energy mapping data,
determining or updating first channel address interval according to the time over threshold of measured pulse and said time over threshold-energy range mapping data, and
determining whether a preset criterion is met, if yes, exiting the loop, if no, continuing to perform the loop steps;
allowing the amplitude value of each measured pulse to perform single-stage comparisons or a multi-stage comparison to determine the second channel address interval in which the measured pulse falls, wherein each stage comparison defines at least two second channel address intervals through at least one comparison threshold, and the comparison thresholds of the single-stage comparisons or the first-stage comparison threshold of the multi-stage comparison is determined based on the first channel address interval; and
determining the channel address in which the measured pulse falls according to the results of the single-stage or multi-stage comparison.

40. The pulse digitization method according to claim 39, **characterized in that** the preset criterion is that the number of set amplitude thresholds reaches a preset quantity or the number of channel addresses within the first channel address interval is less than a preset quantity.

41. The pulse digitization method according to any one of claims 37 to 40, characterized providing time over-threshold to energy mapping data of the plurality of reference pulses, comprises:
providing an over-threshold time to energy lookup table of the plurality of reference pulses.

42. The pulse digitization method according to any one of claims 37 to 40, **characterized in that** the determination of the channel addresses corresponding to the plurality of measured pulses is performed by a channel address determination unit comprising a time over-threshold unit connected to a measured pulse input, a comparison unit connected to the measured pulse input, and an arbiter operatively connected to the time over-threshold unit and the comparison unit.

43. The pulse digitization method according to claim 42, **characterized in that** the time over-threshold unit comprises at least one time over-threshold comparator and a time over-threshold acquisition processor connected to the at least one time over-threshold comparator and configured to determine a time interval between two transition moments from the same time over-threshold comparator.

44. The pulse digitization method according to claim 43, **characterized in that** the time over-threshold comparators comprise a plurality of time over-threshold comparators with different amplitude thresholds from each other.

45. The pulse digitization method according to claim 42, **characterized in that** the comparison unit comprises a single-stage or multi-stage comparator subunit, each stage of the comparator subunit comprising a single or multiple parallel adjustable comparators.

46. The pulse digitization method according to claim 42, **characterized in** t he comparison unit comprises a plurality of parallel delay lines connected to the measured pulse input and an adjustable comparator connected to the delay lines, the delay times of at least some of the delay lines being different.

47. The pulse digitization method according to claim 1 or 2, **characterized in that** determining energy information of the plurality of measured pulses, comprises:
generating energy spectrum of the plurality of measured pulses.

48. The pulse digitization method according to claim 3, **characterized in that** the pulse digitization method further comprises:
calibrating the amplitude characteristic values of the plurality of energy channel addresses relative to the energy characteristic values of the plurality of energy channel addresses.

49. The pulse digitization method according to claim 48, **characterized in that** calibrating the amplitude characteristic values of the plurality of energy channel addresses relative to the energy characteristic values of the plurality of energy channel addresses, comprises:
determining energy channel addresses corresponding to a plurality of first calibration pulses based on comparison results between amplitude values of a plurality of first calibration pulses and the amplitude characteristic values of the plurality of energy channel addresses;
generating an energy spectrum of the first calibration pulses based on counts of the first calibration pulses within each energy channel address and the energy characteristic values of the energy channel addresses, the energy spectrum of the first calibration pulses having a first characteristic peak value;
setting a plurality of first calibration energy channel addresses, the plurality of first calibration energy channel addresses being sized smaller than the plurality of energy channel addresses, each first calibration energy channel address having a respective energy characteristic value and a respective amplitude characteristic value determined according to the amplitude to energy mapping data;
determining calibration energy channel addresses corresponding to a plurality of second calibration pulses based on comparison results between amplitude values of the plurality of second calibration pulses and the amplitude characteristic values of the plurality of first calibration energy channel addresses;
generating an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and
calibrating the energy characteristic values or the amplitude characteristic values of the plurality of energy channel addresses based on a first difference between the first characteristic peak value and the first calibration characteristic peak value.

50. The pulse digitization method according to claim 49, **characterized in that** setting the plurality of first calibration energy channel addresses, comprises:
setting the plurality of first calibration energy channel addresses according to the first characteristic peak value in such a way that the first characteristic peak value falls within the energy range corresponding to the first calibration energy channel addresses.

51. The pulse digitization method according to claim 50, **characterized in that** setting the plurality of first calibration energy channel addresses, comprises:
setting the plurality of first calibration energy channel addresses according to the first characteristic peak value and a preset contraction ratio, so as to contract the energy range corresponding to the plurality of energy channel addresses by the preset contraction ratio, thereby obtaining the energy range corresponding to the plurality of first calibration energy channel addresses, in such a way that the first characteristic peak value falls within the energy range corresponding to the first calibration energy channel addresses.

52. The pulse digitization method according to claim 50, **characterized in that** the first characteristic peak value is a midpoint value of the energy range corresponding to the first calibration energy channel addresses.

53. The pulse digitization method according to claim 49, **characterized in that** the number of the first calibration energy channel addresses is equal to the number of the plurality of energy channel addresses to be calibrated.

54. The pulse digitization method according to claim 51, **characterized in that** the preset contraction ratio is set such that the energy range corresponding to the plurality of energy channel addresses is an integer multiple of the energy range corresponding to the plurality of first calibration energy channel addresses.

55. The pulse digitization method according to any one of claims 49 to 54, **characterized in that** the energy spectrum of the first calibration pulses further has a second characteristic peak value;
wherein calibrating the amplitude characteristic values of the plurality of energy channel addresses relative to the energy characteristic values of the plurality of energy channel addresses, further comprises:
setting a plurality of second calibration energy channel addresses, the plurality of second calibration energy channel addresses being sized smaller than the plurality of energy channel addresses, each second calibration energy channel address having a respective energy characteristic value and a respective amplitude characteristic value determined according to the amplitude to energy mapping data;
determining second calibration energy channel addresses corresponding to a plurality of third calibration pulses based on comparisons between amplitude values of the plurality of third calibration pulses and the amplitude characteristic values of the plurality of second calibration energy channel addresses;
generating an energy spectrum of the third calibration pulses based on counts of the third calibration pulses within each second calibration energy channel address and the energy characteristic values of the second calibration energy channel addresses, the energy spectrum of the third calibration pulses having a second calibration characteristic peak value;
said calibrating the energy characteristic values or the amplitude characteristic values of the plurality of energy channel addresses, comprising:
calibrating the energy characteristic values or the amplitude characteristic values of the plurality of energy channel addresses based on a first difference between the first characteristic peak value and the first calibration characteristic peak value and a second difference between the second characteristic peak value and the second calibration characteristic peak value.

56. The pulse digitization method according to claim 55, **characterized in that** setting the plurality of second calibration energy channel addresses, comprises:
setting the plurality of second calibration energy channel addresses according to the second characteristic peak value, in such a way that the second characteristic peak value falls within the energy range corresponding to the second calibration energy channel addresses.

57. The pulse digitization method according to claim 56, **characterized in that** setting the plurality of second calibration energy channel addresses, comprises:
setting the plurality of second calibration energy channel addresses according to the second characteristic peak value and a preset contraction ratio, so as to contract the energy range corresponding to the plurality of energy channel addresses by the preset contraction ratio, thereby obtaining the energy range corresponding to the plurality of second calibration energy channel addresses, in such a way that the second characteristic peak value falls within the energy range corresponding to the second calibration energy channel addresses.

58. The pulse digitization method according to claim 57, **characterized in that** the second characteristic peak value is a midpoint value of the energy range corresponding to the second calibration energy channel addresses.

59. The pulse digitization method according to claim 57, **characterized in that** the number of the second calibration energy channel addresses is equal to the number of the plurality of energy channel addresses to be calibrated.

60. The pulse digitization method according to claim 57, **characterized in that** the preset contraction ratio is set such that the energy range corresponding to the plurality of energy channel addresses is an integer multiple of the energy range corresponding to the plurality of second calibration energy channel addresses.

61. A calibration method for pulse digitization, **characterized in that** said calibration method comprises:
acquiring amplitude to energy mapping data of a plurality of reference pulses;
acquiring a plurality of energy channel addresses to be calibrated, each energy channel address to be calibrated having a respective energy characteristic value and a respective amplitude characteristic value determined according to the amplitude to energy mapping data;
determining energy channel addresses to be calibrated corresponding to a plurality of first calibration pulses based on comparisons between amplitude values of the plurality of first calibration pulses and the amplitude characteristic values of the plurality of energy channel addresses to be calibrated;
generating an energy spectrum of the first calibration pulses based on counts of the first calibration pulses within each energy channel address to be calibrated and the energy characteristic values of the energy channel addresses to be calibrated, the energy spectrum of the first calibration pulses having a first characteristic peak value;
setting a plurality of first calibration energy channel addresses, the plurality of first calibration energy channel addresses being sized smaller than the plurality of energy channel addresses to be calibrated, each first calibration energy channel address having a respective energy characteristic value and a respective amplitude characteristic value determined according to the amplitude to energy mapping data;
determining calibration energy channel addresses corresponding to a plurality of second calibration pulses based on comparison results between amplitude values of the plurality of second calibration pulses and the amplitude characteristic values of the plurality of first calibration energy channel addresses;
generating an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and
calibrating the energy characteristic values or the amplitude characteristic values of the plurality of energy channel addresses to be calibrated based on a first difference between the first characteristic peak value and the first calibration characteristic peak value.

62. The calibration method according to claim 61, **characterized in that** setting the plurality of first calibration energy channel addresses, comprises:
setting the plurality of first calibration energy channel addresses according to the first characteristic peak value, in such a way that the first characteristic peak value falls within the energy range corresponding to the first calibration energy channel addresses.

63. The calibration method according to claim 62, **characterized in that** setting the plurality of first calibration energy channel addresses, comprises:
setting the plurality of first calibration energy channel addresses according to the first characteristic peak value and a preset contraction ratio, so as to contract the energy range corresponding to the plurality of energy channel addresses to be calibrated by the preset contraction ratio, thereby obtaining the energy range corresponding to the plurality of first calibration energy channel addresses, in such a way that the first characteristic peak value falls within the energy range corresponding to the first calibration energy channel addresses.

64. The calibration method according to claim 63, **characterized in that** the first characteristic peak value is a midpoint value of the energy range corresponding to the first calibration energy channel addresses.

65. The calibration method according to claim 63, **characterized in that** the number of the first calibration energy channel addresses is equal to the number of the plurality of energy channel addresses to be calibrated.

66. The calibration method according to claim 63, **characterized in that** the preset contraction ratio is set such that the energy range corresponding to the plurality of energy channel addresses to be calibrated is an integer multiple of the energy range corresponding to the plurality of first calibration energy channel addresses.

67. The calibration method according to any one of claims 61 to 66, **characterized in that** the energy spectrum of the first calibration pulses further has a second characteristic peak value;
wherein the calibration method further comprises:
setting a plurality of second calibration energy channel addresses, the plurality of second calibration energy channel addresses being sized smaller than the plurality of energy channel addresses to be calibrated, each second calibration energy channel address having a respective energy characteristic value and a respective amplitude characteristic value determined according to the amplitude to energy mapping data;
determining second calibration energy channel addresses corresponding to a plurality of third calibration pulses based on comparisons between amplitude values of the plurality of third calibration pulses and the amplitude characteristic values of the plurality of second calibration energy channel addresses; and
generating an energy spectrum of the third calibration pulses based on counts of the third calibration pulses within each second calibration energy channel address and the energy characteristic values of the second calibration energy channel addresses, the energy spectrum of the third calibration pulses having a second calibration characteristic peak value; and
said calibrating the energy characteristic values or the amplitude characteristic values of the plurality of energy channel addresses to be calibrated, comprising:
calibrating the energy characteristic values or the amplitude characteristic values of the plurality of energy channel addresses to be calibrated based on a first difference between the first characteristic peak value and the first calibration characteristic peak value and a second difference between the second characteristic peak value and the second calibration characteristic peak value.

68. The calibration method according to claim 67, **characterized in that** setting the plurality of second calibration energy channel addresses, comprises:
setting the plurality of second calibration energy channel addresses according to the second characteristic peak value, in such a way that the second characteristic peak value falls within the energy range corresponding to the second calibration energy channel addresses.

69. The calibration method according to claim 67, **characterized in that** setting the plurality of second calibration energy channel addresses, comprises:
setting the plurality of second calibration energy channel addresses according to the second characteristic peak value and a preset contraction ratio, so as to contract the energy range corresponding to the plurality of energy channel addresses to be calibrated by the preset contraction ratio, thereby obtaining the energy range corresponding to the plurality of second calibration energy channel addresses, in such a way that the second characteristic peak value falls within the energy range corresponding to the second calibration energy channel addresses.

70. The calibration method according to claim 67, **characterized in that** the second characteristic peak value is a midpoint value of the energy range corresponding to the second calibration energy channel addresses.

71. The calibration method according to claim 69, **characterized in that** number of the second corrected energy channel addresses equals number of said multiple energy channel addresses to be corrected.

72. The calibration method according to claim 69, **characterized in that** the preset contraction ratio is set such that the energy range corresponding to the plurality of energy channel addresses to be calibrated is an integer multiple of the energy range corresponding to the plurality of second calibration energy channel addresses.

73. A pulse digitization device, **characterized in that** the pulse digitization device comprises:
a mapping relationship database comprising amplitude to energy mapping data of a plurality of reference pulses;
a channel address setting unit configured to set a plurality of channel addresses which are energy channel addresses or amplitude channel addresses, each energy channel address having a respective energy characteristic value and a respective amplitude characteristic value determined according to the amplitude to energy mapping data, and each amplitude channel address having a respective amplitude characteristic value;
a channel address determination unit configured to determine channel addresses corresponding to a plurality of measured pulses based on comparison results between amplitude values of the plurality of measured pulses and the amplitude characteristic values of the plurality of channel addresses; and
an energy information acquisition unit configured to determine energy information of the plurality of measured pulses based on counts of the measured pulses falling within each channel address and the amplitude to energy mapping data or energy characteristic values of the energy channel addresses.

74. The pulse digitization device according to claim 73, **characterized in that** the mapping database comprises an amplitude to energy lookup table of the plurality of reference pulses.

75. The pulse digitization device according to claim 73, **characterized in that** the channel address determination unit comprises a plurality of comparators, a plurality of gates and a processor connected to the comparators and the gates, wherein the plurality of comparators are multi-stage parallel comparators, the gates are arranged between adjacent comparators, and each gate comprises a first gate branch and a second gate branch for selectively outputting measured pulses to the subsequent-stage comparators, wherein a delay unit is provided in the first gate branch, and a subtractor is provided in the second gate branch.

76. The pulse digitization device according to claim 75, **characterized in that** the processor is configured to receive the comparison result output by the upper-stage comparator and to set the gate according to the comparison result.

77. The pulse digitization device according to claim 75, **characterized in that** the processor is configured to set a reduction value in the subtractor in the gate according to the comparison result.

78. The pulse digitization device according to claim 75, **characterized in that** the gate is configured to output the measured pulse to the first gate branch and the second gate branch of the subsequent-stage comparators according to the output level of the upper-stage selector,
if the output level of the upper-stage comparator is 0, outputting the measured pulses to the first gate branch of the subsequent-stage comparators; and
if the output level of the upper-stage comparator is 1, outputting the measured pulses to the second gate branch of the subsequent-stage comparators.

79. The pulse digitization device according to claim 75, **characterized in that** the subtractor is configured to decrease the amplitude of the measured pulse by a reduction value equal to the comparison threshold of the previous comparator.

80. The pulse digitization device according to claim 73, **characterized in that** the channel address determination unit comprises a multi-stage gate array, and each gate is associated with a comparator and comprises a first gate branch and a second gate branch for selectively outputting the measured pulses to the subsequent-stage comparators.

81. The pulse digitization device according to claim 73, **characterized in that** the channel address determination unit comprises a plurality of parallel delay lines connected to a measured pulse input, an adjustable comparator connected to the delay lines, and an arbiter operatively connected to the adjustable comparator, wherein the delay times of at least some of the delay lines are different, and the arbiter is configured to set comparison thresholds of the adjustable comparator according to amplitude characteristic values of the set channel addresses.

82. The pulse digitization device according to claim 73, **characterized in that** the channel address determination unit comprises a plurality of comparator subunits connected to a measured pulse input and an arbiter operatively connected to the plurality of comparator subunits, wherein each comparator subunit corresponds to one of multi-stage comparisons and comprises a single comparator or a plurality of parallel adjustable comparators, and a delay unit is provided between adjacent comparator subunits.

83. The pulse digitization device according to claim 73, **characterized in that** the channel address determination unit comprises a plurality of parallel adjustable comparators connected to a measured pulse input and an arbiter operatively connected to the plurality of parallel adjustable comparators, wherein the number of the plurality of parallel adjustable comparators is greater than or equal to the number of the plurality of channel addresses.

84. The pulse digitization device according to claim 73, **characterized in that** the channel address determination unit comprises a time over threshold unit connected to a measured pulse input, a comparison unit connected to the measured pulse input, and an arbiter operatively connected to the time over threshold unit and the comparison unit.

85. The pulse digitization device according to claim 84, **characterized in that** the time over threshold unit comprises time over threshold comparator and time over threshold collection processor connected to the time over threshold comparator; the time over threshold comparator being configured to output transition signal when measured pulse crosses the respective amplitude threshold; and the time over threshold collection processor being configured to determine over-threshold time according to time interval between two said transition signals from the same time over threshold comparator.

86. A digitization apparatus, **characterized by** comprising: the pulse digitization device according to any one of claims 73 to 85.

87. A calibration device for pulse digitization, **characterized in that** the calibration device comprises:
a first acquisition unit configured to acquire amplitude to energy mapping data of a plurality of reference pulses;
a second acquisition unit configured to acquire a plurality of energy channel addresses to be calibrated, each energy channel address to be calibrated having a respective energy characteristic value and a respective amplitude characteristic value determined according to the amplitude to energy mapping data;
a first channel address determination unit configured to determine energy channel addresses to be calibrated corresponding to a plurality of first calibration pulses based on comparisons between amplitude values of the plurality of first calibration pulses and the amplitude characteristic values of the plurality of energy channel addresses to be calibrated;
a first energy spectrum generation unit configured to generate an energy spectrum of the first calibration pulses based on counts of the first calibration pulses within each energy channel address to be calibrated and the energy characteristic values of the energy channel addresses to be calibrated, the energy spectrum of the first calibration pulses having a first characteristic peak value;
a first calibration channel address setting unit configured to set a plurality of first calibration energy channel addresses, the plurality of first calibration energy channel addresses being sized smaller than the plurality of energy channel addresses, each first calibration energy channel address having a respective energy characteristic value and a respective amplitude characteristic value determined according to the amplitude to energy mapping data;
a second channel address determination unit configured to determine calibration energy channel addresses corresponding to a plurality of second calibration pulses based on comparisons between amplitude values of the plurality of second calibration pulses and the amplitude characteristic values of the plurality of first calibration energy channel addresses;
a second energy spectrum generation unit configured to generate an energy spectrum of the second calibration pulses based on counts of the second calibration pulses within each first calibration energy channel address and the energy characteristic values of the calibration energy channel addresses, the energy spectrum of the second calibration pulses having a first calibration characteristic peak value; and
a calibration unit configured to calibrate the energy characteristic values or the amplitude characteristic values of the plurality of energy channel addresses to be calibrated based on a first difference between the first characteristic peak value and the first calibration characteristic peak value.

88. The calibration device according to claim 87, **characterized in that** the calibration device further comprises:
a second calibration channel address setting unit configured to set a plurality of second calibration energy channel addresses, the plurality of second calibration energy channel addresses being sized smaller than the plurality of energy channel addresses to be calibrated, each second calibration energy channel address having a respective energy characteristic value and a respective amplitude characteristic value determined according to the amplitude to energy mapping data;
a third channel address determination unit configured to determine second calibration energy channel addresses corresponding to a plurality of third calibration pulses based on comparisons between amplitude values of the plurality of third calibration pulses and the amplitude characteristic values of the plurality of second calibration energy channel addresses; and
a third energy spectrum generation unit configured to generate an energy spectrum of the third calibration pulses based on counts of the third calibration pulses within each second calibration energy channel address and the energy characteristic values of the second calibration energy channel addresses, the energy spectrum of the third calibration pulses having a second calibration characteristic peak value;
wherein the calibration unit is configured to calibrate the energy characteristic values or the amplitude characteristic values of the plurality of energy channel addresses to be calibrated based on a first difference between the first characteristic peak value and the first calibration characteristic peak value and a second difference between the second characteristic peak value and the second calibration characteristic peak value.

89. An electronic apparatus, **characterized by** comprising: a memory, a processor and an executable program stored in the memory and executable by the processor to implement the steps of the method according to any one of claims 1 to 72.

90. A storage medium, **characterized in that** the storage medium stores an executable program, the executable program being executable by a processor to implement the steps of the method according to any one of claims 1 to 72.
